(19) Europäisches Patentamt / European Patent Office / Office européen des brevets

(11) **EP 1 229 616 B1**

(12) **EUROPEAN PATENT SPECIFICATION**

(45) Date of publication and mention of the grant of the patent:
**10.01.2007 Bulletin 2007/02**

(51) Int Cl.:
*H01S 3/30* (2006.01)　*H01S 3/131* (2006.01)
*H04B 10/17* (2006.01)

(21) Application number: **01308942.0**

(22) Date of filing: **22.10.2001**

(54) **Raman amplifier system, apparatus and method for identifying, obtaining and maintaining an arbitrary raman amplification performance**

Ramanverstärkersystem, Vorrrichung und Verfahren zur Feststellung, Erreichung und Erhaltung einer beliebigen Raman-Verstärkerleistung

Système amplificateur Raman, dispositif et procédé d'identification, d'obtention et de maintien d'une amplification Raman arbitraire

(84) Designated Contracting States:
**FR GB**

(30) Priority: **05.02.2001 US 775632**

(43) Date of publication of application:
**07.08.2002 Bulletin 2002/32**

(73) Proprietor: **The Furukawa Electric Co., Ltd.**
**Chiyoda-ku**
**Tokyo 100-8322 (JP)**

(72) Inventors:
• **Namiki, Shu,**
**c/o The Furukawa Electric Co., Ltd.**
**Tokyo 100-8322 (JP)**
• **Emori, Yoshihiro,**
**c/o The Furukawa Electric**
**Tokyo 100-8322 (JP)**
• **Ogai, Mikio,**
**c/o The Furukawa Electric Co., Ltd.**
**Tokyo 100-8322 (JP)**

(74) Representative: **White, Duncan Rohan**
**Marks & Clerk**
**90 Long Acre**
**London WC2E 9RA (GB)**

(56) References cited:
EP-A- 1 018 666　　US-A- 5 812 710
US-A- 5 909 305　　US-A1- 2001 050 802
US-B1- 6 178 037

**Description**

This document contains subject matter related to that disclosed in PCT Application No. PCT/JP99/03944, filed on July 23, 1999; PCT Application No. PCT/JPXX/XXXXX, filed on January 11, 2001; JP Application No. 2000-006567, filed in the Japanese Patent Office on January 14, 2000; and U.S. Patent Application Serial No 09/527,748, filed on March 17, 2000.

The present invention relates to a Raman amplifier system, apparatus and method for amplifying optical signals in various optical media, and more particularly to a Raman amplifier system, apparatus and method that employs a control unit for achieving an arbitrary Raman amplification profile in a single Raman amplifier as well as a plurality of cascaded Raman amplifiers in a communications network.

Optical fiber communication systems transmit optical signals over considerable distances. However, the transmitted optical signals are attenuated because of absorption and scattering, ultimately resulting in signal degradation. To keep the level of signal strength above background noise by a predetermined amount, the optical signals must be periodically amplified. Typically, optical signals are amplified using electronic repeaters, which convert the optical signals into electric signals, amplify the electrical signals, and then convert the amplified electrical signals back into optical signals for further transmission along an optical fiber.

Since 1996, network traffic growth has continued at a torrid pace, with Internet traffic doubling every 100 days and overall network traffic growth approaching 100% annual growth. In an effort to keep pace with bandwidth demands nearly doubling annually, wavelength division multiplexing (WDM) system designers are moving to more cost effective solutions such as optical amplifiers.

Generally, there are two general types of optical amplifiers for amplifying signals within optical fiber communication systems. The first type is a rare earth doped fiber amplifier, such as an Erbium Doped Optical Fiber Amplifier (EDFA) using Er (erbium) doped fibers as an amplification medium. The second type of optical amplifier is a Raman amplifier.

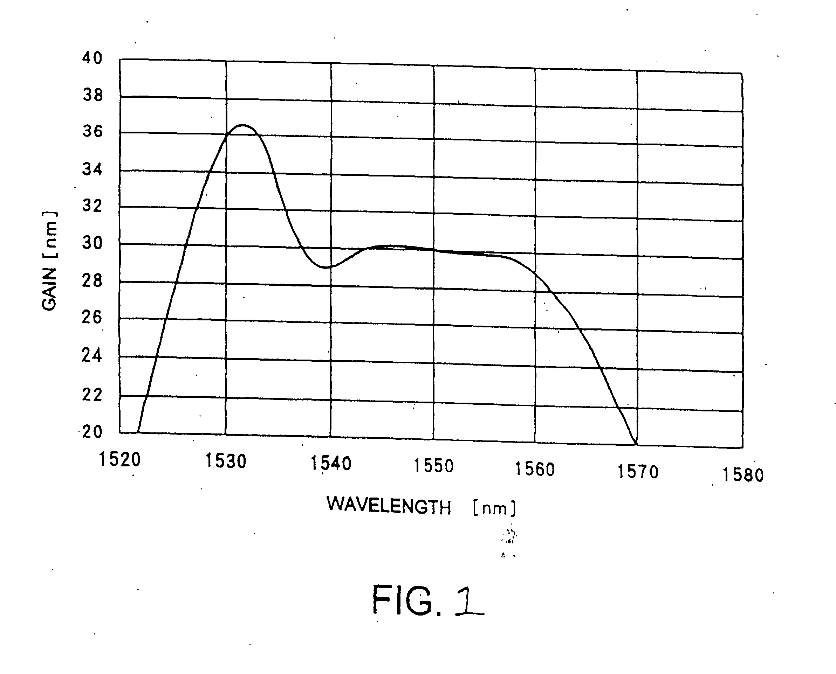

EDFA is currently the most widely used optical amplifier for WDM systems and is effective and reliable in optically amplifying WDM signals. However, an amplification bandwidth of EDFA has a limited range of about 1530 nm to 1610 nm. Further, as shown in Figure 1, EDFA produces a wavelength dependent gain profile with a peak gain between 30-36 dB in the 1525 nm to 1540 nm range and a more flat gain plateau at about 30 dB in the 1540 nm to 1560 nm range.

Accordingly, when EDFA is used to amplify WDM signals, which are spectrally distributed over the amplification bandwidth a non-uniform amount of gain is applied to the separate WDM channels, depending on the wavelength of the channels. To offset this effect, a gain flattening filter is used to obtain a uniform or flat gain profile (a gain deviation of less than 1 dB) across the entire communication band. In particular, a loss profile of the gain flattening filter is designed to have an inverse shape similar to the gain profile. However, the filter is limited to a particular gain profile and is not dynamically adjustable to compensate for changes in a magnitude of the gain of the EDFA. Accordingly, a flat gain profile cannot be maintained when the gain of the EDFA is changed. In addition, the gain flattening filter decreases the total amount of power launched into an optical fiber.

Further, WDM systems using EDFAs are plagued by noise problems. In more detail, there are two types of noise associated with fiber optic transmission: span noise and amplifier noise. In a system amplified exclusively by EDFAs, a signal leaves a first amplification site at a high end of the system's dynamic range. However, over the next approximately 75 km, the signal attenuates linearly and reaches the next EDFA at a level that is much closer to the background noise floor (i.e., lower signal-to-noise ratio) than when originally generated. Thus, when the EDFA amplifies the signal, the EDFA amplifies both the signal itself as well as the background, such that the signal-to-noise ratio is not further degraded by background noise when transmitted further down the optical fiber. The amplfier itself, however, introduces some amplifer noise into the the signal and thus the signal to noise (background plus amplifer noise) ratio decreases after each EDFA amplification stage.

After about 400-600 km, the signal has to be regenerated (i.e., "cleaned up"). To accomplish this, regenerators are strategically situated throughout the network. The regenerators convert the optical signal back to its electrical equivalent so the data may be detected, as is done in a receiver. Then, the data signal is converted into an optical signal and retransmitted on the network. However, requiring regenerators to be positioned every 400 to 600 km is a costly process, which accounts for up to 50% of the total cost of a network. Regenerators are also very expensive which further increases the total cost of the network.

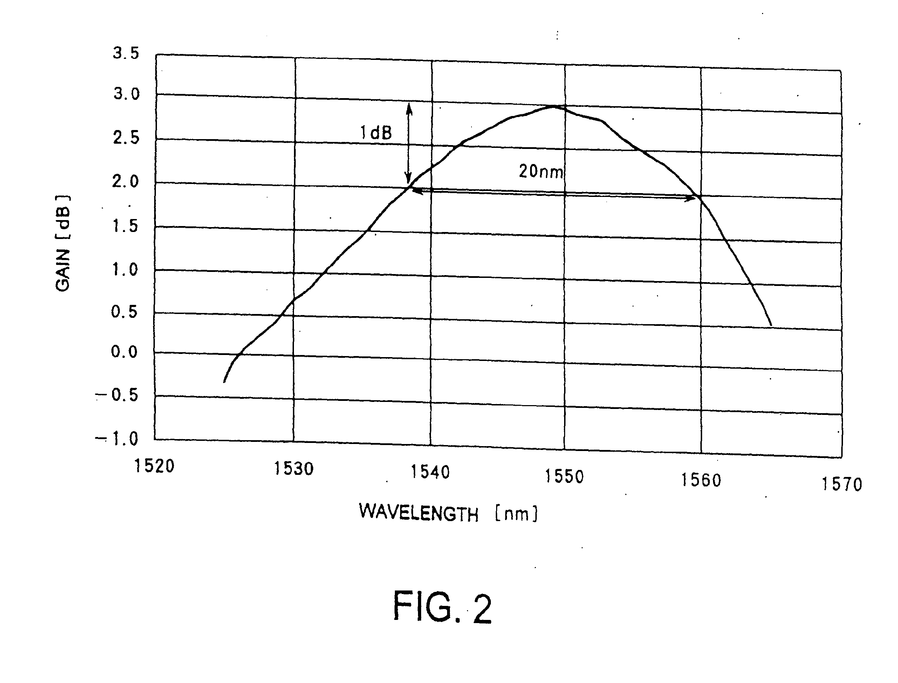

Raman amplifiers use a phenomenon known as Stimulated Raman Scattering (SRS) of light within an optical fiber to achieve a gain in a particular wavelength band. SRS produces a peak gain at a frequency which is smaller than a frequency of the light pumped into the optical fiber by about 13 THz (or conversely produces a peak gain at a wavelength which is longer than a wavelength of the light pumped into the optical fiber by about 100 nm). For example, Figure 2 illustrates a gain profile resulting from the use of a pumping device including a single semiconductor laser with a central wavelength of 1450 nm. In this case, the peak of the gain profile is at approximately 1550 nm (i.e., shifted 100 nm from the 1450 nm central wavelength of the semiconductor laser) and the profile has a bandwidth of about 20 nm within a gain deviation of about 1 dB.

However, Raman amplification has primarily been investigated for applications in wavelength bands that can not be amplified by EDFA, because the Raman amplifier requires a greater pumping power to obtain the same gain as that of the EDFA. Thus, traditionally Raman amplifiers have not been used to amplify WDM signals, but this may be changing more recently.

In conventional optical communication systems, optical amplifiers for WDM signals are a basic system component that, in combination with the other system components, define the system's communication performance. When establishing new communication systems, or when upgrading existing systems, system operators perform capacity allocation analyses that determine the number of amplifiers that are required to keep the signal above the background span noise when transmitting the signal from one location to the next.

Due to the rapid growth of Internet traffic, system requirements change frequently. When changes occur, the system analysis must be readdressed to ensure that the components that have already been fielded are able to handle the change in system requirements. Since the amplifiers that are fielded have a predefined system performance, with regard to gain shape across the amplification band, it is generally not practical (from a cost and complexity perspective) to provide field upgrades to the amplifiers to alter their gain profiles to optimize system performance at minimal cost. The common solution therefore is to place additional amplifiers at intermediary points between two already fielded amplifiers, or simply replace the fielded amplifiers with more capable amplifiers, albeit at high expense.

Because amplifiers are conventionally considered to be a discrete component of a larger network, when fault conditions occur at a particular amplifier, the repair action is typically taken only on that amplifier, without considering whether the repair action can be avoided by using excess amplification capacity within that amplifier, or at adjacent amplifiers (upstream or downstream of the damaged amplifier). Furthermore, changes in network architecture that may effect bandwidth, for example, or by using other fibers, may change the original design premise on which the original communication system was developed. For example, perhaps a new type of fiber is laid between two existing EDFA or Raman amplifiers, where the bandwidth-attenuation characteristics for that fiber are different than for the one it replaced. In this condition, the gain profile of the amplifiers may not be matched to the fiber, thus giving rise to suboptimum utilization of system resources and/or system performance.

Accordingly, one object of the present invention is to address the above and other noted problems with conventional EDFA and Raman amplifiers.

BP-A-1018666 discloses a controller for a Raman amplifier having a plurality of pump lasers. The control circuit is configured to output a control signal that defines operational parameters so as to adjust an amount of light introduced into the optical fiber from said plurality of pump lasers to achieve an actual performance that is within a predetermined tolerance of a target performance.

US-A-6178037, US-A-5812710 and US-A-5909305 each describe processor based control systems for controlling the pump power of laser diode pumps.

The present invention provides a controller for a Raman amplifier in accordance with claim 1 below.

Another feature of the present invention is that each Raman amplifier need not operate alone, but rather in an internetworked fashion with other amplifiers in the communication system. Since Raman amplification is a distributed amplification, the present invention exploits this distributed effect by shifting amplification duties between adjacent, cascaded Raman amplifiers so as to compensate for unforeseen changes in component operations or system requirements.

The present invention also provides a method for controlling the amplification performance of a Raman amplifier as set out in claim 74 below. The invention also provides a Raman amplifier including the controller of the invention and an optical communication system. The invention also provides a computer program for controlling the performance of a Raman amplifier.

A more complete appreciation of the present invention and many of the attendant advantages thereof will be readily obtained as the same becomes better understood by reference to the following detailed description when considered in connection with the accompanying drawings, wherein:

Figure 1 is a graph illustrating an amplification profile of an EDFA amplifier;
Figure 2 is a graph illustrating an amplification profile of a Raman amplifier using a single semiconductor laser;
Figure 3 is a schematic of a Raman amplifier according to one embodiment of the present invention;
Figure 4 is a schematic of another Raman amplifier according to another embodiment the present invention;
Figure 5 is a schematic of yet another Raman amplifier embodiment according to the present invention;
Figure 6 is a schematic of a control unit included in the Raman amplifier according to the present invention;
Figure 7 is a schematic illustrating components included in the control unit according to the present invention;
Figure 8 is a schematic illustrating other components included in the control unit according to the present invention;
Figure 9 is a schematic which illustrates controlling an output power from a Raman amplifier by monitoring optical signals input to and output from the Raman amplifier;

Figure 10 is a schematic illustrating a computer system included in the control unit according to the present invention;

Figure 11 is a flowchart illustrating a control operation of the Raman amplifier according to the present invention;

Figure 12 is a graph illustrating a wavelength-dependency characteristic of fiber loss in an optical fiber;

Figure 13 is a fiber loss data table used by the control unit according to the present invention;

Figure 14 is a graph illustrating a superposition principle for predicting a Raman amplification profile according to the present invention;

Figures 15A and 15B are graphs illustrating a design of a pumping device based on the superposition principle according to the present invention;

Figure 16 is a graph illustrating a predicted Raman amplification profile based on the superposition principle and an actual Raman amplification profile;

Figure 17 is a schematic of another pumping device according to the present invention;

Figure 18 is a schematic for explaining another Raman amplification example according to the present invention;

Figure 19 is a graph illustrating amplification profiles of the pumping device in Figure 18;

Figure 20 is a graph illustrating an enlarged view of a total amplification profile of the pumping device in Figure 18;

Figure 21 is a graph illustrating amplification profiles for a variation of the pumping device in Figure 18;

Figure 22 is a graph illustrating an enlarged view of a total amplification profile of the pumping device shown in Figure 21;

Figure 23 is a schematic for illustrating yet another Raman amplification example according to the present invention;

Figure 24 is a graph illustrating amplification profiles of the pumping device in Figure 23;

Figure 25 is an enlarged view of the total amplification profile shown in Figure 24;

Figure 26 is a schematic for explaining still another Raman amplification example according to the present invention;

Figure 27 is a graph illustrating amplification profiles of the pumping device in Figure 17;

Figure 28 is a graph illustrating an enlarged view of a total amplification profile shown in Figure 27;

Figure 29 is a schematic for explaining another Raman amplification example according to the present invention;

Figure 30 is a graph illustrating amplification profiles for a pumping device including a bank of thirteen pumps;

Figure 31 is a graph illustrating an enlarged view of a total amplification profile shown in Figure 30;

Figure 32 is a graph illustrating amplification profiles for a variation of the pumping device in Figure 30;

Figure 33 is a graph illustrating an enlarged view of a total amplification profile illustrated in Figure 32;

Figure 34 is a flowchart illustrating yet another control operation according to the present invention; and

Figure 35 is a schematic of cascaded Raman amplifiers and an associated control unit according to the present invention.

## DESCRIPTION OF THE PREFERRED EMBODIMENTS

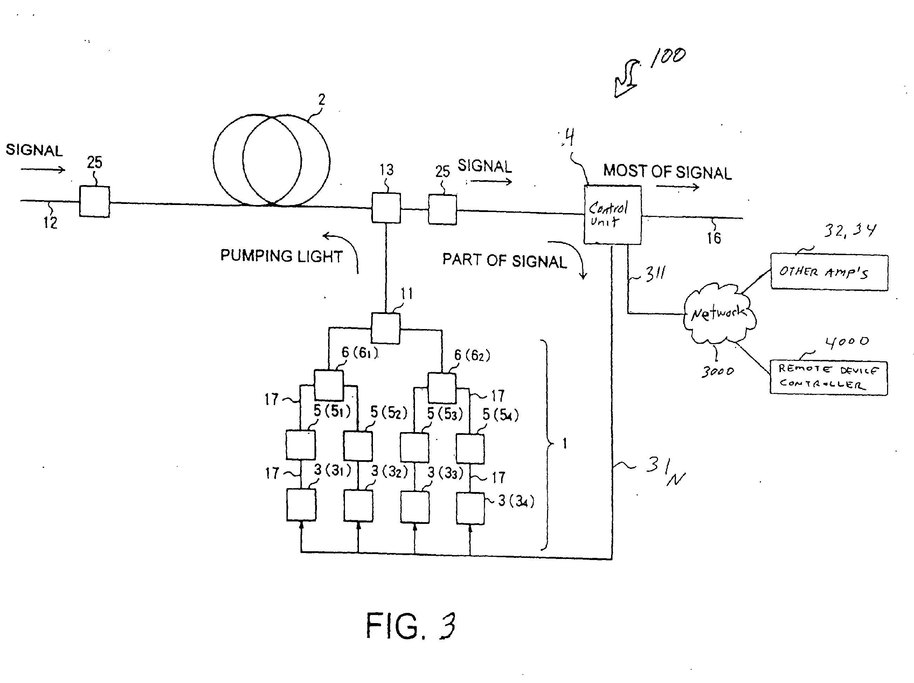

Referring now to the drawings, Figure 3 illustrates a Raman amplifier 100 according to the present invention. The Raman amplifier 100 includes an amplifier fiber (optical fiber) 2, a WDM coupler 13, a pumping device 1, a control unit 4, and optional polarization independent isolators 25. The Raman amplifier 100 is connected to an input fiber 12 and output fiber 16, which may be transmission fibers such as single mode fibers, dispersion compensation fibers (DCF), dispersion flattening fibers, etc.

The Raman amplifier 100 uses a communication link 311 to connect to a network 3000, which in turn is connected to other amplifiers 32, 34 as well as a remote device controller 4000. The remote device controller 4000 monitors the operational status of the Raman amplifier 100 as well as the other amplifiers 32, 34. The network 3000 may be a proprietary wireless or wired network, or another network that is publicly accessible, such as the Internet or a hybrid network, part proprietary and part publicly accessible. While the Raman amplifier 100 may operate autonomously, it may also be provided with additional information about the overall system performance, such that the control unit 4 can adapt its amplification performance to help offset any adverse affects to the system's performance as indicated by a change in conditions, reflected in the additional information. As an example, the additional information may be that a replacement fiber with different attenuation characteristics is being used to interconnect two cascaded Raman amplifiers. In this case, the control unit 4 may employ a new "target" amplification performance so as to normalize the channel characteristics for all of the WDM channels, despite the fact that the new fiber may attenuate some of the channels by a lesser amount than others.

The pumping device 1 includes Fabry-Perot type semiconductor lasers 3 (i.e., $3_1$, $3_2$, $3_3$ and $3_4$), wavelength stabilizing fiber gratings 5 (i.e., $5_1$, $5_2$, $5_3$ and $5_4$), polarization couplers 6 (i.e., $6_1$ and $6_2$), and a WDM coupler 11. The central wavelengths of the semiconductor lasers $3_1$ and $3_2$ and wavelengths of the fiber gratings $5_1$ and $5_2$ are the same wavelength $\lambda_1$, and the central wavelengths of the semiconductor lasers $3_3$ and $3_4$ and reflection wavelengths of the fiber gratings $5_3$ and $5_4$ are the same wavelength $\lambda_2$. The central wavelengths of the semiconductor lasers $3_1$, $3_2$ and $3_3$, $3_4$ are respectively stabilized to $\lambda_1$ and $\lambda_2$ via the wavelength stabilizing fiber gratings $5_1$, $5_2$ and $5_3$, $5_4$.

The light generated by the semiconductor lasers $3_1$, $3_2$ and $3_3$, $3_4$ are polarization-combined by the $6_1$ and $6_2$ for each wavelength $\lambda_1$ and $\lambda_2$. In addition, light output from the polarization combiners $6_1$ and $6_2$ is combined by the WDM coupler 11. Polarization maintaining fibers 17 are connected between the semiconductor lasers 3 and polarization combiners 6 to maintain two different polarization planes, thus ensuring an input signal will be adequately amplified regardless of its orientation in the signal fiber 12 or amplification fiber 2.

The pumping device 1 in this example includes two pumps that provide light having two different wavelengths $\lambda_1$ and $\lambda_2$ into the amplifier fiber 2 (i.e., a first pump that provides light having a central wavelength of $\lambda_1$, and a second pump that provides light having a central wavelength of $\lambda_2$). Further, as noted in copending U.S. patent application Serial No. 09/527,748, a wavelength interval between the wavelengths $\lambda_1$ and $\lambda_2$ is selected to be greater than 6 nm and smaller than 35 nm.

The light output from the pumping device 1 is coupled to the amplifier fiber 2 via the WDM coupler 13. Further, an optical signal (WDM signal) is incident on the amplifier fiber 2 via the input fiber 12 and is then combined with the light pumped into the amplifier fiber 2 so the incident optical signal is Raman-amplified. In addition, the Raman-amplified optical signal is passed through the WDM coupler 13 and is transmitted toward the control unit 4, where a part of the amplified optical signal is branched to form a monitor signal (or sampled output signal), and the other part is output on the output fiber 16.

Much of the remaining discussion focuses on an operation and configuration of the control unit 4. While there are different embodiments of the control unit 4, a common feature of each embodiment is that a processor is employed to assert control over the amplification performance of the Raman amplifier. While some embodiments include a signal monitoring feature in the control unit, it should be understood that the control unit can receive a monitored output signal from an external source. Likewise the control unit 4 may include a laser driver circuit, or simply an interface to a driver circuit that is external to the control unit 4. In each case, however, the control unit 4 is equipped with a processor that is able to execute a series of instructions (perhaps by way of a PAL, or ASIC) to interpret whether the output of the Raman amplifier is within a predetermined tolerance of a target amplification performance, and take corrective action when it is not.

The control unit 4 monitors the monitor signal and generates a control signal on a bus 31, that includes at least N control lines, so as to control drive currents for the semiconductor lasers 3 to achieve a small gain deviation relative to a target gain profile (e.g., a flat amplification profile). The control unit 4 according to the present invention is discussed in more detail later.

The amplifier fiber 2 may be a special fiber suitable for Raman amplification, such as a fiber having a non-linear index of refraction "n2" of 3.5 E-20 $m^2$/W or more. The amplifier fiber 2 may also be an extension of the input fiber 12. Further, a reverse dispersion fiber (RDF) having a dispersion of less than -20 ps/nm/km may be connected to a single mode fiber (SMF) so the amplifier fiber 2 can also function as a transmission line. Generally, because the RDF has a dispersion of less than -20 ps/nm/km, a RDF which has a length substantially the same as or two times greater than a length of the SMF may be used. In such a case, the Raman amplifier is configured so the light pumped into the optical fiber is propagated from the RDF toward the SMF. Further, the amplifier fiber 2 may be connected to and inserted into a transmission fiber (not shown) to which the optical signal is transmitted.

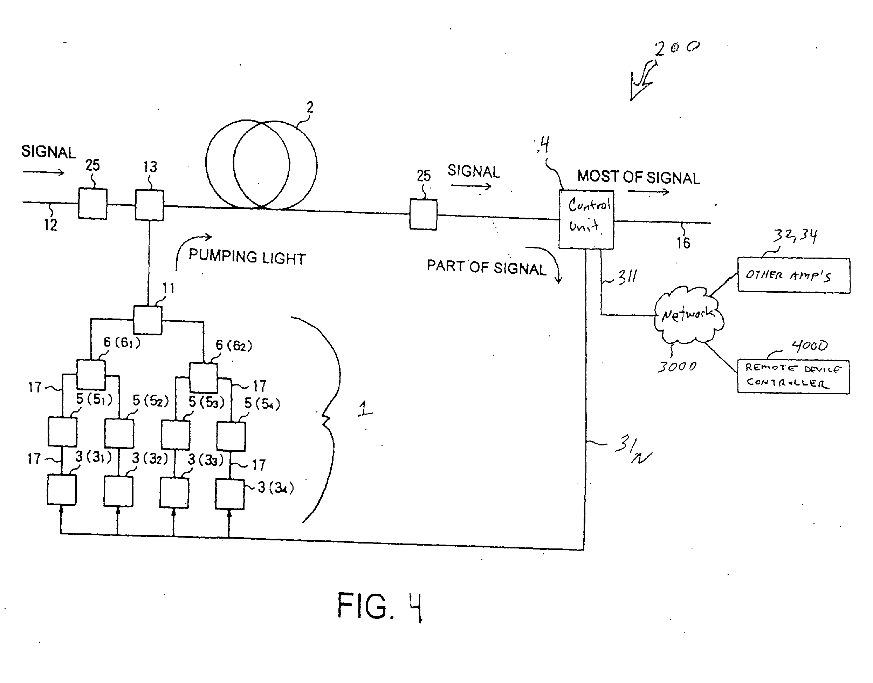

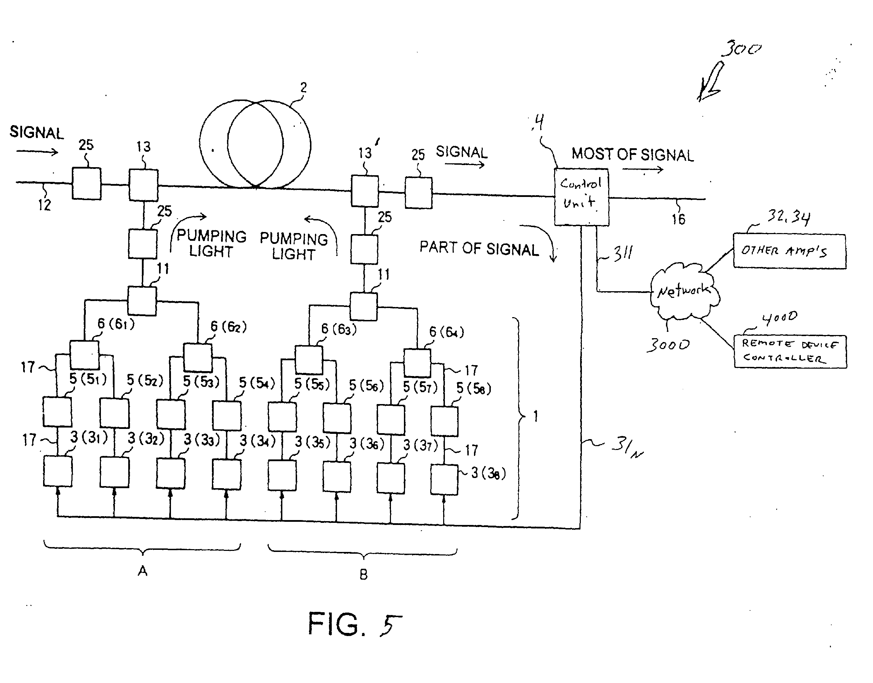

Figures 4 and 5 illustrate other embodiments of Raman amplifiers according to the present invention. In particular, Figure 4 illustrates a Raman amplifier 200 in which the WDM coupler 13 is provided at an input end of the amplifier fiber 2, and the light output from the light pumping source 1 is pumped into the amplifier fiber 2 via the WDM coupler 13. In this arrangement, noise introduced into the amplified optical signal is less problematic than noise introduced into the amplified optical signal in the Raman amplifier shown in Figure 3 because the Raman amplification occurs before the signal is attenuated. In addition, Figure 5 is another example of a Raman amplifier 300 in which light output from two groups of semiconductor lasers A and B included in the pumping device 1 are propagated in two different directions through the amplifier fiber 2. As shown, WDM couplers 13 and 13' are respectively provided at input and output ends of the amplifier fiber 2 such that light launched into the WDM coupler 13' is propagated toward the output end of the amplifier fiber 2 and light launched into the WDM coupler 13 is propagated toward the input end of the amplifier fiber 2. In addition, the pumping device 1 in Figure 5 includes four pumps (i.e., two pumps each having a pair of lasers in group A and two pumps each having a pair of lasers in group B).

In Figure 4, the central wavelengths of the semiconductor lasers $3_1$ and $3_2$ included in the first group A of the pumping device 1 and the central wavelengths of the semiconductor lasers $3_5$ and $3_6$ included in the second group B are the same. In addition, the central wavelengths of the semiconductor lasers $3_3$ and $3_4$ included in the first group A and the central wavelengths of the semiconductor lasers $3_7$ and $3_8$ included in the second group B are the same. Further, fiber gratings $5_1$-$5_8$ are respectively matched with the central wavelengths of the semiconductor lasers 3.

In the exemplary embodiment shown in Figure 5, when the central wavelengths of the semiconductor lasers $3_1$ and $3_2$ included in the first group A are $\lambda_1$, the central wavelengths of the semiconductor lasers $3_3$ and $3_4$ included in the first group A are $\lambda_3$, the central wavelengths of the semiconductor lasers $3_5$ and $3_6$ included in the second group B are $\lambda_2$, and the central wavelengths of the semiconductor lasers $3_7$ and $3_8$ included in the second group B are $\lambda_4$, the

wavelengths $\lambda_1$, $\lambda_2$, $\lambda_3$ and $\lambda_4$ may be adjacent wavelengths. That is, there are four pumps which produce light having central wavelengths of $\lambda_1$, $\lambda_2$, $\lambda_3$ and $\lambda_4$, respectively. Further, the interval between central wavelengths of adjacent pumps is greater than 6 nm and smaller than 35 nm, and the difference between the maximum central wavelength $\lambda_4$ and the minimum central wavelength $\lambda_1$ is smaller than 100 nm. With this arrangement, a very high quality (and thus more expensive) wavelength combiner is not required.

CONTROL UNIT: General Functional Description

The control unit 4 performs the function of controlling the operations of establishing a target amplification performance to be achieved by the Raman amplifier, and then monitoring the signal output from the Raman amplifier to ensure the amplifier is actually operating within a predetermined tolerance of the target amplification performance. The control unit 4 will initially identify and set the target amplification performance, but it is also configured to make adjustments to the target amplification profile if it is provided with additional information about the system-level performance that has not yet been taken into account when establishing the target amplification performance. For example, suppose a failure in a pump laser at an adjacent downstream amplifier is reported to the control unit 4. The control unit 4 may then help compensate for this failure, which will manifest itself in a less than ideal amount of amplification in a portion of the amplification by increasing the amplification profile for that portion of the amplification band in the Raman amplifier 100.

A first functional feature of the control unit 4 is that it is configured to obtain a target Raman amplification performance and then monitor an actual output (Raman amplified) WDM signal to determine if the monitored amplification performance is within a predetermined tolerance of the target performance. The control unit 4 performs this monitoring operation by identifying deviations between the actual performance and the target performance. If the control unit 4 determines that the monitored amplification performance is within the allowable tolerance of the target amplification performance throughout the amplification band, the control unit 4 does not alter the conditions for the pumping device and continues monitoring the actual amplification performance. However, if the control unit 4 determines that the actual amplification is not within the allowable tolerance of the target amplification performance, the control unit may increase or decrease pumping power into amplifier fiber by controlling output powers of the pumps (or groups of pumps) so as to maintain the target amplification performance.

Another feature of the control unit 4 is that it is configured to change the target performance as well as the conditions for a pumping device to produce a new target performance for Raman amplification. For example, a particular communication band may need to be expanded to accommodate additional channels on the network. To accommodate this change in system requirements, the control unit 4 may be configured to set another set of conditions for the pumping device, such as turning on or off some of the pump lasers so as to achieve another target performance for increasing a communication bandwidth. The new conditions for the pumping device may be added to the existing conditions while initial conditions may be set when initial target performance is provided.

A third feature of the present invention is that the control unit 4 is networked with other amplifiers in a cascaded arrangement, such that by coordinating amplification profiles between the cascaded amplifiers the overall system performance remains optimum for WDM signals, despite the fact that the communication conditions may have changed in some way from an original system design. For example, by coordinating the amplification profiles between adjacent amplifiers, the failure of selected pumps may be compensated for by adjusting the amplification profile of one or more adjacent amplifiers. For example, the control unit 4 may adjust the amplification performances of pre-cascaded and/or post-cascaded Raman amplifiers to offset any problem that arises with a Raman amplifier connected therebetween. Other conditions may be compensated for as well, such as the use of a different fiber, with different attenuation characteristics than the original fiber or the insertion of another network component (e.g., switch or amplifier) between two Raman amplifiers.

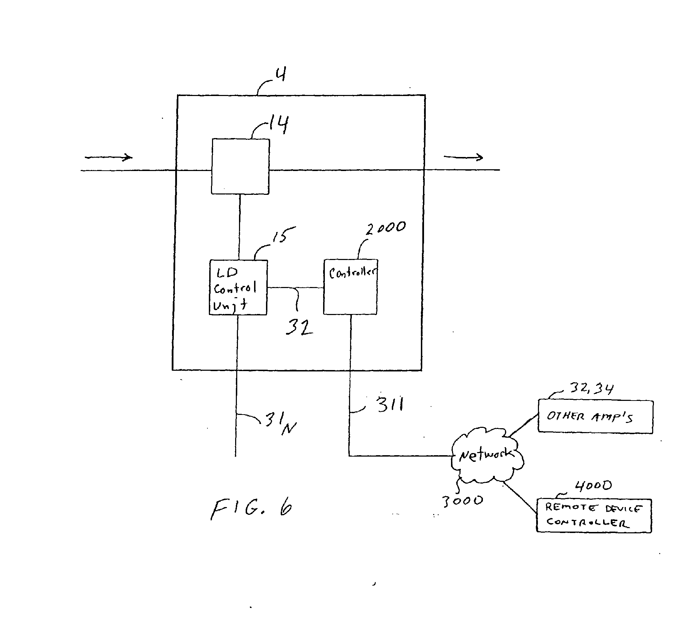

The control unit 4 may be configured to perform all three aspects in addition to initially setting the target amplification performance. The processes of initially setting, maintaining, and changing the target amplification will be discussed below. However, before providing these process descriptions, a description of the components employed in the control unit 4 will first be described with reference to Figures 6-10.

CONTROL UNIT: Component Description

As shown in Figure 6, the control unit 4 includes a tap coupler 14 that is connected to a laser diode (LD) control unit 15 via an optical fiber that carries a fraction of the WDM optical signal to an LD control unit 15. While the tap coupler 14 is shown to be housed within the control unit 4, it may also be an external component that connects to the control unit 4. Likewise, separate components of the LD control unit 4 may be discrete components that need not be housed within a common control unit enclosure.

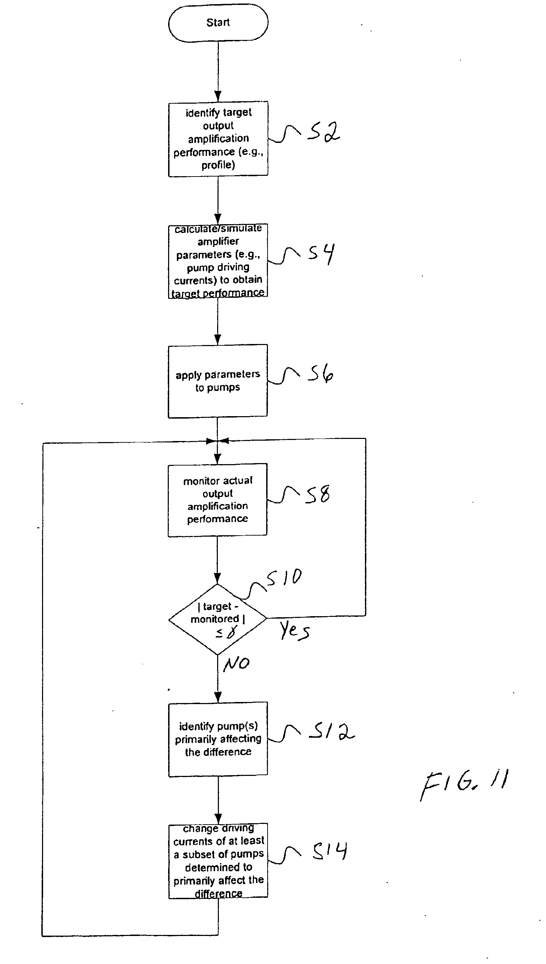

The LD control unit 15 de-multiplexes the WDM monitor signal (i.e., the portion of the amplified WDM signal provided by the tap coupler 14) and then converts the demultiplexed signals into electrical signals. Samples of the electrical signals are provided to the controller 2000 for performing the amplification control processes (discussed in detail with respect to Figure 11, for example). Since a function performed by the control unit 4 is to monitor the actual amplification performance of the Raman amplifier, the LD control unit 15 samples the electrical signals and compares this series of samples against the target amplification performance. The sampling process performed by the LD control unit 15 and controller 2000 does not necessarily have to be performed on a WDM channel-by-WDM channel basis. Rather, the LD control unit 15 and controller 2000 may perform the control processes with a greater or a lesser spectral resolution than 1 sample set per WDM channel. This discussion of spectral resolution and sampling will be addressed in more detail below. As seen, the LD Control unit provides output control lines 31N for controlling the optical output levels of each pump laser 3 (see, e.g., Figure 3). The LD control unit 15 also exchanges sample data and control information with the controller 2000. The controller 2000 is configured to connect to a data communication network 3000, such as the Internet for exchanging data and control information with a remote device controller 4000 and other amplifiers 32, 34.

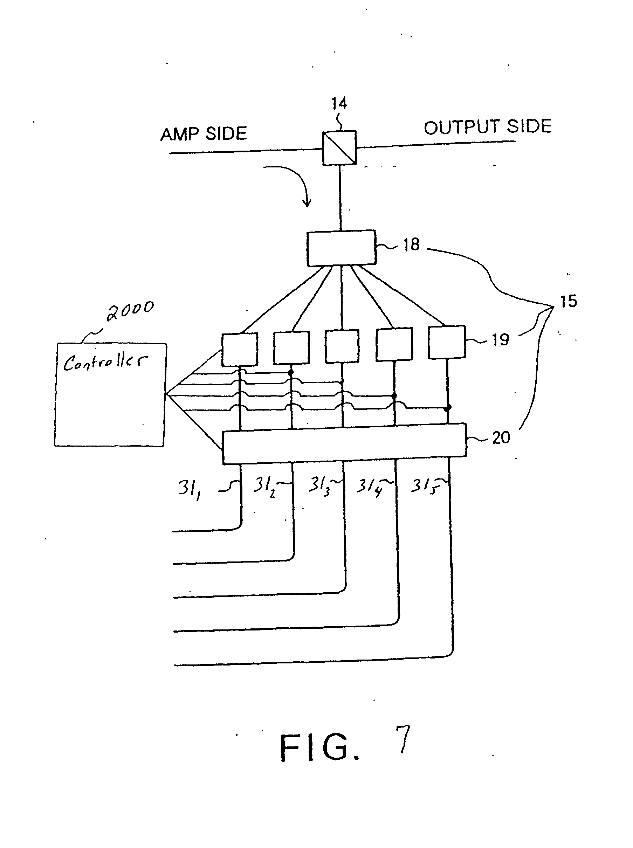

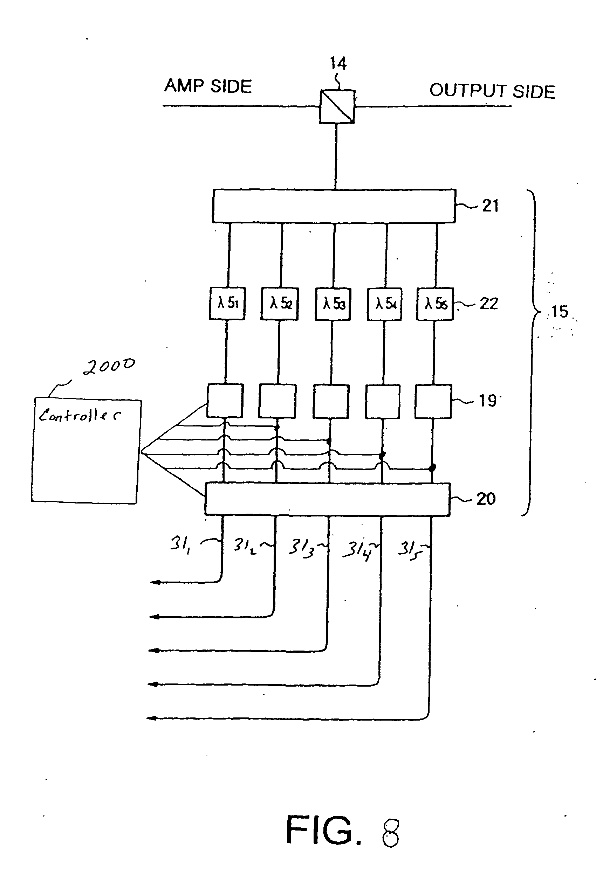

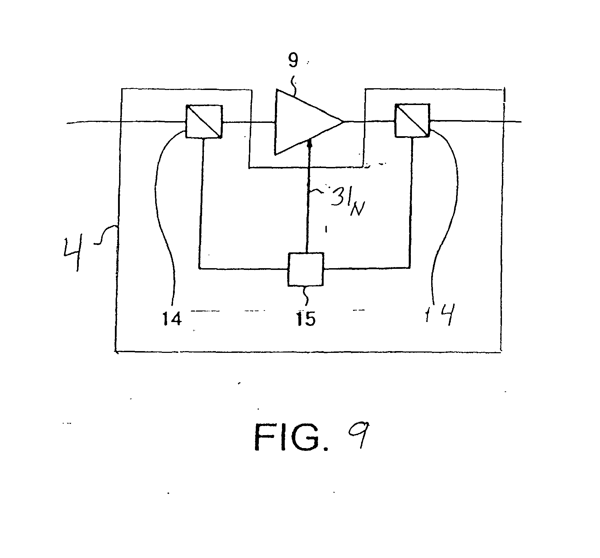

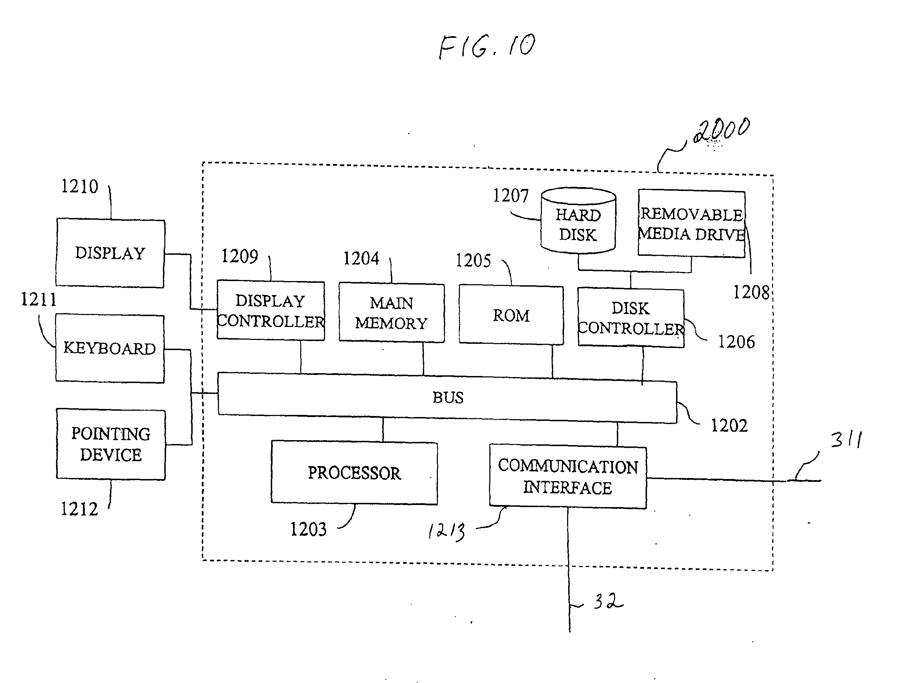

Figures 7 and 8 provide more detailed descriptions of subcomponents of the LD control signal unit 15. In Figure 7, the LD control signal unit includes a wavelength de-multiplexer 18, optical/electrical converting mechanisms 19 (e.g., photo-diodes) and an LD control circuit 20 connected in series. The wavelength de-multiplexer 18 separates the monitored WDM optical signal into a plurality of optical sample-signals, each having a different central wavelength. The de-multiplexed optical sample may, for example, correspond to channels of the WDM signal, as discussed above. Once again, the function performed by the de-multiplexer 18 is to isolate separate spectral components of the WDM signal that is being amplified by the Raman amplifier 100. For basic control schemes, the de-multiplexer 18 may only provide two sample-signals, perhaps one at shorter wavelengths within the amplification band and another at longer wavelengths in the amplification band. A limitation, however, with having too few sample-signals is that the resolution of the sampled signal is not sufficient to observe sub-bands where the gain profile of the Raman amplifier is not within a predetermined tolerance (e.g., 1 dB) of the target amplification performance. On the other hand, having too many sample-signals unnecessarily increases the expense and complexity of the processing resources in the control unit 4. Thus, as a practical guideline, the number of sample-signals to be developed is set to correspond with either a number of WDM channels to be handled by the Raman amplifier, or a number of pump lasers employed in the Raman amplifier. Thus, typical numbers of sample-signals developed by the de-multiplexer for dense WDM signals will range between about 10 to 100. However, smaller numbers, such as 2 mentioned above, or up to, or exceeding, 1000 are possible as well.

The optical/electrical converting mechanisms 19 convert the de-multiplexed optical sample signals into electrical signals. Output currents provided by the converting mechanisms 19 vary, depending on the respective magnitudes of the de-multiplexed sample-signals. The controller 2000 receives the electrical currents via a bus 32, where the controller 2000 then samples the respective currents to create a digital rendition of the sample-signals. Alternatively, the controller 2000 receives the digital rendition of the sample-signals from the LD control circuit 20 which digitizes the sample-signals. Likewise, the converting mechanisms 19 provide a digitized output.

The LD control circuit 20 is shown to be a separate controller from controller 2000, but the two can be incorporated into a single processor-based controller. As shown in Figure 7, however, the controller 2000 is configured to implement a digital signal processor based-embedded controller, while the main analog processing is performed in the LD control circuit 20. For example, in one embodiment, the controller 2000 holds in memory appropriate drive current values for the separate pump lasers, based on the certain target amplification performance to be achieved. Once the drive current values are identified, the controller 2000 then informs the LD control circuit 20 (either via a digital message or separate analog signals), so the LD control circuit 20 may control laser drive circuits contained therein to produce the desired pump laser drive currents. However, in another embodiment, the LD control circuit 20 may operate digitally and may itself hold in memory the drive current values that are associated with achieving the target amplification performance. In this case, the LD control circuit 20 dispatches control signals to semiconductor lasers 3 (see, e.g., Figure 4), which contain their own drive circuits that respond to the control signals or are interconnected with separate drive circuits.

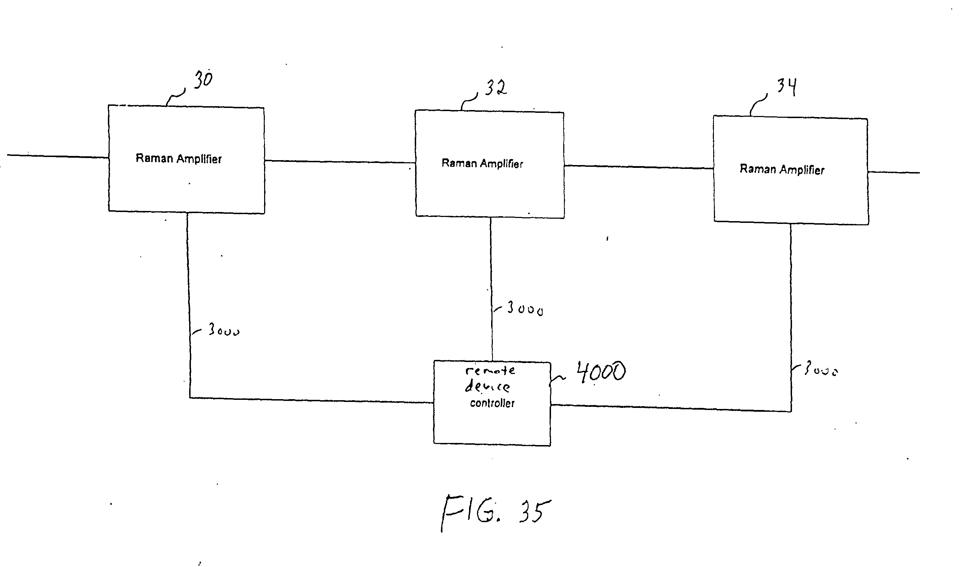

Figure 8 illustrates another exemplary embodiment of the control unit 4. Unlike the embodiment of Figure 7, the embodiment of Figure 8 includes a power splitter 21 and bandpass filters 22. The power splitter 21 splits the monitored WDM optical signal branched by the tap coupler 14 into a plurality of sample-signals. For example, the power splitter 21 may be configured to divide the branched WDM signal into a corresponding number of channels of the WDM signal. The bandpass filters 22 have different central wavelengths and fixed-width passbands that only permit the portion of the respective sample-signals having optical energy within the specific passband to pass therethrough. The optical/electrical converters 19, controller 2000 and LD control circuit 20 are like that described above in reference to Figure 7. It should be noted that although the discussion has been primarily focused on sampling the amplified output from the Raman amplifier to perform the control operation, the control unit 4 may also sample the input signal to the Raman amplifier, as shown in Figure 9. By directly measuring the input optical signal and the output optical signal, the control unit 4 is able to establish a direct measurement of amplifier gain, and the profile of the amplification gain. As an alternative to measuring the input level, the controller 2000 may receive a message from an upstream Raman amplifier 30 (see, e.g., Figure 35) which describes an output level of the WDM signal as it leaves Raman amplifier 30. Since the fiber loss characteristics are generally known for the fiber that interconnects amplifier 30 with amplifier 32, the controller 2000 in amplifier 32 can calculate the apparent level of the WDM signal that is input to the Raman amplifier 32.

Figure 10 illustrates an exemplary embodiment of the components employed in the controller 2000. The controller 2000 includes a bus 1202 that interconnects a processor 1203 with other components in the controller, as illustrated. A main memory 1204, such as a random access memory (RAM) or other storage device (e.g., dynamic RAM (DRAM), static RAM (SRAM), and synchronous DRAM (SDRAM)), is coupled to the bus 1202 for storing information and instructions to be executed by the processor 1203. In addition, the main memory 1204 may be used for storing temporary variables or other intermediate information during the execution of instructions by the processor 1203. A read only memory (ROM) 1205 or other static storage device (e.g., programmable ROM (PROM), erasable PROM (EPROM), and electrically erasable PROM (EEPROM)) is also coupled to the bus 1202 for storing static information and instructions for the processor 1203.

The controller 2000 also includes an optional disk controller 1206 coupled to the bus 1202 to control one or more optional storage devices for storing information and instructions, such as a magnetic hard disk 1207, and a removable media drive 1208 (e.g., floppy disk drive, read-only compact disc drive, read/write compact disc drive, compact disc jukebox, tape drive, and removable magneto-optical drive). The storage devices may be added to the LD control circuit 20 using an appropriate device interface (e.g., small computer system interface (SCSI), integrated device electronics (IDE), enhanced-IDE (E-IDE), direct memory access (DMA), or ultra-DMA). The hard drive 1207 and removable media drive 1208, when used, hold record data for subsequent retrieval by a technician when servicing the Raman amplifier, or remotely retrievable by the remote device controller 4000.

The controller 2000 optionally includes a display controller 1209 coupled to the bus 1202 to control an optional display 1210, such as a cathode ray tube (CRT), for displaying information to a network engineer, or technician who is servicing the Raman amplifier. The LD control circuit 20 includes interfaces to accommodate input devices, such as a keyboard 1211 and a pointing device 1212, for interacting with the network engineer and providing information to the processor 1203. The pointing device 1212, for example, may be a mouse, a trackball, or a pointing stick for communicating direction information and command selections to the processor 1203 and for controlling cursor movement on the display 1210. In addition, a printer port and an optional printer may be included to provide printed listings of the data structures/information, or any other data stored and/or generated by the controller 2000.

The controller 2000 may also include special purpose logic devices (e.g., application specific integrated circuits (ASICs)) or configurable logic devices (e.g., simple programmable logic devices (SPLDs), complex programmable logic devices (CPLDs), and field programmable gate arrays (FPGAs)) to perform all, or a portion, of the logic operations.

The controller 2000 performs a portion or all of the processing steps of the control process by the processor 1203 executing one or more sequences of one or more instructions contained in a memory, such as the main memory 1204. Such instructions may be read into the main memory 1204 from another computer readable medium, such as a hard disk 1207 or a removable media drive 1208 or downloaded from another computer, such as the remote device controller 4000. One or more processors in a multi-processing arrangement may also be employed to execute the sequences of instructions contained in main memory 1204. In alternative embodiments, hard-wired circuitry may be used in place of or in combination with software instructions. Thus, the embodiments are not limited to any specific combination of hardware circuitry and software.

As stated above, the controller 2000 includes at least one computer readable medium or memory for holding instructions programmed according to the teachings of the present invention and for containing data structures, tables, records, or other data described herein. Examples of computer readable media are compact discs hard disks, floppy disks, tape, magneto-optical disks, PROMs (EPROM, EEPROM, flash EPROM), DRAM, SRAM, SDRAM, or any other magnetic medium, compact discs (e.g., CD-ROM), or any other optical medium, punch cards, paper tape, or other physical medium with patterns of holes, a carrier wave (described below), or any other medium from which a computer can read.

Stored on any one or on a combination of computer readable media, the computer readable instructions include software for operating the controller 2000, for driving a pumping device and for enabling the controller 2000 to interact with a human user. Such software may include, but is not limited to, device drivers, operating systems, development tools, and applications software. Such computer readable media further includes the computer program product of the present invention for performing all or a portion (if processing is distributed) of the processing performed in implementing the control aspects of the present invention.

The computer code devices of the present invention may be any interpretable or executable code mechanism, including but not limited to scripts, interpretable programs, dynamic link libraries (DLLs), Java classes, and complete executable programs. Moreover, parts of the processing of the present invention may be distributed for better performance, reliability, and/or cost.

The term "computer readable medium" as used herein refers to any medium that may provide instructions to the processor 1203 for execution. A computer readable medium may take many forms, including, but not limited to, non-volatile media, volatile media, and transmission media. Non-volatile media includes, for example, optical disks, magnetic disks, and magneto-optical disks, such as the hard disk 1207 or the removable media drive 1208. Volatile media includes dynamic memory, such as the main memory 1204. Transmission media includes coaxial cables, copper wire and fiber optics, including the wires that make up the bus 1202. Transmission media may take the form of acoustic or light waves, such as those generated during radio wave, optical and infrared data communications.

Various forms of computer readable media may be involved in carrying out one or more sequences of one or more instructions to processor 1203 for execution. For example, the instructions may initially be carried on a magnetic disk of a remote computer. The remote computer can load the instructions for implementing all or a portion of the present invention remotely into a dynamic memory and send the instructions over a telephone line using a modem. A modem local to the controller 2000 may receive the data on the telephone line and use an infrared transmitter to convert the data to an infrared signal. An infrared detector coupled to the bus 1202 can receive the data carried in the infrared signal and place the data on the bus 1202. The bus 1202 carries the data to the main memory 1204, from which the processor 1203 retrieves and executes the instructions. The instructions received by the main memory 1204 may optionally be stored on storage device 1207 or 1208 either before or after execution by processor 1203.

The controller 2000 also includes a communication interface 1213 coupled to the bus 1202. The communication interface 1213 provides a communication link with the LD control unit 20 via the bus 32 and a communication link with the network 3000 via the link 311. The communication interface 1213 may also be configured to provide an Internet connection so a network engineer can control the LD control circuit 20 at a remote location (e.g., remote device controller 4000 (Figure 4), which itself may have an architecture like that shown in Figure 10. For example, the communication interface 1213 may be a network interface card to attach to any packet switched LAN, or other network 3000 (Figure 4). As another example, the communication interface 1213 may be an asymmetrical digital subscriber line (ADSL) card, an integrated services digital network (ISDN) card or a modem to provide a data communication connection to a corresponding type of communications line. Wireless links may also be implemented. In any such implementation, the communication interface 1213 sends and receives electrical, electromagnetic or optical signals that carry digital data streams representing various types of information to and from remote devices.

CONTROL PROCESS

Figure 11 is a flowchart illustrating an operational process performed by the control unit 4 (Figure 10). This control process is for (1) establishing a predetermined target amplification performance (e.g., an amplification profile or output signal power profile over a predetermined amplification bandwidth), (2) monitoring whether an actual amplification performance is within a predetermined tolerance of the target amplification performance, and (3) taking corrective action when the actual amplification performance is not within the predetermined tolerance. In particular, steps S2, S4 and S6 respectively identify the target output amplification performance, determine the amplifier parameters (e.g., pump laser drive currents) that are used to achieve the target output amplification performance and apply the parameters to achieve the target performance. Steps S8, S10, S12, and S14 are directed to ensuring that the actual amplification performance stays within a predetermined tolerance of the target amplification profile and/or at least adopts an acceptable profile shape (such as a flat or tilted profile slope).

Identifying Target Output Amplification Performance (step S2)

The process in Figure 11 begins in step S2 where an input WDM optical signal characteristic *(A)* (such as a mean optical signal level measured in sub-bands of the amplification band) and an (initial) target amplification performance *(B)* are provided to, and/or generated by, the control unit 4 and stored in the memory 1204 (Figure 10). The target amplification performance may be represented by a series of values indicative of a predetermined gain profile that is set by a system operator to achieve a desired system performance. Since gain relates to the level of an output signal relative to an input signal, the input signal level is identified either directly or indirectly, as will be discussed below. Moreover, if the system operator intends to have the Raman amplifier operate with a predetermined gain profile, the input WDM optical signal characteristic (A) is first determined in one of several ways, discussed below.

The WDM signal level may be measured directly at an input to the Raman amplifier. In this case, the control unit 4 can verify that the target gain is achieved by comparing the target gain (stored in memory after being input via line 311, Figure 10) to a ratio of a measured output signal and the level of the optical signal applied to the amplifier. As an alternative to a direct measurement of the input signal level, the signal level may be obtained from an output signal level reported to the Raman amplifier (e.g., amplifier 32 in Figure 35) from a downstream Raman amplifier (e.g., amplifier 30 in Figure 35), less an estimated, or measured, amount of attenuation due to fiber loss between the two Raman amplifiers. Still further, the input level may be inferred from a process employed by the control unit 4 in which a signal of known power is input to the Raman amplifier and then an amount of driving current applied to respective pump lasers to produce a predetermined output level measured at the output of the subject Raman amplifier is identified and saved in memory. Subsequently, the amount of amplification may be estimated from a change in the amount of driving current relative to the values stored in memory. This later process may be performed as an initial step during a built-in-test procedure or during a calibration operation, for example. As still a further alternative, a target output WDM optical signal characteristic (C) may be provided from an external source and stored in memory instead of the target amplification performance *(B)*. In this case, the target amplification performance *(B)* is calculated from (A) and (C) and stored in the memory 1204. The target amplification performance *(B)* and WDM optical signal characteristics *(A)* may be provided, stored and read, for example, from the main memory in the control unit 4 during operational conditions.

Calculating and Simulating Amplifier Parameters (e.g., pump laser driving currents) Used to Obtain the Target Output Amplification Performance (step S4).

After the target amplification performance, as well as associated parameters (e.g., input signal level, if the target amplification performance is implemented to be an amplifier gain) is obtained in step S2, the process then proceeds to step S4. In step S4, the amplifier parameters to achieve the target amplification performance are determined by contemporaneous calculation/simulation, or by referencing a look-up table that holds parameters that were previously determined and stored for various conditions. In the present discussion, the amplifier parameters will be described as driving currents that are produced by pump laser driving circuits (positioned either in the control unit 4 or adjacent to the pump lasers 3). However, the amplification parameters may be attenuation amounts applied by optical attenuators (not shown), which attenuate optical output of the pump lasers that are driven at fixed driving currents (e.g., $I_{max}$).

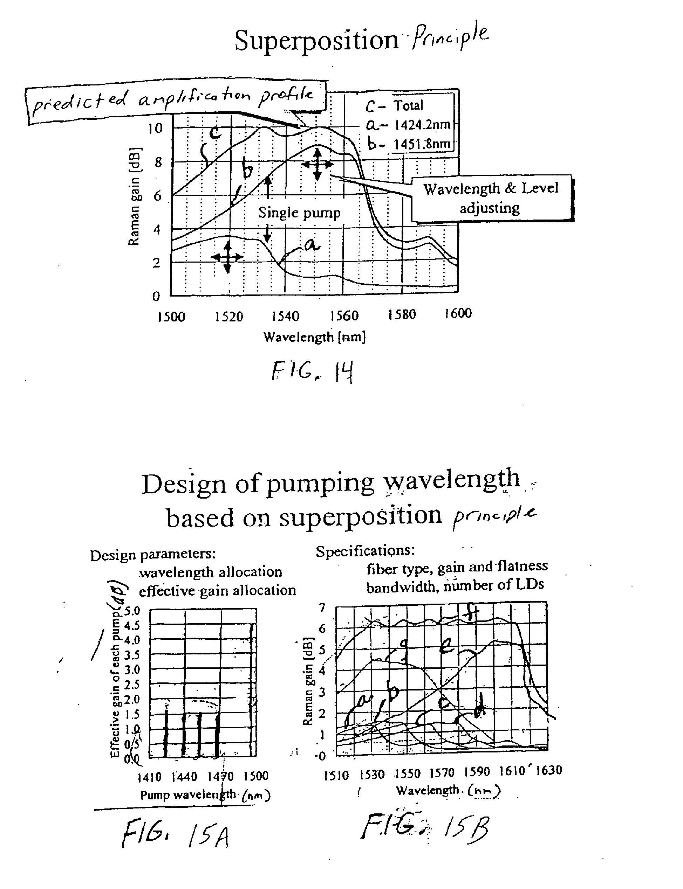

While the present discussion has focused on associating pump laser driving currents with a target amplification performance, there are additional operational conditions that the control unit 4 may consider, such as internal losses inherent in the optical signal measurement operation, fiber losses, pump-to-pump interaction or aging of the pump lasers. To compensate for these additional conditions, such as fiber loss (attenuation), sets of driving currents are preset and stored in memory. The sets of driving currents correspond with various gain profiles that are available for selection so as to compensate for the fiber loss, etc. Selecting a target performance that accounts for the additional conditions is similar to "pre-emphasis", or "post-emphasis" in a communications system, where "post-emphasis" applies in the context of applying the Raman amplification upstream of the Raman amplifier. In either case, the adjusted driving currents are collected as values in a table, an example of which is shown in Figure 13. These values may be retrieved by the control unit 4 from memory and used to control the driving circuits required to compensate for the wavelength dependent fiber loss characteristic.

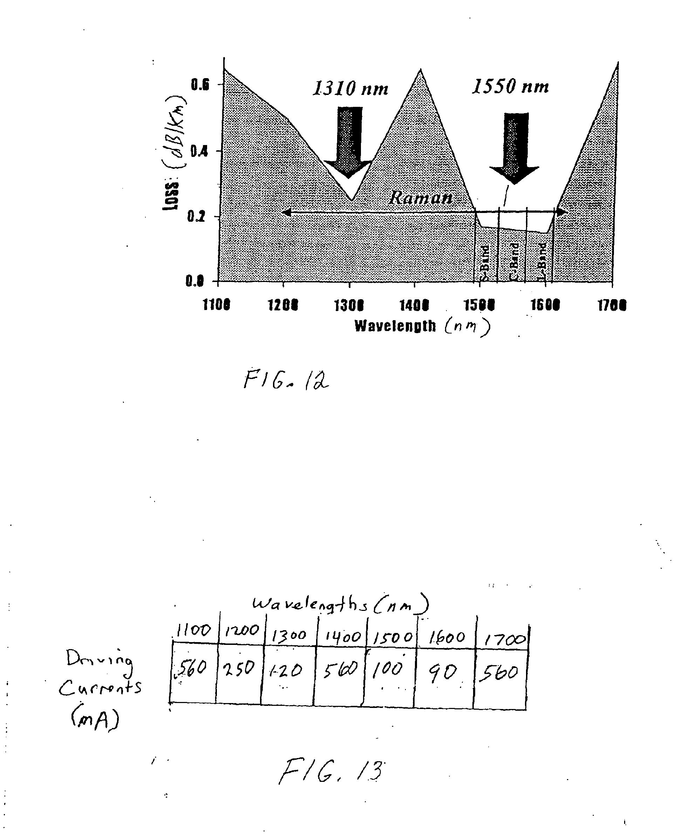

By way of example as shown in the November 28, 2000 publication "Photonics" by CIBC World Markets, Figure 12 shows that it is known that an amount of attenuation in an optical fiber at 1400nm is much greater than at 1500nm. The conventional approach for dealing with this difference in attenuation is to simply use the part of the spectrum that has minimal attenuation. The present inventors take a different approach by employing an amplification profile that compensates for the non-uniform attenuation characteristics in the transmission band. As seen in Figure 13, the main memory 1204 holds a greater driving current (560mA) for the pump laser having a peak Raman gain at 1400nm, than the driving current (100mA) for the pump having a peak Raman gain at 1500nm, where the fiber loss is much less. Thus, by using a table such as that shown in Figure 13, the driving currents can be determined so as to achieve the target amplification performance. Other parameters that affect the target profile can also be stored in a data table in the memory of the LD control processor 2000.

Example of Simulation Process to Provide Target Amplification Performance

There are simulation programs currently available which can initially calculate the necessary driving currents to achieve the desired output profile. For example, the evolution of WDM pumps and signals may be expressed by the following equations:

$$\frac{dP_v^{\pm}}{dz} \approx -\alpha_v P_v^{\pm} + \varepsilon_v P_v^{\mp}$$

$$+ P_v^{\pm} \sum_{\mu > v} \frac{g_{\mu v}}{A_\mu}(P_\mu^+ + P_\mu^-)$$

$$+ 2h\nu \sum_{\mu > v} \frac{g_{\mu v}}{A_\mu}(P_\mu^+ + P_\mu^-)\left[1 + \frac{1}{\exp\left[\frac{h(\mu - v)}{kT}\right] - 1}\right]$$

$$- P_v^{\pm} \sum_{\mu < v} \frac{v}{\mu} \frac{g_{v\mu}}{A_v}(P_\mu^+ + P_\mu^-)$$

$$- 4h\nu P_v^{\pm} \sum_{\mu < v} \frac{g_{v\mu}}{A_v}\left[1 + \frac{1}{\exp\left[\frac{h(v - \mu)}{kT}\right] - 1}\right] \qquad (1)$$

where subscripts $\mu$ and $v$ denote optical frequencies, superscripts "+" and "-" denote forward-and backward-propagating waves, respectively, $P_v$ is optical power around $v$, which is the product of power spectral density at $v$ and infinitesimal bandwidth $\delta v$. $\alpha_v$ is attenuation coefficient, $\varepsilon_v$ is Rayleigh backscattering coefficient, $A_v$ is effective area of optical fiber at frequency $v$, $g_{\mu v}$ is a Raman gain parameter at frequency $v$ due to the pump at frequency $\mu$, $h$ is Planck's constant, $k$ is Boltzmann constant, and $T$ is temperature. This equation is expected to include almost all conceivable effects observable in real systems, such as pump-to-pump and signal-to-signal Raman interactions, pump depletions due to Raman energy transfer, Rayleigh backscattering, fiber loss, spontaneous emission noise and blackbody radiation noise. The main memory 1204 holds computer readable instructions that have equation (1) encoded therein. These instructions are executed by the processor 1203 so as to simulate a target amplification performance from an aggregation amplification effects provided by the different pump lasers.

Example of How to Set Target Amplification Performance

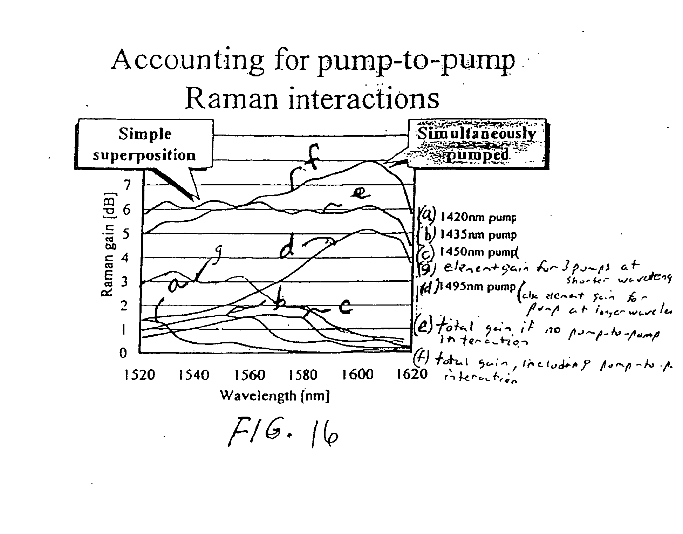

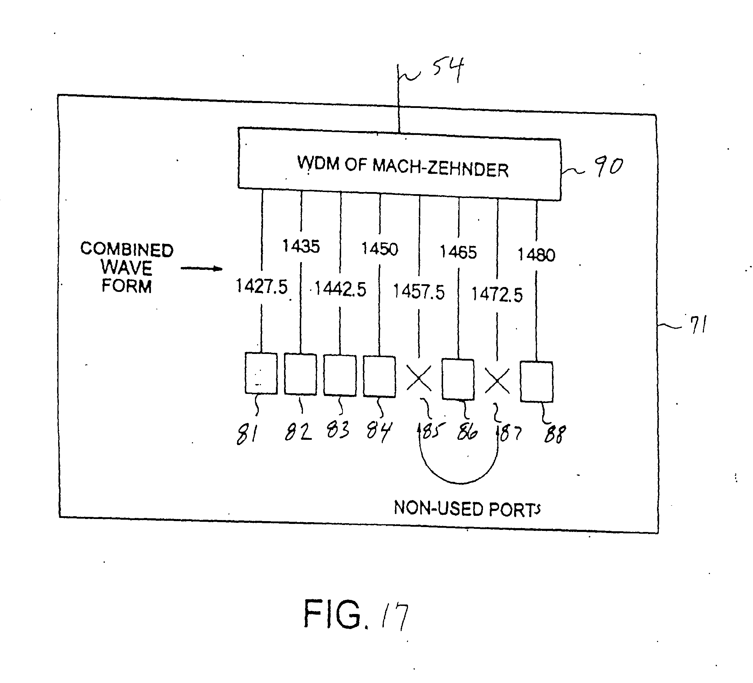

Figures 14, 15A and 15B will now be referred to when explaining an exemplary process of how to set a target amplification performance (step S4 in Figure 11). Figures 14, 15A, 15B and 16 illustrate a superposition principle that is used in one embodiment according to the present invention to determine the appropriate conditions (e.g., center wavelength of pumps, pump output powers) needed to obtain a flat (or arbitrarily shaped) Raman amplification performance.

Figure 14 is a graph showing individual and composite Raman gain profiles versus wavelength for two pump lasers, operating at 1424.2 nm and 1451.8 nm. Since this invention applies to the spectral band shown in Figure 12, for example, the pump lasers may be referred to as YYXX lasers (YY being in a range of 13 through 15 and XX being in a range of 00 through 99). As an example, for producing a Raman gain in the S-Band through L-band, the YYXX lasers may be referred to as 14XX pump lasers (e.g., 1400 nm to 1499 nm). The Raman amplification gain profile due to the single pump laser operating at a central wavelength of 1424.2 nm is shown as profile "a" in Figure 14. Likewise, an amplification profile due to a single pump laser operating at a central wavelength of 1451.8 nm is shown as profile "b". The total Raman amplification profile due to the simultaneous operation of both pumps is shown as profile "c" and is determined via the superposition principle (i.e. the profiles are additive). That is, according to the superposition principle, the amplification profiles due to each of the pumps may be added to achieve a total amplification profile that corresponds to the addition of the two individual profiles.

Figures 15A and 15B illustrate another example of the superposition principle as applied to the present invention with regard to creating target amplification performances. As shown in Figure 15A, four pump lasers at the shorter wavelengths (i.e., a first group) are set at a first predetermined gain level (or optical output level), and a fifth pump laser (i.e., a second group, having only one pump laser in this example, but more could be included) is set to a higher gain level. The fifth pump laser is separated in wavelength from the closest of the pump lasers in the first group by a greater wavelength interval than between that of adjacent members in the first group. Moreover, the pump lasers in the first group are set to approximately equal gain levels and are separated from one another by about 20nm (although a range of 6 nm to 35 nm is a reasonable separate range to minimize appreciable inflection points in the gain profile). In this example, the fifth pump laser operates at a central wavelength of 1495.2 nm (29.2 nm above the closest pump laser in the first group, which operates at 1466.0 nm), and is set to impart an effective gain that is almost 3 times higher than that of each of the first group of pumps.

Figure 15B corresponds with Figure 15A and illustrates how the superposition principle applies to the amplification profiles produced by the pump lasers in the first group and in the second group. Amplification profiles "a", "b", "c", and "d" correspond with the pump lasers in the first group, which respectively operate at 1424.2 nm, 1437.9 nm, 1451.8 nm and 1466.0 nm . Profile "g" corresponds with a composite profile for the first group and profile "e" corresponds with profile provided by the pump laser in the second group, namely 1500nm (although a plurality of pumps, such as two or three, may be used to form the second group). Note that the respective amplification peaks occur at a wavelength that is about 100 nm longer than where the source pump operates.

Target amplification gain profiles "c" (in Figure 14) and "f" (in Figure 15B) are generated by applying the superposition principle. The resulting shape of the predicted amplification gain profiles may be made substantially flat, as shown, or set to any arbitrary shape, by adjusting the outputs of the pump lasers, given a specific spacing of the wavelengths at which the pump lasers operate. For example, the amplification profile "f" shown in Figure 15B may be made to tilt so as to have a negative slope throughout the amplification band by reducing the gain of the second group, namely the pump operating at the central wavelength of 1500 nm. Likewise, the profile could also be tilted to assume a negative slope by increasing the output from group 1 (i.e., gain profile "g"). Conversely, target amplification profiles "c" (Figure 14) and "f" (Figure 15B) could be made to have a positive slope by either reducing the output from the first group, and/or increasing the output from the second group. Gain profiles "g" and "e" (Figure 15B), which are provided by a group of pumps, may be referred to as "element gain profiles." Since there are generally a greater number of pump lasers operating in the group(s) at the shorter wavelengths, it is possible to impart a greater number of higher order gain shape features in the element gain profile for the shorter wavelengths than for the longer wavelengths.

Setting Optical Output of Pump Lasers to Initially Establish Target Amplification Performance (S6)

After step S4 is completed, the process proceeds to step S6, where the control unit 4 may then assert control over the optical output of the pump lasers by applying the amplification parameters previously determined to the pump lasers. As an example, when the simulated amplification performance matches the target amplification performance, within a predetermined tolerance, respective drive currents for each pump laser are identified in a look-up table based on the peak amplification output level from each of the pump lasers determined in the simulation. Alternatively, or complementarily, the control unit 4 may be programmed to adjust an amount of attenuation exhibited programmable attenuators, optically coupled to each of the pump lasers, so as to control the respective optical outputs of the pump lasers, consistent with obtaining the target amplification performance. Thus, the amplifier parameters are associated with an amount of optical energy applied to the optical fiber carrying the fiber, and need not only be the driving currents applied to the pump lasers.

Monitoring and Maintaining Actual Amplification Performance (S8, S10, S12, and S14).

The transition from step S6 to step S8 in the control process of Figure 11 is a transition from initiating an amplification performance, that is presumably reasonably close to the target amplification performance, to monitoring and adjusting the actual amplification performance to be within a predetermined tolerance band of the target amplification performance. This monitoring and adjusting portion of the control process begins in step S8, where the control unit 4 monitors the output WDM signal, and perhaps also monitors the actual input WDM signal, as discussed above with regard to Figure 9.

Step S8 may be accomplished in a variety of ways. One way is to take several measurements across the amplification band, such as one mean power measurement per pump laser. In this scenario, there would be a one-to-one correspondence between the amplifier sub-band and each pump laser, like that shown in Figure 7. The samples are taken by the LD control processor 20 (Figure 7) and reported to the processor 2000 via bus 32. However, there is no restriction on the granularity with which the monitoring step is performed. The greater the resolution (i.e., number of sample points per Hz), the greater the ability to determine the degree to which the actual amplification performance matches that of the target amplification performance. However, after the resolution approaches a level that corresponds with the closest pump laser spacing (e.g., not closer than 6 nm for separate pump sources), little further benefit is achieved unless multiple laser outputs are combined so as to increase the optical output power. At the other extreme, if the resolution is restricted to only a few points, there is a limited ability to determine whether there are inflection points between sample points. Thus, having a resolution that generally corresponds with the pump spacing helps to ensure reliable conformance with the target amplification performance across the entire amplification band, while not wasting processing resources. After obtaining the sample points, the control unit 4 stores the sample points of the output WDM signal in memory 1204 (Figure 10) for subsequent processing.

After step S8, the process proceeds to step S10, where an inquiry is made to determine if the actual (monitored) amplification performance is within a certain tolerance ((, e.g., .5dB for strict compliance, or 1 dB for less strict compliance) of the target amplification performance, throughout the amplification band. In one embodiment, this determination is made on a sample-by-sample basis, according to equation (2) below:

$$\text{ABS}[\text{target} - \text{monitored}] \leq (\text{(a certain tolerance)} \qquad (2)$$

Alternatively, an average of the monitored samples may be combined to develop a mean amplification performance over a predetermined sub-band. In this case, it is possible to reduce the number of calculations required, but also permits the control unit 4 to measure for a compliance of "shape" with regard to the target amplification performance. For example, as will be discussed below, the control unit 4 may control groups of pump lasers to affect a desired amplification performance. Suppose the control of the pump lasers is handled by controlling the pump lasers as two groups. The control unit 4 can then calculate a mean output level for the shorter wavelengths (first group) and another mean output level for the longer wavelengths (second group). This allows the control unit 4 to (1) determine whether the mean amplification performance across the amplification band is within ( and (2) to determine if an adjustment needs to be made to the slope (i.e., tilt) of the total amplification performance by some amount.

Now, referring to the flowchart of Figure 11, if the response to the inquiry in step S10 is affirmative (yes) for all sample points (or alternatively, for a predetermined number of sample points or percentage of all sample points), the process returns to step S8. However, if the response to the inquiry in step S10 is negative, the process proceeds to step S12.

In step S12, the control unit 4 compares the amount of deviation observed for each of the sample points. If there is not a consecutive pattern of deviations (e.g., adjacent samples that are both outside the predetermined tolerance), then the control unit 4 implements an adjustment process that adjusts (up or down) an optical output from the pump laser whose peak amplification profile is most closely aligned with where the deviation occurred. Moreover, if the control unit observes that the deviation is isolated to a small part of the amplification band, then the control unit 4 adjusts that optical output for the pump laser whose peak output most strongly influences that part of the amplification band.

However, if the control unit 4 determines in step S12 that a series of adjacent samples of the monitored amplification profile deviate by more than the predetermined tolerance from the target amplification performance, then the control unit 4 implements a different process. In this later situation, the control unit 4 creates a "secondary target amplification profile." The shape of this secondary target amplification profile is formed from a difference between the target amplification performance and the monitored amplification profile. Much like with step S4, the control unit then determines (e.g., through simulation or table look-up) a set of amplifier parameters (e.g., pump laser drive currents) that can be applied to the pump lasers so as to have the monitored amplification profile more closely match the target amplification profile. Thus, the control unit 4 creates secondary target amplification profile that, when added to the monitored amplification profile, results in a new amplification profile that more reliably falls within the predetermined tolerance of the target amplification profile, across the amplification band.

Once step S12 is completed, the process proceeds to step S14, where the control unit 4 causes the optical outputs of the affected pump lasers to be adjusted by an amount necessary to implement the secondary target amplification profile. The process then returns to step S8 for continued monitoring and adjusting operations.

Examples of Using Groups of Pump Lasers to Set, and Maintain Amplification Performances

Setting and maintaining an amplification profile may be accomplished with the control unit 4 by adjusting individual pump laser outputs. However, control can also be accomplished by adjusting the element profiles of respective groups of pump lasers. As discussed above, each of the element profiles is realized by combining the respective gain profiles of the pump lasers in that group. Then, the element gains themselves may be adjusted to lessen the number of degrees of freedom in the control process when making changes to the total amplification performance. For example, the levels of two element profiles may be adjusted quickly to impart a slope change on the total amplification profile. As discussed above, a positive slope may be created by increasing the gain of the second element and/or decreasing the gain of the element profile for the first element. Conversely, a negative slope may be imparted on the total amplification performance if the profile for the first element is increased and/or the profile for the second element is decreased .

A computer-based simulation process, as discussed above, may be used to efficiently determine a magnitude by which each of the element profiles should be adjusted so as to realize the desired effect. For example, a two step simulation process may be employed where the element profiles are identified via an element analysis (i.e., performing simulations to determine the respective gain levels attributable to each of the pump lasers to achieve the desired element profile). Then, a second step would be performed where the levels of the element profiles are adjusted to provide a desired total amplification profile of a predetermined shape. As one example, the element profiles could be developed during an initial setup mode of operation (e.g., step S4 in Figure 11) and then the second simulation step would be performed in step S12 to identify an amount by which respective element profiles should be adjusted to maintain the total amplification performance to stay within the predetermined tolerance.

With regard to initially establishing the element profiles, the present inventors observed that since a high effective gain is expected with a lower power required, an element gain profile for the longer wavelength band (second element profile) is temporally set based on the desired target amplification gain profile. Moreover, the second element profile is set at a sufficiently high gain to ensure that the second element profile substantially accounts for the gain required at the longer wavelength portion of the amplification band. When done this way, the burden is then shifted on the control unit 4 to set the first element gain profile to match the difference between the target amplification profile and the second element gain profile. Since there are more pump lasers in the shorter wavelength group (i.e., the first group) there are more pump lasers available to create a more complex shaped first element profile.

When setting the shape for the first element profile, the control unit 4 may take into account additional conditions. For example, one of the additional conditions may be an amount of fiber loss in the optical fiber. This fiber loss may be determined at the time of installation of the Raman amplifier, and thus varies depending on the operational setting for that Raman amplifier. The fiber loss may change over time, perhaps based on a system operator adding another amplifier closer to the subject Raman amplifier, thus decreasing the distance over which the output optical signal must travel before being amplified again. As an example of a further "additional condition", the first element profile may be adapted to compensate for pump-to-pump interactions that may be experienced. See Figure 16, which shows how pump-to-pump interactions will tend to inflate the total amplification performance at the longer wavelengths (profile "f'). By having the control unit 4 account for these additional conditions, it is possible to have the control unit 4 alter the shape of the respective element profiles, such that the total amplification performance is optimized, despite the existence of the additional conditions in which that Raman amplifier will operate.

As another example of how the control unit 4 may adjust the element profiles as a simplified control mechanism (as compared with simultaneously adjusting all of the pump lasers), suppose a tilted gain is observed when a flat gain is targeted. In this situation, the control unit 4 may correct for the tilted gain by adjusting the optical output of the first group of pumps and/or the second group of pumps. One adjustment process is to make incremental changes to the driving current for each pump until the total gain profile becomes readjusted to the relatively flat total gain profile "f" in Figure 15B. The driving current increments are then stored in the memory 1204 for quick retrieval when making adjustments to the total amplification profile in future situations.

The control unit 4 may be purposefully configured to impart a tilted gain by adjusting the levels of the element profiles. For example, a flat gain across the amplification band may be appropriate if the communication parameters in the optical communication link are uniform across the spectral band. However, loss in an optical fiber is wavelength dependent, and thus, some channels of the WDM signal may be attenuated more than others when transiting between cascaded amplifiers. In this case, the control unit 4 may offset this operating condition by "pre-emphasizing" the optical signals that tend to be attenuated more by adjusting the element profiles to create a tilted total

## Numeric Example of Using Groups of Pump Lasers to Set, and Maintain Amplification Gain Profiles

A numeric example will now be provided as a further explanation about how a simplified control process implemented in the control unit 4 can use groups of lasers to set and maintain an amplification gain performance within a predetermined tolerance of a target amplification performance. Assume a power level of respective WDM optical signals, e.g., channels 1-10, is uniform at -20dBm. Also assume a net target gain applied by the Raman amplifier is about 10dB, considering the internal losses imparted by the tap coupler and the WDM coupler. Consequently, the actual per channel output power level from the Raman amplifier should be uniform and have a value of about -10dBm (i.e., -20dBm + 10dB). The control unit 4 may keep as a stored value an indication that the output signal level, per channel is -10dBm. Thus, if the control unit 4, during its monitoring operation determines that the output signal per channel is above or below that -10dBm signal level by more than a specified amount, the control unit 4 can increase or decrease the element profile by an appropriate amount to counteract the deviation from the expected output level. For example, the control unit 4 may determine the following actual output power levels and corresponding deviations from the target value of -10dBm:

| Channel # | Actual output power level | Deviation from target |
|---|---|---|
| Channel 1: | -15.0dBm | 5.0dBm |

(continued)

| Channel # | Actual output power level | Deviation from target |
|---|---|---|
| Channel 2: | -14.5dBm | 4.5dBm |
| Channel 3: | -14.0dBm | 4.0dBm |
| Channel 4: | -13.5dBm | 3.5dBm |
| Channel 5: | -13.0dBm | 3.0dBm |
| Channel 6: | -12.5dBm | 2.5dBm |
| Channel 7: | -12.0dBm | 2.0dBm |
| Channel 8: | -11.5dBm | 1.5dBm |
| Channel 9: | -11.0dBm | 1.0dBm |
| Channel 10: | -10.5dBm | 0.5dBm |

The control unit 4 will then make the determination that a series (i.e., more than one) deviations exist between sample points and thus will adjust an element profile up or down in gain level. By observing the series of deviations, the control unit 4 has in effect determined the "secondary target amplification profile." The control unit may thus compensate for this deviation by increasing the element gain of the first group so as to create a more tilted total amplification profile that more closely matches the target amplification profile. Further adjustments to the first element profile may then be made by adjusting optical outputs of the pump lasers within the first group, if necessary.

Alternatively, the control unit 4 may refer to the memory to identify drive current adjustments that have previously been associated with the secondary target amplification profile that is presently observed. Moreover, the memory holds sets of drive current adjustment values for the respective pumps in the first and second groups that are prearranged to create particular secondary target amplification profiles. Since only a limited number of pre-stored secondary target amplification profiles can be held in memory, the control unit 4 performs a least-squares analysis, based on the observed secondary target amplification profile to select a "closest" pre-stored secondary target amplification profile. Other pattern recognition processes may be used as well to select appropriate pre-stored secondary target amplification profiles, for the purpose of retrieving the drive current settings associated with the pre-stored secondary target amplification profiles.

Alternatively, the control unit 4 can be configured to determine an average or mean value of the deviations and verify if this average or mean value is within an allowable tolerance. For example, the control unit 4 may determine that the average value of the deviations is zero, which in some instances may indicate that the amplification performance has been satisfied. If it is not within tolerance however, the control unit 4 would increase/decrease the element gains as appropriate to more closely close the gap between the actual output level profile and the target level profile (i.e., -10dBm in this example).

Further, the deviations shown above correspond to a difference between the actual output power level and the target output power level. Note, however, the control unit 4 may determine the drive currents from the superposition principle, as discussed above.

Example of Handling Additional Conditions When Creating Element Gain Profiles

Raman amplifiers will be placed in service in a variety of different operational conditions that may influence how an optimum target gain profile is identified for that operational environment. Information about the operational conditions (such as the pump-to-pump interaction shown as the difference between profiles "f" and "g" in Figure 16) is provided to the control unit 4 at step S2 (Figure 11) for selecting the optimum target profile. The source of this information may be found during equipment installation, or periodic recalibration. When a target gain profile "g" is initially given in step S2, yet an actual gain profile is observed like "f", this difference in actual from predicted performance is found in steps S8 and S10. The control unit 4 may observe this deviation as being attributable to the existence of pump-to-pump interaction, that had not originally been considered in steps S2 and S4 when establishing the target amplification performance. Once this observation is made, the process of Figure 11 may reestablish a new target profile in steps S2 and S4 that consider the existence of pump-to-pump interaction, rather than just simple superposition. In this case, with the modified process for developing the target amplification performance, the observed variation from target amplification performance to the monitored amplification performance should narrow, thus requiring less adjustment to maintain the predetermined gain profile.

This additional condition information (which in this case is the realization that there is pump-to-pump interaction) is also considered in steps S10 and S12 (Figure 11) when performing the monitoring and analyzing process steps. The information is useful since the additional conditions will be reflected in the target amplification profile, or in observed, consistent deviations from the target amplification profile. The output level of the pumps in each group may then be changed as necessary so as to maintain the target amplification performance (step S14).

For example, the control unit 4 may incrementally increase or decrease an output power of each pump in the first group so as to effect the element amplification profile of the first group. If the observed total gain profile is still not within the allowable tolerance of the target gain profile after this incremental increase or decrease, the control unit 4 may again incrementally increase or decrease the output power of each group of pumps.

A look-up table, such as that shown in Table 1, may be used to implement this incremental approach. That is, the control unit 4 may select a first profile #1 for the set of four pumps in the first group and read the driving currents from the table for each pump (i.e., a driving current of 500 mA for each pump). If the actual amplification profile does not equal the target amplification profile, the control unit may select profile #2 for the four pumps in the first group. This incremental approach may be continued until the actual amplification profile is within the allowable tolerance of the target amplification profile.

Table 1 - Group 1 (four pumps)

| Pump 1 | Pump 2 | Pump 3 | Pump 4 | Profile Number |
|--------|--------|--------|--------|----------------|
| 500mA | 500mA | 500mA | 500mA | #1 |
| 490 mA | 490 mA | 490mA | 490mA | #2 |
| 480 mA | 480 mA | 480 mA | 480 mA | #3 |

In addition, the look-up Table 1 may also be modified to store different drive currents corresponding to different types of amplification profiles.

For example, the look-up Table 2 shown below may be used by the control unit 4 to provide various element gain profiles for a specified group of pumps. The values in Table 2 were selected as examples to show that different sets of values may be selected.

Table 2 - Group 1 (four pumps)

| Pump 1 | Pump 2 | Pump 3 | Pump 4 | Profile Number |
|--------|--------|--------|--------|----------------|
| 560 mA | 311 mA | 122 mA | 244 mA | #1 |
| 560 mA | 500 mA | 440 mA | 330 mA | #2 |
| 480 mA | 480 mA | 480 mA | 480 mA | #3 |

In this example, the control unit 4 may determine that the gain profile #2 is suitable to offset a fiber loss characteristic (i.e., another "additional" condition). The control unit 4 may then read the necessary driving currents from the table to achieve a desired amplification profile for the first group of pumps. The control unit 4 may select the best profile (i.e., one that minimizes a difference between an actual output signal level and a target output signal level, considering the effects of any additional conditions such as fiber loss) from the table based on a variety of factors. For example, the control unit 4 may select profile #3 that provides the actual amplification performance, due to both the first and second groups having a profile 5 dB below a target gain profile. The control unit 4 may also determine this drop in gain occurs in the wavelengths corresponding to the pumps in the first group. The control unit 4 may then select profile #1 from Table 2 (which has previously been determined as the best profile to offset a loss of 5 dB or less, for example). Once profile #1 is selected, the driving currents associated with profile #1 are then retrieved from memory and applied to the respective pump lasers.

Examples of Having the Control Unit Substitute New Target Amplification Performances When Communication Conditions Change

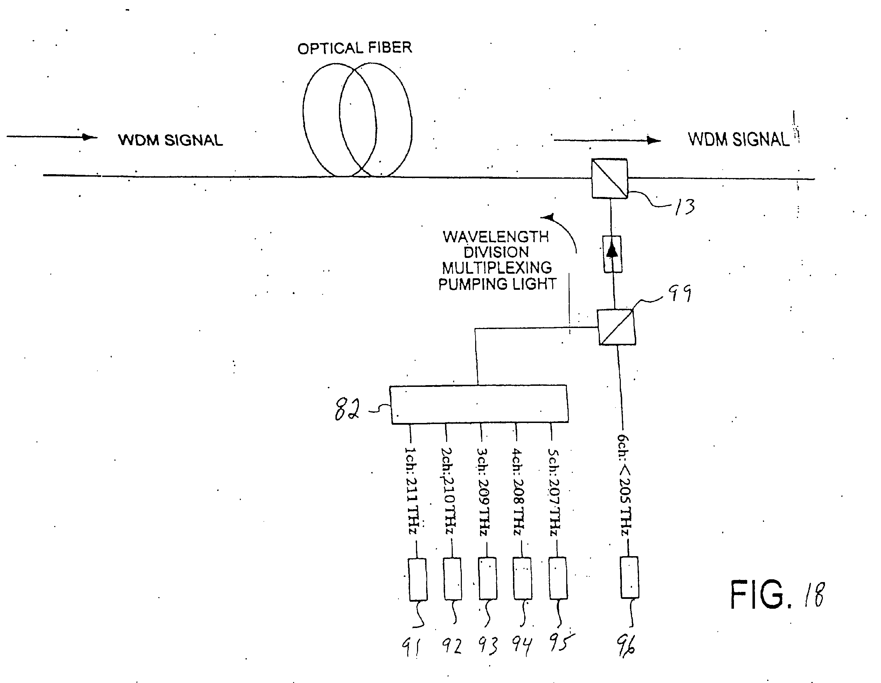

Using the control unit 4 and a special arrangement of the pumping device, the target amplification performance may be changed. In the examples that follow, the change of target amplification performance is explained in the context of attempting to provide a same system-level performance for an input WDM signal even though a system parameter has changed. Figures 17-35 illustrate different examples of the control unit 4 exerting control over the pump lasers so as to produce a target amplification gain profile that yields a same overall system performance for an input WDM signal, even though the communication conditions may have changed.

Selecting a Subset of Equally Separated Pump Lasers

Figure 17 is a schematic of another pumping device 71 according to the present invention, which includes "slots" for eight pump lasers 81-88 coupled by a Mach-Zehnder interferometer 90. In addition, each slot for the pumps 81-88 are separated by an equal wavelength (i.e., by 7.5 nm) and produce the same output value. However, note in this example, that pump lasers 85 and 87 are not used. This may be accomplished by simply not installing these pumps into the pumping device 71. Alternatively, the control unit 4 may simply not apply driving currents to pumps 85 and 87. This alternative embodiment enables the production of a "generic pumping device" that may be configured/reconfigured after it is placed in a particular operational situation. In this way, each amplifier need not be custom fit to a particular place in a communication network, but rather the generic amplifier may be remotely configured by the remote device controller (4000) that downloads operational parameters to the Raman amplifier. In this case, it is possible that at least some fraction of the pump lasers will not be used by the control unit 4 to create the target amplification performance. (Although not shown in Figure 17, the control unit 4 asserts control over the pump lasers 81-88 by way of control lines so as to switch the pump lasers in or out of the pumping device 71, or alternatively by asserting control over the driving circuits).

In this example, the total power of the pumps included in the first group, at the shortest wavelength side (i.e., the total power due to pumps 81, 82, 83 and 84) is greater than a total power due to the pumps in the second group at the longer wavelength side (i.e., the total power due to pumps 86 and 88). This provides a flat amplification profile since the control unit 4 adjusts the levels of the pump lasers in the first group and the second group to form element profiles that result in a flat profile when combined. In Figure 17, the pumps in each of the respective groups produce the same output power, but the total output power due to the pumps operating at the longer wavelength side is set to be sufficiently high to maintain the flat gain profile even though only a subset of the pumps (i.e., pumps 85 and 87) is used.

After the element profiles are established, the control unit 4 may monitor the actual WDM signal and control each operating pump so as to maintain the target amplification gain profile (as previously described with reference to Figure 11). Alternatively, the control unit 4 may monitor and control the actual amplification profile with respect to two groups of pumps.

Changing an Amplification Bandwidth

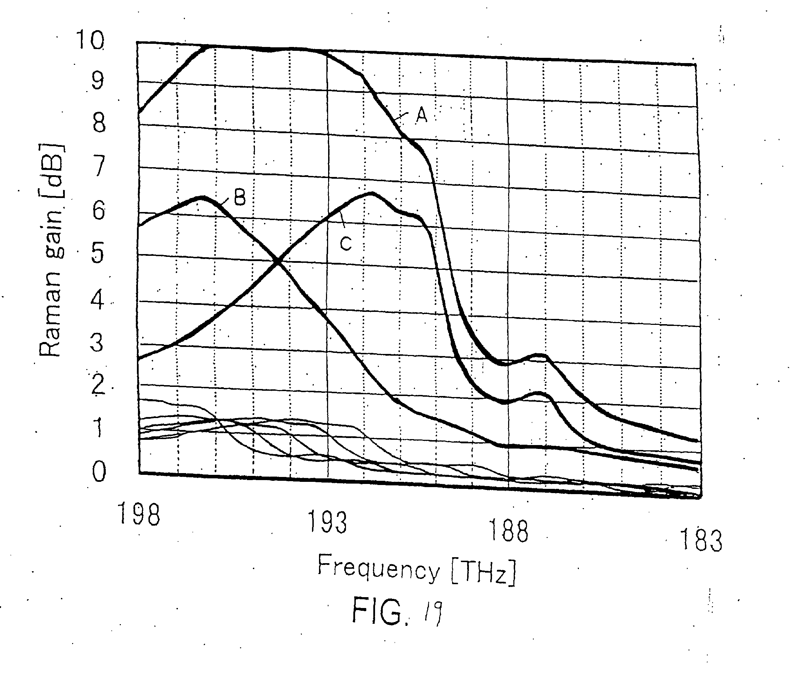

The amplification bandwidth can be expanded or contracted by changing the contributions from pump lasers at the shortest and longest wavelengths in the group of pump lasers. Figure 18 illustrates another example in which this can be accomplished. It should be noted that in Figure 18, the center frequencies of the pump lasers are shown, rather than the central wavelengths. As shown, the center frequency of the first pump 91 is 211 THz (a wavelength of 1420.8 nm) and the center frequency of the fifth pump 95 is 207 THz (a wavelength of 1448.3 nm). The pumps 91-95 are spaced apart from each other at an interval of 1THz and the light output from the pumps 91-95 are combined via the WDM combiner 82 to form a shorter wavelength group. This combined light is then combined via a coupler 99 with light output from the longer wavelength group that includes a pump 96 operating at a frequency of 205 THz (a wavelength of 1462.4 nm), which is spaced apart from the fifth pump 95 by 2 THz.

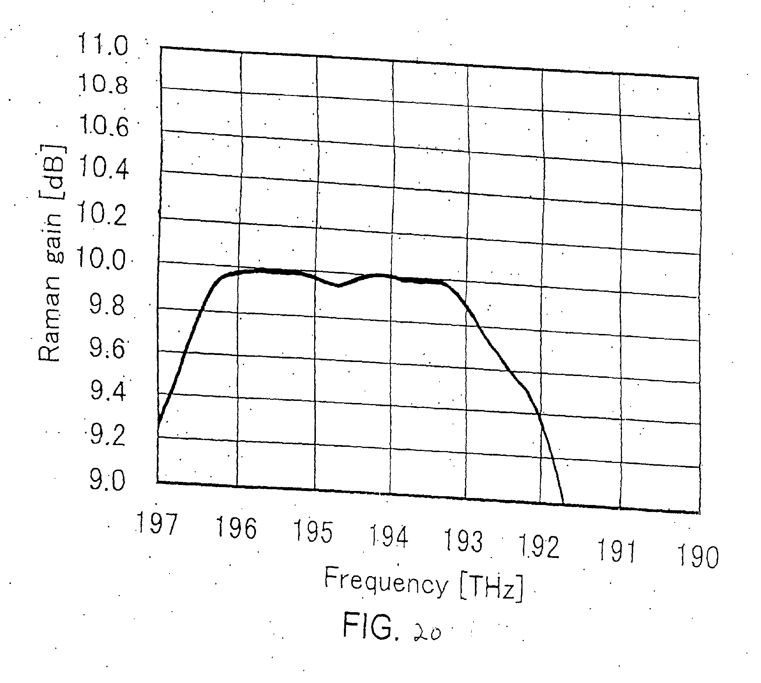

Figure 19 illustrates Raman amplification profiles for the pumps 91-96 shown in Figure 18. The curve "A" represents a total amplification profile due to all of the pumps 91-96, the curve "B" represents a sum of the amplification profiles due to a group of shorter wavelengths of the first five pumps 91-95, and the curve "C" represents an amplification profile due to the sixth pump 96. The thin lines in Figure 19 correspond to amplification profiles for each of the first five pumps 91-95. By multiplexing the light output from the pumps 91-95 spaced at intervals of 1 THz, a smooth curve extending rightwardly and downwardly is formed (i.e., curve "B"). In addition, by adding the curve "B" to an amplification profile extending rightwardly and upwardly (in Figure 19) due to the light output from the sixth pump 96 (i.e., curve "C"), a total Raman amplification profile is substantially flat as shown by the curve "A". Further, as shown by the thin lines in Figure 19, a projection of a first amplification curve and a recess of another amplification curve mutually cancel each other when the interval is 1 THz.

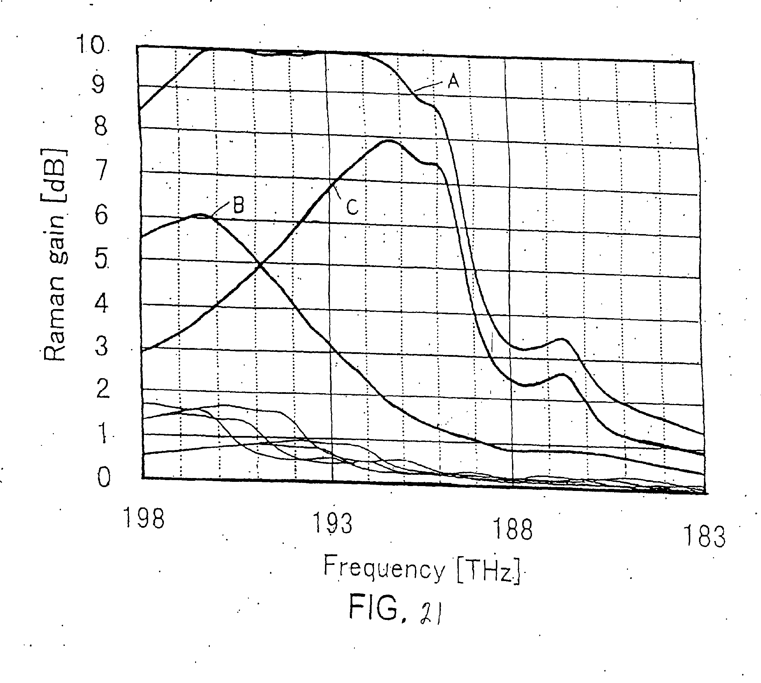

Figure 20 is a graph illustrating an enlarged view of the total amplification curve "A" shown in Figure 19. As shown, the amplification bandwidth at 10 dB extends from about 196 THz (a wavelength of 1526.6 nm) to about 193 THz (a wavelength of 1553.3 nm) and a gain deviation of about 0.1 dB is achieved.

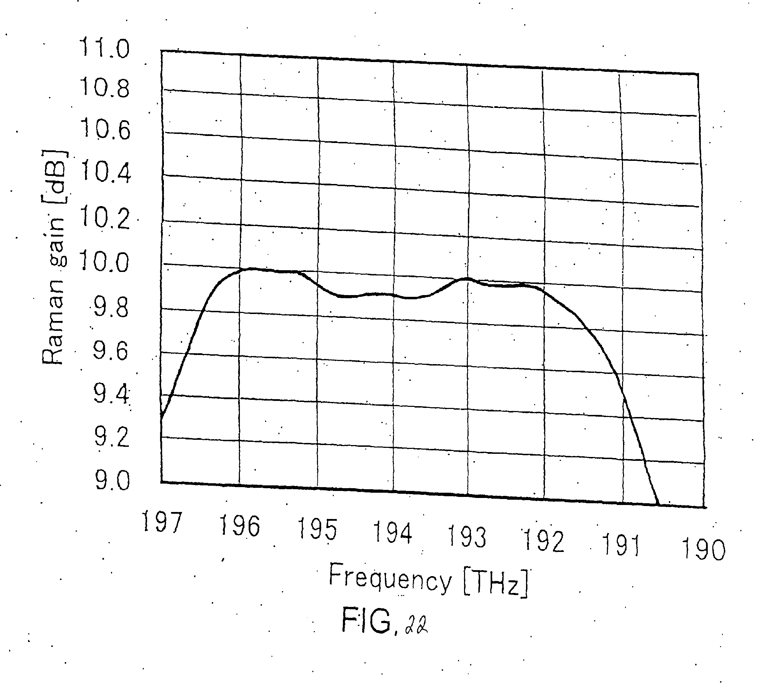

Figure 21 shows amplification profiles when the center frequency of the pump 96 in Figure 18 is spaced apart from the fifth pump 95 by 2.5 THz (rather than being spaced apart from the fifth pump 95 by 2.0 THz as in Figure 18). Similar to Figure 19, the curve "A" represents the total amplification profile, the curve "B" represents the sum of amplification profiles due to the first five pumps 91-95, and the curve "C" represents an amplification profile of the sixth pump 96. Further, the thin lines represent individual amplification profiles of the first five pumps 91-95.

Figure 22 is an enlarged view of the total amplification curve "A" shown in Figure 21. As shown, the peak amplification is at 10 dB, the amplification bandwidth extends from about 196 THz (a wavelength of 1529.6 nm) to about 192 THz (a wavelength of 1561.4 nm) and an amplification deviation of about 0.1 dB is achieved. Further, the amplification bandwidth is wider than that in Figure 20, but a larger ripple occurs at a middle portion of the bandwidth. The ripple is caused because the interval between the fifth pump 95 and the sixth pump 96 is larger (i.e., 2.5 THz rather than 2.0 THz). Thus, in Figure 22, a larger amplification bandwidth is achieved, but there is a larger ripple at a middle portion of the bandwidth. The expansion in bandwidth can be controlled by incorporating, and actuating spare pump lasers at set intervals below the center frequency of the pump laser that produces the shortest wavelength used to develop profile "B", and above a center frequency of longest wavelength used to develop profile "C" in Figure 19. While, the spare pumps are more expensive to install than not including spare pumps, the Raman amplifier is quickly and easily reconfigured from a remote device controller 4000 (Figure 6) to adjust an amplification bandwidth.

Example optimized 1THz Spacing

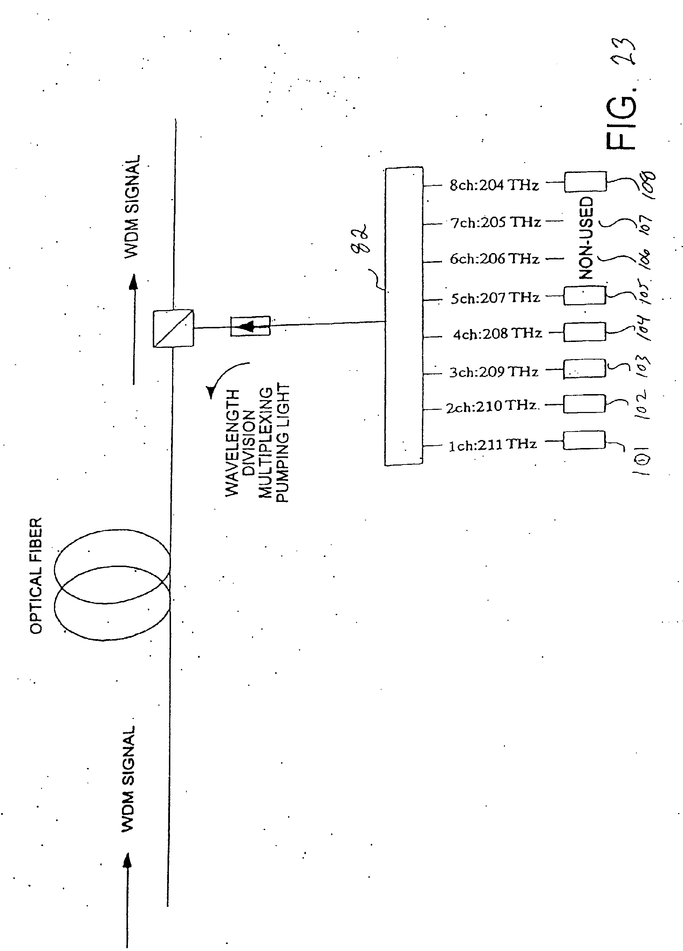

Figure 23 is a schematic illustrating yet another Raman amplifier example according to the present invention. In this example, the frequency of the first pump 101 is 211 THz (a wavelength of 1420.8 nm) and the frequencies of the second to eighth pumps 102-108 are from 210 THz (a wavelength of 1427.6 nm) to 204 THz (a wavelength of 1469.6 nm). Each slot for the pumps 101-108 is spaced apart from each other by an interval of 1 THz. Note again, however, that the pumps 106 and 107 are not used (although they may remain in the Raman amplifier to enable for dynamic reconfiguration of the amplification bandwidth, discussed above). In addition, the wavelength interval between adjacent operating pumps is within an inclusive range from 6 nm to 35 nm. Further, the number of pumps operating at the shorter wavelength side (with respect to the middle wavelength between the shortest and longest center wavelengths) is greater than the number of pumps operating at the longer wavelength side. That is, the middle frequency between the first pump 101 and eighth pump 108 is at about 207.5 THz. Thus, pumps 101-104 (i.e., four pumps) are operating on the shorter wavelength side and pumps 105 and 108 (i.e., two pumps) are operating on the longer wavelength side.

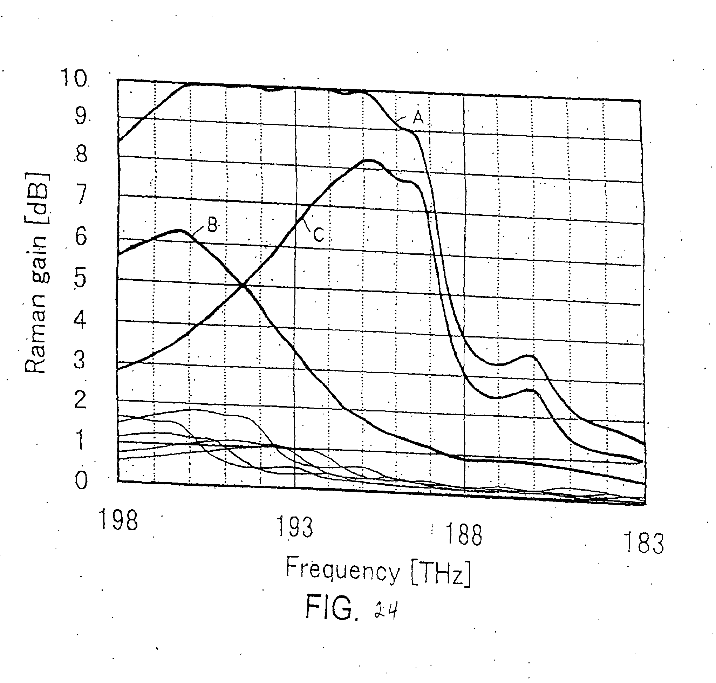

Figure 24 illustrates Raman amplification profiles that are produced when the pumps 101-105 and 108 shown in Figure 23 are used. The curve "A" represents the total amplification profile, the curve "B" represents the sum of amplification profiles due to the first five pumps 101-105, and the curve "C" represents an amplification profile due to the eighth pump 108. In addition, the thin lines represent individual amplification profiles of the first five pumps 101-105.

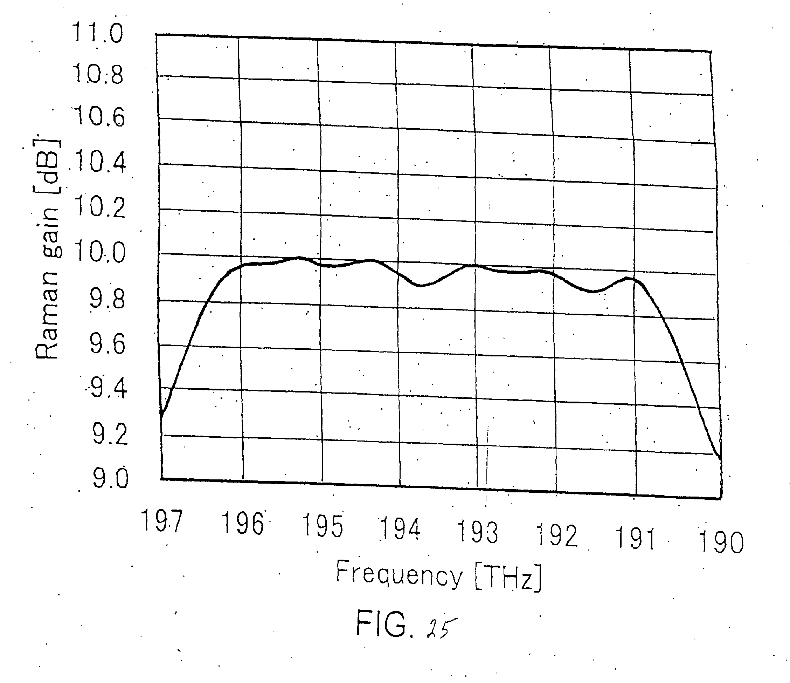

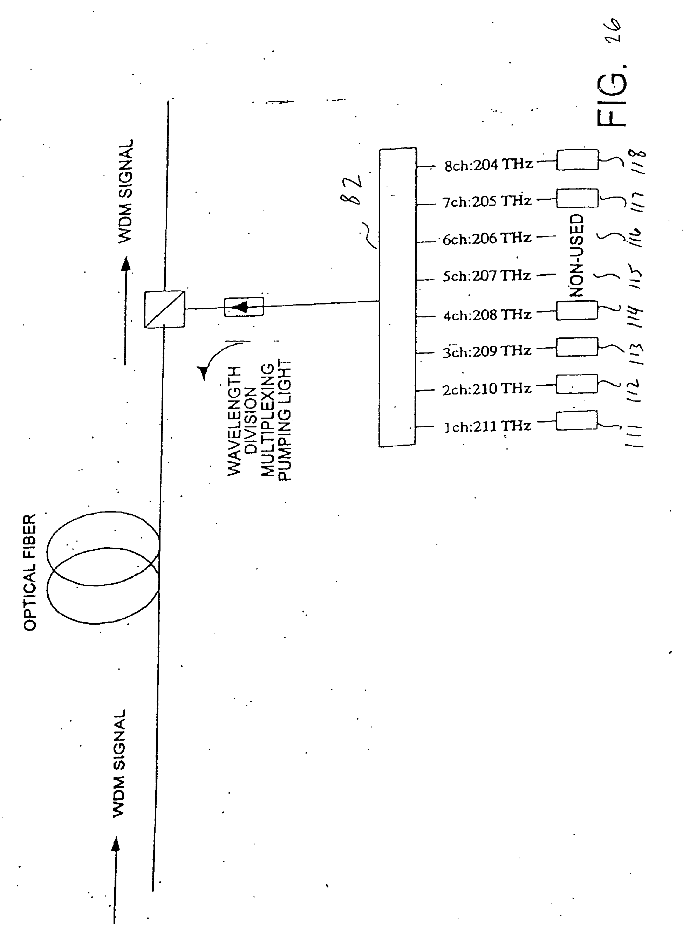

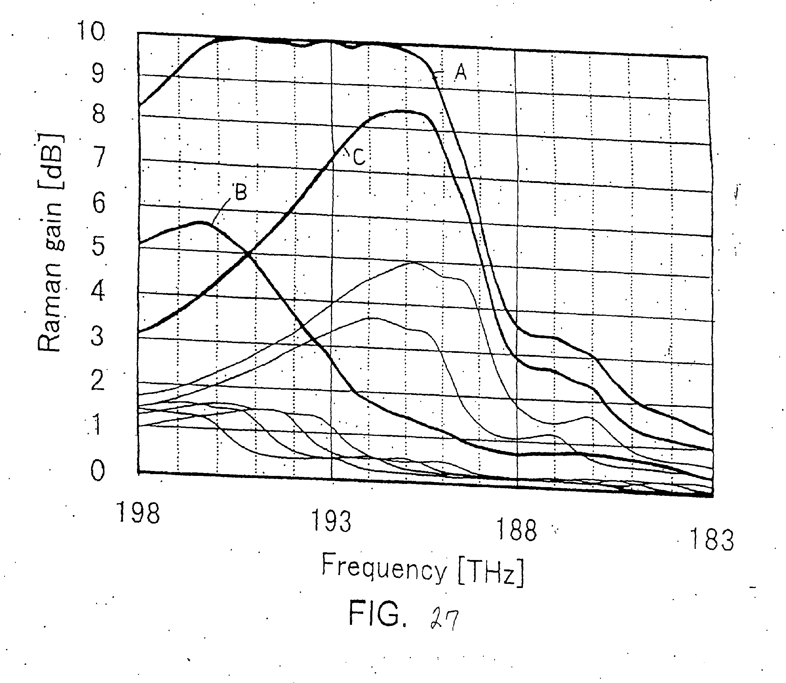

Figure 25 is an enlarged view of the total amplification curve "A" in Figure 24. As shown, the peak amplification is at 10 dB, the amplification bandwidth extends from about 196 THz (a wavelength of 1529.6 nm) to about 191 THz (a wavelength of 1569.6 nm) and the amplification deviation is about 0.1 dB. Note the amplification bandwidth is wider than the amplification bandwidths shown in Figures 20 and 22. The reason is because the eighth pump 108 is spaced at a larger interval (i.e., 3 THz) from the adjacent operating pump 105.

Another Example of Optimized 1THz Spacing

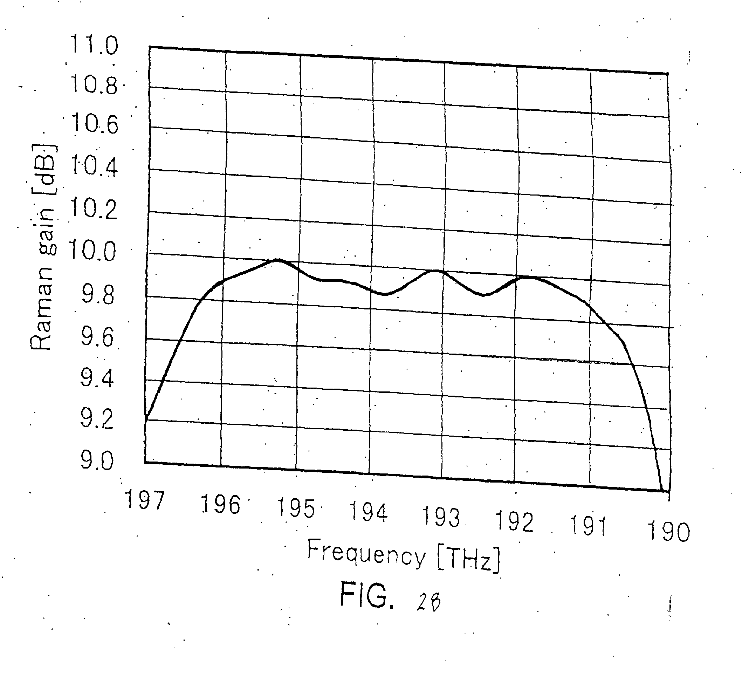

Figure 26 is a schematic illustrating still another Raman amplification example according to the present invention. The frequency of the first pump 111 is 211 THz (a wavelength of 1420.8 nm) and the frequencies of the second to eighth pumps 112 to 118 are from 210 THz (a wavelength of 1427.6 nm) to 204 THz (a wavelength of 1469.6 nm). In addition, each slot for the pumps is spaced at an interval of 1 THz. In this example, the fifth and sixth pumps 115 and 116 are not used. Further, the interval between operating adjacent pumps is within an inclusive range of 6 nm to 35 nm, and the number of pumps on the shorter wavelength side is greater than the number of pumps on the longer wavelength side.

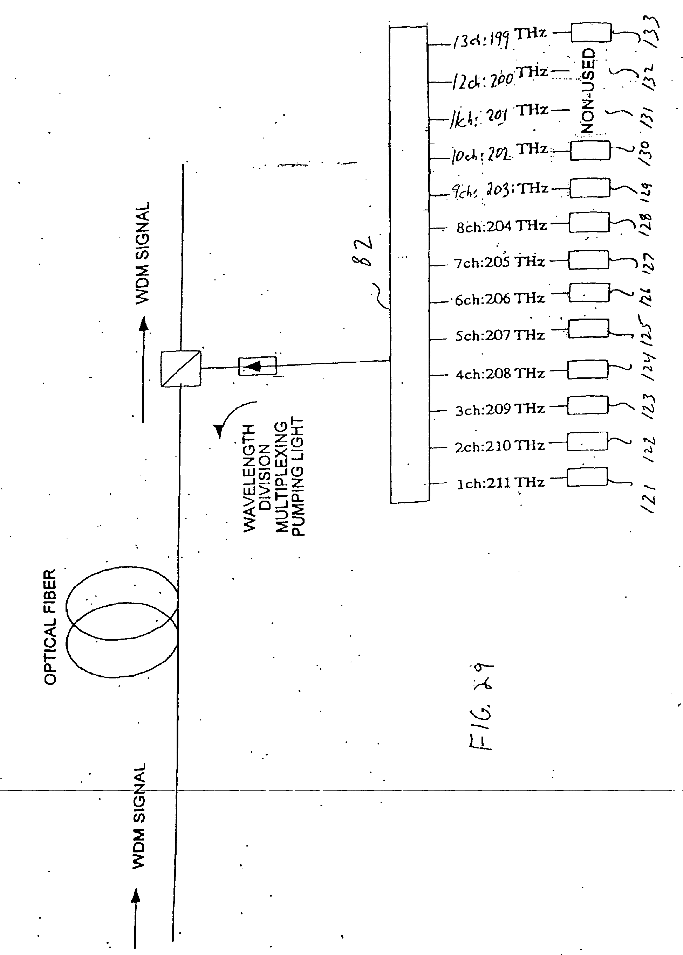

Figure 27 illustrates Raman amplification profiles for the pumps 111-114 and 117-118 shown in Fig. 26. The curve "A" represents the total amplification profile, the curve "B" represents the sum of the amplification profiles due to the first four pumps 111-114, and the curve "C" represents the sum of the amplification profiles due to the seventh and eighth pumps 117 and 118. The thin lines represent the amplification profiles due to each of the operating pumps 111-114 and 117-118.

Figure 28 is an enlarged view of the total amplification curve "A" in Figure 27. As shown, the peak amplification is at 10 dB, the amplification bandwidth extends from about 196 THz (a wavelength of 1529.6 nm) to about 191 THz (a wavelength of 1569.6 nm) and the amplification deviation is about 0.1 dB. Further, in this example, note the amplification curve "C" in Figure 27 is formed from the individual amplification profiles of pumps 117 and 118, whereas the amplification curve "C" in Figure 24 is formed from the single pump 108 (see Figure 23). In addition, the maximum gain created by the pumps 117 and 118 is about 5dB (see Figure 27), whereas the maximum gain created by the single pump 108 is about 8dB. Thus, in Figure 27, the two pumps 117 and 118 can be driven at a smaller output power compared to driving a single pump.

Further Example of Optimized 1THz Spacing

Figure 29 is a schematic illustrating still another Raman amplification example according to the present invention. In this example, the pumping device includes a set of thirteen pumps 121-133. Each of the pumps is separated by 1 THz and the first pump 121 has a center frequency of 211 THz (a wavelength of 1420.8 nm) and the thirteenth pump 133 has a center frequency of 199 THz (a wavelength of 1506.5 nm). The eleventh and twelfth pumps 131 and 132 are not used (i.e., either the pumps are not installed or the control unit 4 does not apply a driving current to the pumps 131 and 132). In addition, the interval between adjacent operating pumps is within an inclusive range of 6 nm to 35 nm, and the number of pumps on the shorter wavelength side is greater than on the longer wavelength side.

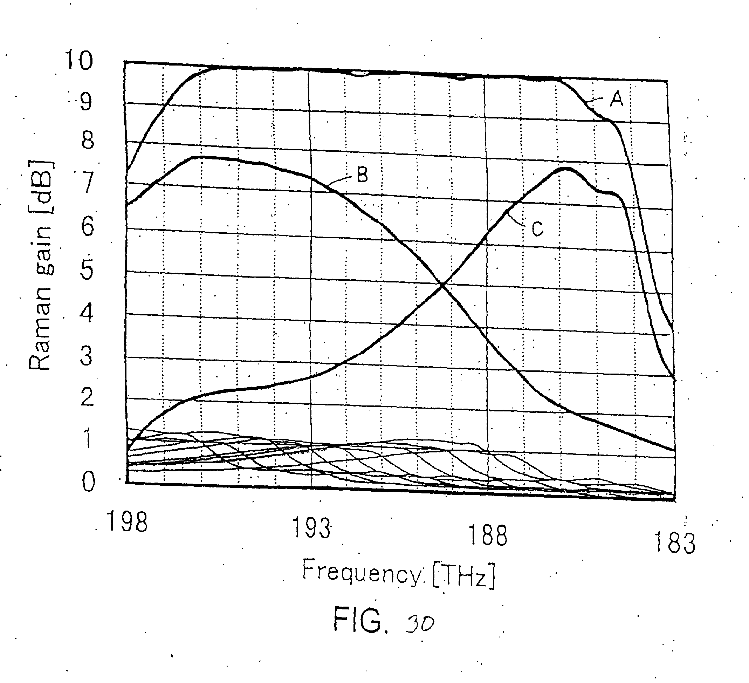

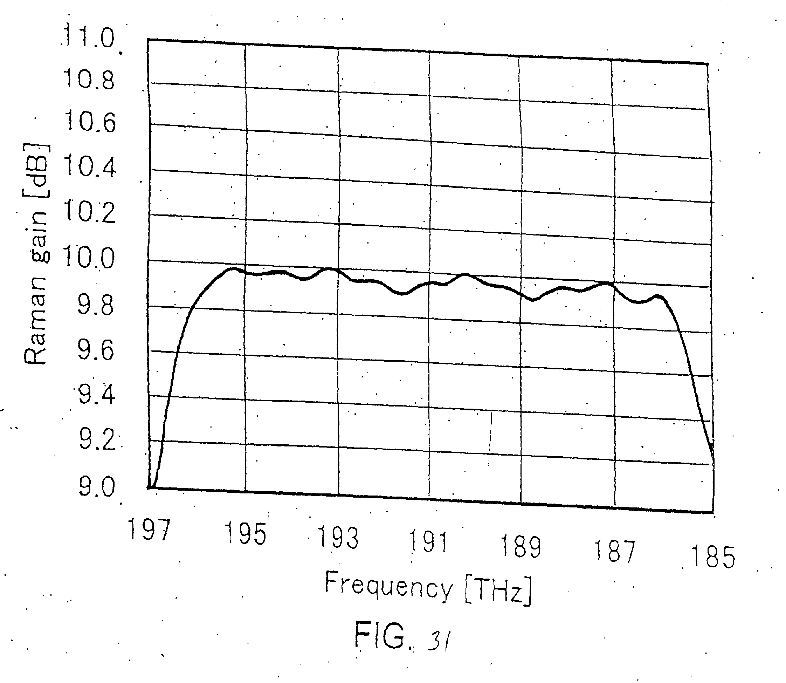

In Figure 30, the curve "A" represents the total amplification profile, the curve "B" represents the sum of the amplification profiles due to the first to tenth pumps, and the curve "C" represents the amplification profile of the thirteenth pump. Further, the thin lines represent the individual amplification profiles of the first to tenth pumps. Figure 31 is an enlarged view of the total amplification curve "A" in Figure 30. As shown, the peak amplification is at 10 dB, the amplification bandwidth extends from about 196 THz (a wavelength of 1529.6 nm) to about 186 THz (a wavelength of 1611.8 nm) and the gain deviation is about 0.1 dB. Thus, by adding new pumps toward the longer wavelength, the gain profile can be expanded. When target performance is changed from the one in Fig. 24 and 27, pump configuration should be changed from Fig.23 to Fig. 26. When the "spare" pump lasers are already resident in the Raman Amplifier, the change in bandwidth, as discussed with regard to the embodiments of Figures 17, 18, 23, 26 and 29 can be accomplished by the control unit 4 (not shown in these figures) switching the appropriate spare pumps into/out-of the pumping circuit. The control unit 4 may implement the change in bandwidth in response to a command message sent from the remote device controller 4000, by way of the network 3000 (see, e.g., Figure 4).

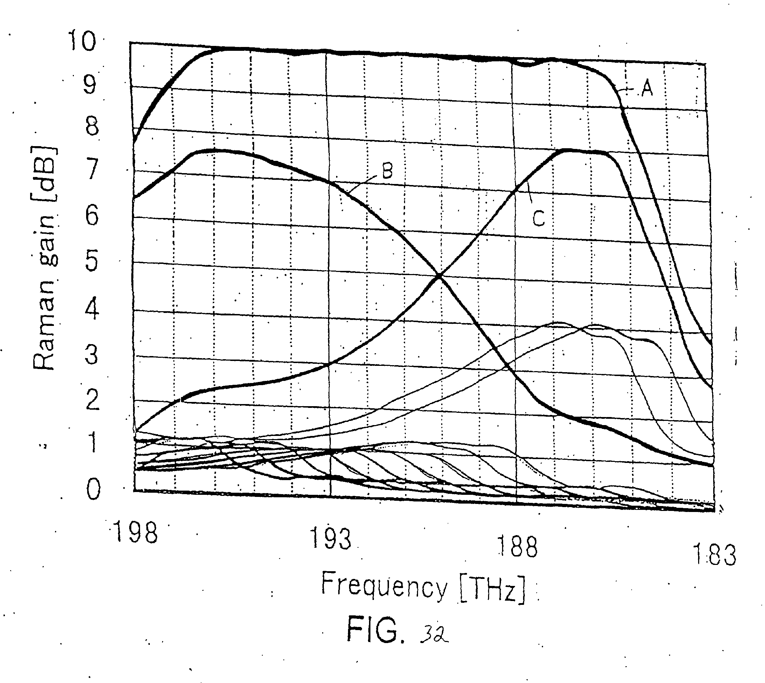

Figure 32 illustrates amplification profiles for an example in which the pumps 130 and 131 are not used (rather than the pumps 131 and 132), as determined by the control unit 4. In addition, the interval between the adjacent operating pumps is within an inclusive range of 6 nm to 35 nm, and the number of pumps on the shorter wavelength side is greater than on the longer wavelength side. In Figure 32, the curve "A" represents the total amplification profile, the curve "B" represents the sum of amplification profiles due to the first to ninth pumps, and the curve "C" represents the sum of the amplification profiles of the twelfth and thirteenth pumps. The thin lines represent the individual amplification profiles of the operating pumps.

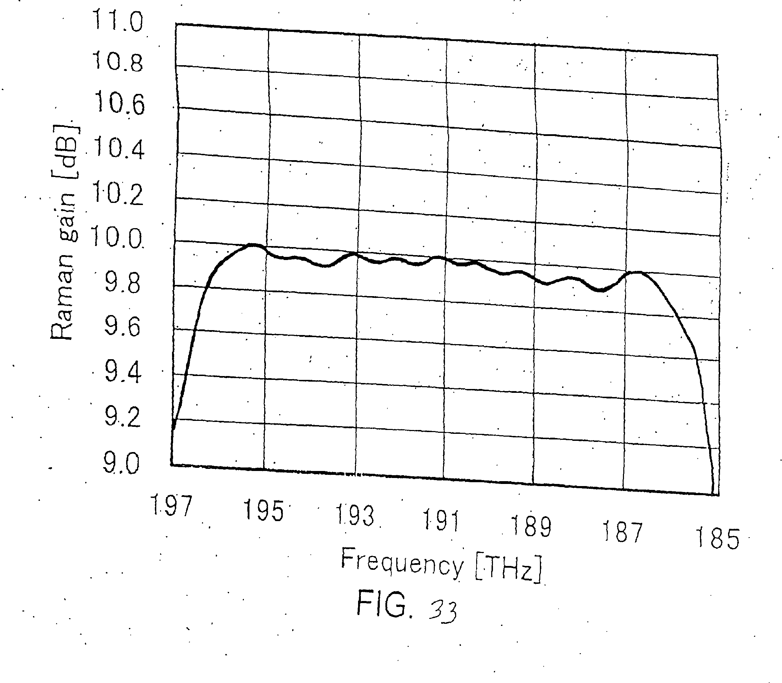

Figure 33 is an enlarged view of the total amplification curve "A" in Figure 32. As shown, the peak amplification is at 10 dB, the amplification extends from about 196 THz (a wavelength of 1529.6 nm) to about 186 THz (a wavelength of 1611.8 nm) and the amplification deviation is about 0.1 dB. Further, as evident from a comparison of the curves "C" in Figures 30 and 32, two pumps can be driven at a lower output value (as in Figure 32), rather than by driving a single pump at a higher output power (as in Figure 30).

Example Process for Changing a Target Profile With Altered Bandwidth

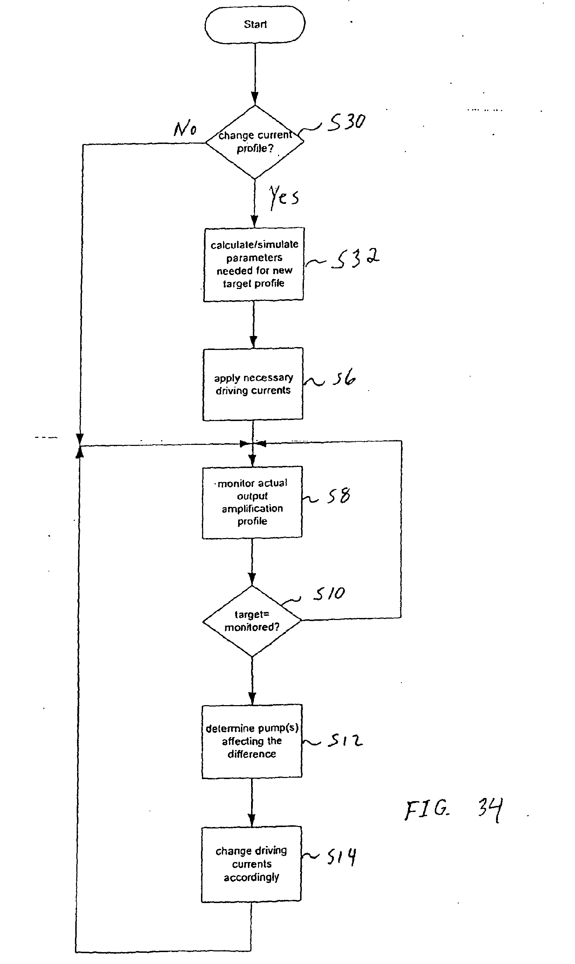

Figure 34 is a flowchart illustrating an operational procedure of the control unit 4 according to the present invention. Steps S6, S8, S10, S12 and S14 are the same as that described in Figure 11, and accordingly a detailed description of these steps will be omitted. The difference between the operational procedure shown in Figure 34 and that shown in Figure 11 is the control unit 4 changes an existing amplification profile (step S30) to a new target amplification performance with a different amplification bandwidth. For example, an amplification bandwidth may need to be increased so as to accommodate additional channels (e.g., as the network grows in capacity). In this instance, a network engineer may instruct the control unit 4 (e.g., via the keyboard and mouse, or remotely via the remote device controller 4000, see Figure 4) to increase (or decrease) the amplification bandwidth.

The control unit 4 then determines the parameters to produce the new target profile (step S32). For example, as discussed above with reference to the total amplification profiles shown in Figures 20, 22, 25, 28, 31 and 33, an amplification bandwidth may be increased by increasing the wavelength separation of the pump having a largest central wavelength from the pump having the next largest central wavelength. That is, the amplification bandwidth in Figure 20 is produced by the arrangement shown in Figure 18 (in which the pump 96 is separated by 2 THz from the pump 95), the amplification bandwidth in Figure 21 is produced by separating the pump 96 from the pump 95 by 2.5 THz, and the amplification bandwidth in Figure 25 is produced by separating the pump 108 (see Figure 23) from the pump 105 by 3 THz. Thus, the control unit 4 may dynamically change the wavelength spacings between pumps by turning on or off spare pumps so as to change an existing amplification profile. For example, assume a pumping device includes seven pumps each separated at a wavelength interval of 1 THz. Then, according to the second aspect of the present invention, the control unit 4 may only apply driving current to the first through fifth pumps and the seventh pump. This would result in a similar arrangement as that in shown in Figure 18.

In another example, the control unit 4 may determine a certain pump is not operating at a required output power, and then turn on or off certain pumps to offset the failing pump. For example, with reference to Figure 23, assume the eighth pump 108 is not properly producing a gain of 8 dB, but rather is producing a gain of 5 dB. In this instance, the control unit 4 may apply a driving current to seventh pump 107 (which was previously turned off) so the pump 107 produces a gain of 5 dB. Note this example is similar to that shown in Figure 26, in which two adjacent pumps may be operated to produce a gain of 5 dB each, rather than one pump operating at a gain of 8 dB. That is, the fifth pump 105 may be turned off in order to operate like the pumping device shown in Figure 26.

Thus, the control unit 4 may be configured to change an existing Raman amplification profile to have a different amplification bandwidth. This change may be initiated via an external command from a network engineer (locally or remotely) or may be requested by the control unit 4 itself. That is, as discussed above, the control unit 4 may determine a certain pump is not producing the required gain (i.e., via the monitoring capabilities of the control unit 4) and then change an existing amplification profile.

Turning now to Figure 35, which is a schematic for illustrating an operational procedure according to the another aspect of the present invention. In more detail, Figure 35 illustrates three cascaded Raman amplifiers 30, 32 and 34, which are remotely controlled by the remote device controller 4000. In this example, the remote device controller 4000 may change a total amplification profile in a first Raman amplifier to effect changes in a next Raman amplifier. For example, the remote device controller 4000 may determine a pump (or pumps) in the Raman amplifier 32 is not operating. The remote device controller 4000 may then increase a corresponding pump output power operating in the Raman amplifier 30 to offset the effect caused by the pump which does not operate in the Raman amplifier 32. Note that the remote device controller 4000 may also increase a corresponding pump output power in the Raman amplifier 34 to offset the effect caused by the pump not operating in the Raman amplifier 32. That is, the remote device controller 4000 is capable of controlling an entire operation of a plurality of cascaded Raman amplifiers such that an overall operation of the network is enhanced.

In addition, the remote device controller 4000 may be connected to each of the Raman amplifiers via an Internet connection (as discussed previously). Thus, a network engineer may effectively monitor the network via the remote device controller 4000. The remote device controller 4000 may include a web site that is accessible from other locations as well, via an Internet Browser, such as MICROSOFT EXPLORER. In this case, the operational status of each Raman amplifier 30, 32, and 34 may be monitored continuously. Each Raman amplifier 30, 32, and 34 may include a built-in reporting mechanism that provides periodic status messages to the remote device controller 4000. Alternatively, the remote device controller can download a Java or ActiveX file to each of the Raman amplifiers 30, 32, and 34, which may then operate to collect status data for automatic report-back to the remote device controller 4000. In this way, a network operator may observe the different target amplification profiles being employed in the respective Raman amplifiers 30, 32, 34 and take corrective action to help balance operations at a system level, to optimize performance at the system level.

The remote device controller 4000 and respective Raman amplifiers each employ communications interfaces and processing software to enable the uploading and downloading of active content for inspection by network operators and technicians located at any of amplifiers or controller 4000, but also at remote locations via the world wide web. How the world wide web operates, including communication tools such as web browsers and web pages is discussed at pages 122-166 of Gralla, P., "How The Internet Works", Que, 1999.

Similarly, the transfer of active content between network resources in discussed in Gralla, pages 170-210.

This invention may be conveniently implemented using a conventional general purpose digital computer or microprocessor programmed according to the teachings of the present specification, as will be apparent to those skilled in the computer art. Appropriate software coding can readily be prepared by skilled programmers based on the teachings of the present disclosure, as will be apparent to those skilled in the software art. The invention may also be implemented by the preparation of application specific integrated circuits or by interconnecting an appropriate network of conventional component circuits, as will be readily apparent to those skilled in the art.

The present invention includes a computer program product which is a storage medium including instructions which can be used to program a computer to perform a process of the invention. The storage medium can include, but is not limited to, an type of disk including floppy disks, optical disks, CD-ROMs, and magneto-optical disks, ROMs, RAMs, EPROMs, EEPROMs, magnetic or optical cards, or any type of pure software inventions (e.g., word processing, accounting, Internet related, etc.) media suitable for storing electronic instructions.

Obviously, additional numerous modifications and variations of the present invention are possible in light of the above teachings. It is therefore to be understood that within the scope of the appended claims, the present invention may be practiced otherwise than as specifically described herein.

**Claims**

1. A controller for a Raman amplifier having a plurality of pump lasers including a light source configured to produce a light having a predetermined wavelength, said laser light being configured to produce an amplification profile in a Raman gain medium when applied thereto, said amplification profile is a first amplification band, the controller (4) comprising:

a memory (1204) configured to hold computer-readable instructions and data; and
a processor (1203) having an interface (1213) configured to communicate with external devices, said processor (1203) configured to execute said computer-readable instructions and implement a target setting mechanism and a parameter application mechanism, wherein said target setting mechanism is configured to identify a target performance and corresponding operating parameters for the plurality of pump lasers (3) to achieve the target performance, said target performance relating to an operational condition provided to said processor from at least one of said external devices, said target performance being at least one of a predetermined amplification performance that is specified across an amplification bandwidth, said amplification bandwidth being at least as large as a signal bandwidth of a WDM optical signal that is amplified by a Raman amplifier(100; 30, 32, 34) while propagating through an optical fiber (2), and an output signal level performance that is specified across said amplification bandwidth, and said parameter application mechanism is configured to output at least one control signal that defines said operational parameters so as to adjust an amount of light introduced into said optical fiber (2) from said plurality of pump lasers (3) to achieve an actual performance that is within a predetermined tolerance of said target performance

wherein the controller (4) is configured to change an operating status of the light source when said controller (4) causes a change from said first amplification band to a second amplification band, wherein said operational status is one of:

a) an on-status or an off status;
b) an increase or decrease in pump power operating in a Raman amplifier (100; 30, 32, 34).

2.  The controller of claim 1, wherein said target setting mechanism is adapted to identify said operating parameters by simulation to achieve an actual performance that is within the predetermined tolerance of said target performance.

3.  The controller of claim 1, wherein said target setting mechanism is configured to retrieve from memory (1204) operating parameters for the pump laser (3) to achieve an actual performance that is within the predetermined tolerance of the target performance.

4.  The controller of claim 3, wherein said memory (1204) is adapted to store said operational conditions in association with said target performance.

5.  The controller of claim 1, wherein said target performance being the predetermined amplification performance; and said target setting mechanism is configured to calculate said predetermined amplification performance from a sampled WDM output signal and a sampled input signal.

6.  The controller of claim 5, wherein said processor (1203) is configured to adjust said operating parameters so as to maintain an actual output performance within the predetermined tolerance of said target amplification performance.

7.  The controller of claim 1, wherein said target performance is said output signal level performance; and said target setting mechanism is configured to monitor the WDM optical signal when output from said Raman amplifier (100; 30, 32, 34) so as to determine an actual amplification performance.

8.  The controller of claim 7, wherein said processor (1203) being configured to receive an indication of a level of an input WDM signal; and calculate an amplification gain of said Raman amplifier (100; 30, 32, 34) by calculating a ratio of said WDM optical signal when output to said input signal so as to determine if an amount of amplification provided by said Raman amplifier (100; 30, 32, 34) is consistent with said target performance.

9.  The controller of claim 7, wherein said processor (1203) is configured to determine a level of the WDM optical signal when input to said Raman amplifier (100; 30, 32, 34) from output signal level data provided by an adjacent Raman amplifier, wherein said adjacent Raman amplifier is connected to an input of said Raman amplifier (100; 30, 32, 34) by said optical fiber (2), said processor (1203) being configured to calculate a level of said WDM optical signal by comparing the signal level data and fiber loss data.

10. The controller of claim 7, wherein said processor (1203) is configured to monitor said WDM optical signal when output from the Raman amplifier (100; 30, 32, 34) with at least as many sample points as WDM channels in the WDM optical signal.

11. The controller of claim 10, wherein said processor (1203) is configured to receive separate spectral samples of the WDM optical signal from a demultiplexer (18) that separates the WDM optical signal into a plurality of signals.

12. The controller of claim 7, wherein said processor (1203) is configured to monitor a WDM output signal of said Raman amplifier (100; 30, 32, 34) by monitoring at least as many samples taken at different wavelengths as a number of said pump lasers (3) in said Raman amplifier (100; 30, 32, 34).

13. The controller of claim 7, wherein said processor (1203) monitors the WDM output signal by monitoring a predetermined number of samples taken at different wavelengths, said predetermined number of samples being in a range bounded by a number of the pump lasers (3) in the Raman amplifier (100; 30, 32, 34) and a number of WDM channels in said WDM optical signals.

14. The controller of claim 6, wherein said processor (1203) is configured to compare said sampled WDM output signal with said target performance and determine if a deviation there between is greater than a predetermined tolerance.

15. The controller of claim 14, wherein if the deviation is greater than the predetermined tolerance, the processor (1203) is adapted to incrementally adjust an output power of at least one of the plurality of pump lasers (3) that has a gain profile that corresponds in wavelength with a band of wavelengths in which the deviation occurred.

16. The controller of claim 15, wherein if the deviation is greater than the predetermined tolerance, the processor (1203) is adapted to adjust an output of a group of the plurality of pump lasers (3), said group containing pump lasers (3) that have adjacent operating wavelengths with respect to an entire set of operating wavelengths for the plurality of pump lasers(3).

17. The controller of claim 14, wherein said processor (1203) is adapted to determine if respective samples of the WDM output signal are not within said predetermined tolerance according to an equation:

$$\text{ABS [target - monitored]} \leq \text{predetermined tolerance.}$$

18. The controller of claim 17, wherein if only one sample in a series of samples is greater than the predetermined tolerance, the processor (1203) is adapted to identify which of said plurality of pump lasers(3) produces a Raman gain profile having a gain peak closest to a wavelength in which the deviation occurred.

19. The controller of claim 18, wherein said parameter application mechanism is configured to adjust an amount of pump light from an optical pump (1) including said pump lasers (3) that produces the Raman gain profile having a gain peak closest to the wavelength in which the deviation occurred.

20. The controller of claim 17, wherein if more than one adjacent sample is greater than said predetermined tolerance, said processor (1203) is adapted to develop a secondary target amplification profile.

21. The controller of claim 20, wherein said parameter amplification mechanism is configured to adjust the output of the control signal so as to adjust an amount of pump light from the plurality of pump lasers (3) by an amount that corresponds with the secondary target amplification profile.

22. The controller of claim 20, wherein said processor (1203) is configured to retrieve said secondary target amplification profile from said memory.

23. **The controller of claim 22, wherein said processor (1203) is configured to** identify said secondary target amplification profile from a plurality of candidate profiles by a pattern recognition mechanism.

24. The controller of claim 23, wherein said processor (1203) is configured to identify said secondary target amplification profile by calculating a least square fit of said secondary target amplification profile with respect to said plurality of candidate profiles.

25. The controller of claim 1, wherein said processor (1203) is further configured to implement a target adjustment mechanism that is configured to adjust said target performance when said interface (1213) receives an indication from one of said external devices indicating that said operational condition has changed.

26. The controller of claim 1, wherein said target adjustment mechanism is configured to adjust a shape of said target performance.

27. The controller of claim 26, wherein said target adjustment mechanism being configured to identify by way of simulation operational parameters for the pump lasers (3) that correspond with a shape of said target performance.

28. The controller of claim 26, wherein said target adjustment mechanism being configured to identify by way of a table lookup operational parameters for the pump lasers (3) that correspond with a shape of said target performance.

29. The controller of claim 25, wherein said target adjustment mechanism being configured to adjust a bandwidth of said amplification bandwidth.

30. The controller of claim 29, wherein said target adjustment mechanism being configured to identify said operating parameters corresponding with said amplification bandwidth by way of said at least one of simulation and a table lookup procedure.

31. The controller of claim 29, wherein said target adjustment mechanism being configured to enable for operational use a different subset of previously non-operating pump lasers (3) from said plurality of pump lasers (3).

32. The controller of claim 25, wherein said target adjustment mechanism is configured to adjust said target performance after identifying a change in operational condition, said operational condition being at least one of an amount of the pump interaction, fiber loss, and a change in amplification performance from an adjacent cascaded Raman amplifier.

33. The controller of claim 1, wherein said target setting mechanism is configured to identify a common set of operating parameters for a first group of the pump lasers (3) and uniformly change the operating parameters for the first group of pump lasers (3) when said processor (1203) determines that an actual performance of said Raman amplifier (100; 30, 32, 34) is not within a predetermined tolerance of said target performance.

34. The controller of claim 33, wherein the processor (1203) is configured to calculate respective output powers of each pump laser (3) in the first group, and remaining pump lasers (3) in a second group of said plurality of pump lasers (3).

35. The controller of claim 34, wherein the processor (1203) is configured to calculate the respective output powers of each pump laser (3) in the first group and the second group from at least one of a simulation routine, a look-up table, and a superposition process.

36. The controller of claim 33, wherein a total number of pump lasers (3) in the first group is greater than a total number of pump lasers (3) in the second group.

37. The controller of claim 1, wherein the processor (1203) is configured to control the output power of each of the plurality of pump lasers (3) to increase as an operating wavelength of the respective pump lasers (3) decrease.

38. The controller of claim 1, wherein the plurality of pump lasers (3) are configured to produce light at different central wavelengths and operate within a wavelength band having a shorter wavelength side and a longer wavelength side, said shorter wavelength side containing a first group of pump lasers (3) having operating central wavelengths that are less than a middle wavelength between a shortest and a longest central wavelength of the pump lasers (3), and the longer wavelength side containing a second group pump lasers (3) having operating central wavelengths that are greater than the middle wavelength.

39. The controller of claim 38, wherein the first group of pump lasers (3) includes more pump lasers(3) than the second group of pump lasers(3).

40. The controller of claim 38, wherein the processor (1203) is configured to control the plurality of pump lasers (3) such that an optical pumping power launched into the optical fiber due to the first group is greater than an optical pumping power launched into the optical fiber due to the second group.

41. The controller of claim 38, wherein said parameter application mechanism is configured to output a control signal only to the subset of pump lasers (3) in the longer wavelength side so as to impart tilt to a composite gain profile of said Raman amplifier (100; 30, 32, 34) throughout the amplification bandwidth.

42. The controller of claim 41, wherein said parameter application mechanism is configured to impart a negatively sloped tilt to the gain profile by increasing an optical output of the subset of pump lasers (3) in the second group.

43. The controller of claim 41, wherein said parameter application mechanism is configured to impart a positively sloped tilt to the gain profile by decreasing an optical output of the subset of pump lasers (3) in the first group.

44. The controller of claim 1, wherein said processor (1203) is adapted to receive via said interface (1213) said data and at least a portion of said operation conditions from a remote computer.

45. The controller of claim 44, wherein said interface (1213) being configured to connect to an Internet for receiving information from at least one of the remote computer and an adjacent Raman amplifier connected to said Raman amplifier (100; 30, 32, 34) by the optical fiber (2).

46. The controller of claim 44, wherein the controller (4) is configured such that said computer readable instructions can be downloaded to said memory (1214) from said remote computer.

47. The controller of claim 46, wherein said computer readable instructions include at least one of Java and ActiveX instructions.

48. The controller of claim 47, wherein said processor (1203) being configured to receive at least one of said computer readable instructions, said data, and said operational conditions from said remote computer by way of a worldwide web page hosted by said remote computer.

49. The controller of claim 44, wherein said processor (1203) is configured to receive from said remote computer via said interface (1213) other operational conditions that influence an optimal target performance.

50. The controller of claim 1, wherein said processor (1203) is configured to receive via said interface, operational conditions regarding an operational status of an adjacent cascaded Raman amplifier so as to cause said target setting mechanism to identify operating parameters for the pump lasers (3) that will offset a change in said amplification performance of said adjacent cascaded Raman amplifier.

51. A Raman amplifier for amplifying a WDM optical signal in an optical fiber (2) propagating therethrough, comprising:

a pumping device (1) including a plurality of pump lasers (3) configured to produce light that is applied to the optical fiber (2);
an optical coupler (13) configured to optically interconnect the pumping device(1) with the optical fiber (2); and
a controller(4) according to any of claims 1 to 50.

52. The Raman amplifier according to claim 51, further comprising a tap coupler (14) configured to provide to the processor (1203) a sampled WDM output signal from the Raman amplifier (100; 30, 32, 34).

53. The Raman amplifier of claim 52, further comprising a demultiplexer (18) that is adapted to divide the WDM output optical signal into a predetermined number of separate signals, each centered at a different wavelength in the amplification bandwidth, whereinsaid predetermined number of separate signals is at least as great in number as WDM channels in the WDM optical signal.

54. The Raman amplifier of claim 52, further comprising a demultiplexer (18) that is adapted to divide the WDM output optical signal into a predetermined number of separate signals, each centered at a different wavelength in the amplification bandwidth, wherein said predetermined number of separate signals corresponds in number with the number of pump lasers (3).

55. The Raman amplifier of claim 52, wherein said processor (1203) is configured to compare said WDM output signal with said target performance and determine if a deviation therebetween is greater than a predetermined tolerance.

56. The Raman amplifier of claim 55, wherein if the deviation is greater than the predetermined tolerance, the processor (1203) is adapted to incrementally increase or decrease an output power of at least one of the plurality of pump lasers (3) that has a gain profile that corresponds in wavelength with a range of wavelengths in which the deviation occurred.

57. The Raman amplifier of claim 55, wherein if the deviation is greater than the predetermined tolerance the controller (4) is adapted to adjust an output of a group of the plurality of pump lasers(3), said group containing pump lasers (3) that have adjacent operating wavelengths with respect to the set of operating wavelengths of the plurality of pump lasers (3).

58. The Raman amplifier of claim 55, wherein said processor (1203) is adapted to determine if respective spectral samples of said WDM output signal are not within said predetermined tolerance according to an equation:

$$\text{ABS [target - monitored]} \leq \text{predetermined tolerance.}$$

59. The Raman amplifier of claim 55, wherein if only one spectral sample in said WDM output signal is greater than predetermined tolerance, said controller (4) is configured to identify which of said plurality of pump lasers (3) produce a Raman gain profile having a gain peak closest to a wavelength of a spectral sample in said WDM output signal that is greater than said predetermined tolerance.

60. The Raman amplifier of claim 59, wherein said parameter application mechanism is configured to adjust an amount of pump light from the optical pump (1) that produces the Raman gain profile having a peak closest to the location of the sample that is greater than the predetermined tolerance.

61. The Raman amplifier of claim 55, wherein if more than one adjacent spectral sample of said WDM output signal is greater than said predetermined tolerance, said processor (1203) is adapted to develop a secondary target amplification profile.

62. The Raman amplifier of claim 61, wherein said parameter amplification mechanism is configured to adjust the output of the at least one control signal so as to adjust an amount of pump light from the plurality of pump lasers (3) by an amount that corresponds with the secondary target amplification profile.

63. The Raman amplifier of claim 61, wherein said processor (1203) is configured to retrieve said secondary target amplification profile from said memory.

64. The Raman amplifier of claim 63, wherein said processor (1203) is configured to identify said secondary target amplification profile from a plurality of candidate profiles by pattern recognition.

65. The Raman amplifier of claim 64, wherein said processor (1203) is configured to identify said secondary target amplification profile by calculating a least square fit of said secondary target amplification profile with said candidate profiles.

66. The Raman amplifier of claim 51 wherein said processor (1203) is further configured to implement a target adjustment mechanism that is configured to adjust said target performance when said interface receives an indication from one of said external devices that an operational condition has changed.

67. The Raman amplifier of claim 66, wherein said target adjustment mechanism is configured to adjust a shape of said target performance.

68. The Raman amplifier of claim 67, wherein said target adjustment mechanism being configured to identify by way of simulation operational parameters for the pump lasers (3) that correspond with a shape of said target performance.

69. The Raman amplifier of claim 67, wherein said target adjustment mechanism being configured to identify by way of table lookup operational parameters for the pump lasers (3) that correspond with a shape of said target performance.

70. The Raman amplifier of claim 66, wherein said target adjustment mechanism being configured to adjust a bandwidth of said amplification bandwidth.

71. The Raman amplifier of claim 70, wherein said target adjustment mechanism being configured to identify said operating parameters corresponding with said amplification bandwidth by way of said at least one of simulation and a table lookup procedure.

72. The Raman amplifier of claim 70, wherein said target adjustment mechanism being configured to enable for operational use a different subset of previously non operational pump lasers (3) from said plurality of pump lasers (3).

73. The Raman amplifier of claim 68, wherein said target adjustment mechanism is configured to adjust said target performance after identifying a change in operational conditions, said operational conditions being at least one of pump interaction, fiber loss, and a change in amplification performance from an adjacent cascaded Raman amplifier.

74. A method for controlling an amplification performance of a Raman amplifier (100; 30, 32, 34) having a plurality of pump lasers(3) including a light source configured to produce a light havin a predetermined wavelength, said laser light being configured to produce an amplification profile in a Raman gain medium when applied thereto, said amplification profile is a first amplification band, the method comprising steps of:

identifying operating parameters for the plurality of pump lasers (3) that correspond with a target performance for said Raman amplifier (100; 30, 32, 34), said target performance being at least one of
a predetermined amplification performance that is specified across an amplification bandwidth, said amplification bandwidth being at least as large as a signal bandwidth of a WDM optical signal that is amplified when propagating through an optical fiber (2), and
an output signal level performance that is specified across said amplification bandwidth;
forming a control signal in a processor (1203) derived from said operational parameters;
sending said control signal to an optical output adjustment mechanism (20) coupled to said plurality of pump lasers (3); and
adjusting an amount of light introduced into said optical fiber (2) from said plurality of pump lasers (3) to achieve an actual performance that is within a predetermined tolerance of said target performance wherein the method comprises the further steps of
providing more than two light sources configured to produce laser lights having different central wavelengths so as to amplify an optical signal in a Raman gain medium with said first amplification band; and
controllably changing an operational state of at least one of said light sources so as to Change to a second amplification band in said Raman gain medium, a wavelength span of said second amplification band being different than for said first amplification band, wherein said controllably changing step includes at least one of:

a) turning off a light source or turning on a light source; and
b) increasing or decreasing pump power operating in a Raman amplifier (100; 30, 32, 34).

75. The method of claim 74, wherein said output adjustment mechanism (20) being a drive circuit, and said adjusting step includes adjusting drive currents applied to at least a portion of said pump lasers (3).

76. The method of claim 74, further comprising a step of forming a sampled WDM output signal from the Raman amplifier (100; 30, 32, 34) and providing said sampled WDM output signal to said processor (1203) so as to create a feedback loop.

77. The method of claim 75, wherein said identifying step includes executing a simulation routine to identify said operating parameters to achieve an actual performance that is within a predetermined tolerance of said target performance.

78. The method of claim 75, wherein said identifying step includes retrieving from a memory (1204) the operating parameters for the pump laser(3) to achieve an actual performance that is within a predetermined tolerance of the target performance.

79. The method of claim 75, further comprising a step of storing sets of operational conditions in memory (1204) in association with different target performances.

80. The method of claim 76, wherein said target performance being the predetermined amplification performance, and further comprising a step of calculating said predetermined amplification performance from the sampled WDM output signal and a sampled WDM optical signal that is input to the Raman amplifier (100; 30, 32, 34).

81. The method of claim 80, further comprising a step of monitoring an output performance of said Raman amplifier (100; 30, 32, 34).

82. The method of claim 81, further comprising a step of adjusting said operational parameters so as to keep said output performance within a predetermined tolerance of said target performance.

83. The method of claim 82, wherein said monitoring step includes receiving an indication of a level of an input WDM signal; and calculating an amplification gain by finding a ratio of said sampled WDM output signal to said input WDM signal so as to determine if an amount of amplification provided by said Raman amplifier (100; 30, 32, 34) is consistent with said target performance.

84. The method of claim 81, further comprising steps of receiving signal level data of the WDM optical signal when output from an adjacent cascaded Raman amplifier, said adjacent cascaded Raman amplifier is connected to said Raman amplifier (1.00; 30, 32, 34) by said optical fiber (2); and determining a signal level of said WDM optical signal when input to said Raman amplifier (100; 30, 32, 34) by comparing the signal level data with fiber loss data.

85. The method of claim 81, further comprising dividing the WDM output optical signal into a predetermined number of separate signals, each centered at a different wavelength in the amplification bandwidth, wherein said predetermined number of separate signals is at least as great in number as WDM channels in the WDM optical signal.

86. The method of claim 81, further comprising dividing the WDM output optical signal into a predetermined number of separate signals, each centered at a different wavelength in the amplification bandwidth, wherein said predetermined number of separate signals corresponds in number with the number of pump lasers (3).

87. The method of claim 76, further comprising comparing said sampled WDM output signal with said target performance and determining if a deviation therebetween is greater than a predetermined tolerance.

88. The method of claim 87, wherein if the deviation is greater than the predetermined tolerance, incrementally adjusting an output power of at least one of the plurality of pump lasers (3) that has a gain profile that corresponds in wavelength with a range of wavelengths in which the deviation occurred.

89. The method of claim 87, wherein if the deviation is greater than the predetermined tolerance adjusting an output power of a group of the plurality of pump lasers(3), said group containing pump lasers (3) that have adjacent operating wavelengths with respect to the set of operating wavelengths of all of the plurality of pump lasers (3).

90. The method of claim 87, wherein said comparing step includes determining if respective samples of said sampled WDM output signal are not within said predetermined tolerance according to an equation:

$$\text{ABS [target - monitored]} \leq \text{predetermined tolerance.}$$

91. The method of claim 90, wherein if only one sample in said sampled WDM output signal is greater than predetermined tolerance, identifying which of said plurality of pump lasers (3) produces a Raman gain profile having a gain peak closest to a wavelength of a sample in said sampled WDM output signal that is greater than said predetermined tolerance.

92. The method of claim 91, wherein said adjusting step adjusts an amount of pump light from the optical pump (1) that produces the Raman gain profile having a peak closest to the wavelength of the sample that is greater than the predetermined tolerance.

93. The method of claim 90, wherein if more than one adjacent sample of said sample signal is greater than said predetermined tolerance, developing a secondary target amplification profile.

94. The method of claim 93, wherein said adjusting step includes adjusting the output of the at least one control signal so as to adjust an amount of pump light from the plurality of pump lasers (3) by an amount that corresponds with the secondary target amplification profile.

95. The method of claim 93, wherein said developing a secondary target amplification profile step includes retrieving said secondary target amplification profile from memory (1204).

96. The method of claim 95, wherein said retrieving said secondary target amplification profile from memory step includes using pattern recognition to identify an appropriate secondary target amplification profile from a plurality of candidate profiles.

97. The method of claim 96, wherein said step of using pattern recognition includes calculating a least square fit of said secondary target amplification profile with said plurality of candidate profiles.

98. The method of claim 74, further comprising steps of:receiving an indication that an operational condition for said Raman amplifier (100; 30, 32, 34) has changed with regard to an initial setting of operational parameters; and altering said target performance to account for the change in operational condition.

99. The method of claim 98, wherein said altering step includes adjusting a shape of said target performance.

100.The method of claim 98, wherein said altering step includes adjusting a bandwidth of said amplification bandwidth.

101.The method of claim 100, wherein said altering step includes enabling a previous inactive subset of pump lasers (3) from said plurality of pump lasers (3).

102.The method of claim 98, wherein said operational condition being at least one of pump interaction, fiber loss, and a change in amplification performance in an adjacent cascaded Raman amplifier (100; 30, 32, 34).

103.The method of claim 74, wherein said identifying step includes identifying a common set of operating parameters for a first group of the pump lasers (3) and uniformly changing the operating parameters for the first group of pump lasers (3) when the actual performance of said Raman amplifier (100; 30, 32, 34) is not within the predetermined tolerance of said target performance, pump lasers (3) in said first group having operational wavelengths that are either all longer in wavelength or all shorter in wavelength than a second group of the plurality of pump lasers (3).

104.The method of claim 103, wherein said step of identifying a common set of operating parameters includes using a simulation routine configured to calculate output powers to produce the target performance, a look-up table including the output powers to produce the target performance, and a superposition process.

105.The method of claim 103, wherein a total number of pump lasers (3) in the first group is greater than a total number of pump lasers (3) in the second group.

106.The method of claim 103, wherein the operating wavelengths of the pump lasers (3) in the first wavelength are shorter than the operating wavelengths for the pump lasers (3) in the second group.

107.The method of claim 106, wherein said adjusting step causes more optical pumping power from the pump lasers (3) in the first group to be launched into the optical fiber than optical pumping power from the second group.

108.The method of claim 106, wherein said adjusting step includes decreasing the output of the first group of pump lasers (3) relative to the second group so as to impart a positively sloped tilt to a composite gain profile of said Raman amplifier (100; 30, 32, 34).

109.The method of claim 106, wherein said adjusting step includes increasing the output of the first group of pump lasers (3) relative to the second group so as to impart a negatively sloped tilt to a composite gain profile of said Raman amplifier (100; 30, 32, 4).

110.The method of claim 98, wherein said receiving step includes receiving said operational condition from a remote computer.

111.The method of claim 110, wherein said remote computer being a processor in an adjacent cascaded Raman amplifier connected to said Raman amplifier (100; 30, 32, 34) by the optical fiber (2).

112. The method of claim 110, wherein said remote computer being a computer that interconnects a plurality of cascaded Raman amplifiers by a communication link.

113. The method of claim 112, wherein at least a portion of said communication link being an Internet.

114. The method of claim 110, wherein said receiving step includes receiving said operational condition via a web page hosted on said remote computer.

115. The method of claim 114, wherein said receiving step includes receiving at least one of Java and ActiveX instructions from said remote computer and that runs on a processor (1203) in said Raman amplifier (100; 30, 32, 34).

116. The method of claim 110, wherein said operational conditions relates to a change in an operational status of an adjacent Raman amplifier; and said altering step includes altering a shape of the target performance to compensate for the change in operational status of the adjacent Raman amplifier.

117. An optical communication system comprising:

a controller (4) according to any one of claims 1 to 50 and including an interface (1213) to a data communications network;
a first Raman amplifier (100; 30, 32, 34) configured to optically amplify a WDM optical signal while propagating through an optical fiber (2);
the optical fiber (2); and
a second Raman amplifier configured to receive and Raman amplify said WDM optical signal provided from said first Raman amplifier, said second Raman amplifier having a communications interface that connects to said data communications network, wherein
said controller (4) is configured to send a control message to said second Raman amplifier that instructs said second Raman amplifier to adjust a target performance thereof, and
said second Raman amplifier being configured to adjust the target performance and an actual performance thereof by adjusting an optical output of at least a subset of a plurality of pump lasers (3) therein, wherein
the second Raman amplifier includes a light source configured to produce a laser light having a predetermined central wavelength, said laser light being configured to produce an amplification profile in a Raman gain medium when applied thereto, said amplification profile is a first amplification band; and
the controller (4) is configured to change an operating status of the light source when said controller (4) causes a change from said first amplification band to a second amplification band, wherein said operational status is one of:

a) an on-status or an off status;
b) an increase or decrease in pump power operating in a Raman amplifier (100; 30, 32, 34).

118. The system of claim 117, wherein at least a portion of said data communications network being an Internet.

119. The system of claim 117, wherein said first Raman amplifier (100; 30, 32, 34) includes an interface(1213) configured to report to said controller(4) an operational status thereof, said operational status including whether an optical capacity of a pump laser (3) contained therein is below a predetermined level.

120. The system of claim 119, wherein in response to receiving said control message, said second Raman amplifier is configured to alter an amplification performance thereof to counteract the optical output capacity of the pump laser of the first Raman amplifier being below a predetermined level.

121. A computer program for controlling an amplification performance of a Raman amplifier (100; 30, 32, 34) that includes a plurality of pump lasers(3) including a light source configured to produce a light having a predetermined wavelength, said laser ' light being configured to produce an amplification profile in a Raman gain medium when applied thereto, said amplification profile is a first amplification band, the program which, when executed on a computer, causes the computer to perform the steps of

identifying operating parameters for the plurality of pump lasers (3) that correspond with a target performance for said Raman amplifier, said target performance being at least one of
a predetermined amplification performance that is specified across an amplification bandwidth, said amplification bandwidth being at least as large as a signal bandwidth of a WDM optical signal that is to be Raman amplified while propagating through an optical fiber, and

an output signal level performance that is specified across said amplification bandwidth;

a control signal formation mechanism that derives a control signal from said operational parameters; and

means for sending said control signal to said plurality of pump lasers (3) for adjusting an amount of light introduced into said optical fiber from said plurality of pump lasers (3) to achieve an actual performance that is within a predetermined tolerance of said target performance

and further comprising,

providing more than two light sources configured to produce laser lights having different central wavelengths so as to amplify an optical signal in a Raman gain medium with said first amplification band; and

controllably changing an operational state of at least one of said light sources so as to change to a second amplification band in said Raman gain medium, a wavelength span of said second amplification band being different than for a first amplification band, therein said controllably changing step includes at least one of;

    a) turning off a light source or turning on a light source; and

    b) increasing or decreasing pump power operating in a Raman amplifier (100; 30, 32, 34).

122. The computer program product of claim 121, further comprising means for monitoring an output performance of said Raman amplifier.

123. The computer program product of claim 122, further comprising means for maintaining said output performance within a predetermined tolerance of said target performance.

124. The computer program product of claim 122, further comprising:means for comparing the output performance with said target performance and determining if a deviation therebetween is greater than a predetermined tolerance.

125. The computer program product of claim 124, further comprising means for adjusting an amount of pump light from individual pump lasers (3) or groups of pump lasers (3) depending on whether the deviation is primarily attributable to one pump laser or a group of pump lasers (3).

126. The computer program product of claim 124, further comprising means for developing a secondary target amplification profile when a spectral band of said deviation is primarily attributable to more than one pump laser.

127. The computer program product of claim 121, further comprising:means for receiving an indication that an operational condition for said Raman amplifier (100; 30, 32, 34) has changed with regard to an initial setting of operational parameters; and means for altering said target performance to account for the change in operational condition.

128. The computer program product of claim 127, wherein said means for altering includes means for adjusting a shape of said target performance.

129. The computer program product of claim 127, wherein said means for altering includes means for adjusting a bandwidth of said target performance and an amplification bandwidth of said Raman amplifier (100; 30, 32, 34)..

130. The computer program product of claim 127, wherein said means for altering includes means for adjusting optical outputs of groups of pump lasers (3) from said plurality of pump lasers (3).

131. The computer program product of claim 130, wherein said means for altering includes means for adjusting an optical output of a first group of pump lasers (3) by more than a second group of pump lasers (3) so as to impart a tilt to a composite gain profile of said Raman amplifier.

132. The computer program product of claim 127, further comprising means for receiving an operational condition from a remote computer and using said operational condition in said means for identifying to identify a target performance that corresponds with said operational condition.

133. The computer program product of claim 132, wherein:said operational condition relates to a change in an operational status of an adjacent Raman amplifier; and said means for adjusting includes means for adjusting a shape of the target performance to compensate for the change in operational status of the adjacent Raman amplifier.

**Patentansprüche**

1. Steuereinheit für einen Raman-Verstärker mit mehreren Pumplasern, die eine Lichtquelle enthalten, die konfiguriert ist, ein Licht mit einer vorbestimmten Wellenlänge zu erzeugen, wobei das Laserlicht konfiguriert ist, ein Verstärkungsprofil in einem Raman-Gewinnmittel zu erzeugen, wenn es darauf angewendet wird, wobei das Verstärkungsprofil ein erstes Verstärkungsband ist, wobei die Steuereinheit (4) Folgendes umfasst:

   einen Speicher (1204), der konfiguriert ist, computerlesbare Anweisungen und Daten zu verwalten; und einen Prozessor (1203) mit einer Schnittstelle (1213), die konfiguriert ist, mit externen Geräten zu kommunizieren, wobei der Prozessor (1203) konfiguriert ist, die computerlesbaren Anweisungen auszuführen und einen Soll-Vorgabemechanismus und einen Parameteranwendungsmechanismus zu implementieren, wobei der Soll-Vorgabemechanismus konfiguriert ist, eine Soll-Leistung und entsprechende Betriebsparameter für die mehreren Pumplaser (3) zu identifizieren, um die Soll-Leistung zu erzielen, wobei sich die Soll-Leistung auf eine Betriebsbedingung bezieht, die dem Prozessor von mindestens einem der externen Geräte bereitgestellt wird, wobei die Soll-Leistung eine vorbestimmte Verstärkungsleistung, die über eine Verstärkungsbandbreite spezifiziert ist, wobei die Verstärkungsbandbreite mindestens so groß wie eine Signalbandbreite eines optischen WDM-Signals ist, das von einem Raman-Verstärker (100; 30, 32, 34) verstärkt wird, während es sich durch einen Lichtwellenleiter (2) ausbreitet, und eine Ausgangssignalpegelleistung, die über die Verstärkungsbandbreite spezifiziert ist, ist, und wobei der Parameteranwendungsmechanismus konfiguriert ist, mindestens ein Steuersignal auszugeben, das die Betriebsparameter definiert, um so eine Menge des Lichts, das von den mehreren Pumplasern (3) in den Lichtwellenleiter (2) eingeführt wurde, anzugleichen, um eine Ist-Leistung zu erzielen, die innerhalb einer vorbestimmten Toleranz der Soll-Leistung liegt, wobei die Steuereinheit (4) konfiguriert ist, einen Betriebszustand der Lichtquelle zu ändern, wenn die Steuereinheit (4) eine Änderung von dem ersten Verstärkungsband zu einem zweiten Verstärkungsband bewirkt, wobei der Betriebszustand einer der folgenden ist:

   a) ein Ein-Zustand oder ein Aus-Zustand;
   b) eine Zunahme oder Abnahme der Pumpleistung, die in einem Raman-Verstärker (100; 30, 32, 34) wirkt.

2. Steuereinheit nach Anspruch 1, wobei der Soll-Vorgabemechanismus adaptiert ist, die Betriebsparameter mittels Simulation zu identifizieren, um eine Ist-Leistung zu erzielen, die innerhalb der vorbestimmten Toleranz der Soll-Leistung liegt.

3. Steuereinheit nach Anspruch 1, wobei der Soll-Vorgabemechanismus konfiguriert ist, vom Speicher (1204) Betriebsparameter für den Pumplaser (3) abzurufen, um eine Ist-Leistung zu identifizieren, die innerhalb der vorbestimmten Toleranz der Soll-Leistung liegt.

4. Steuereinheit nach Anspruch 3, wobei der Speicher (1204) adaptiert ist, die Betriebsbedingungen in Verbindung mit der Soll-Leistung zu speichern.

5. Steuereinheit nach Anspruch 1, wobei die Soll-Leistung die vorbestimmte Verstärkungsleistung ist und der Soll-Vorgabemechanismus konfiguriert ist, die vorbestimmte Verstärkungsleistung aus einem abgetasteten WDM-Ausgangssignal und einem abgetasteten eingegebenen Signal zu berechnen.

6. Steuereinheit nach Anspruch 5, wobei der Prozessor (1203) konfiguriert ist, die Betriebsparameter anzugleichen, um so eine Ist-Ausgangsleistung innerhalb der vorbestimmten Toleranz der Soll-Verstärkungsleistung zu halten.

7. Steuereinheit nach Anspruch 1, wobei die Soll-Leistung die Ausgangssignalpegelleistung ist und der Soll-Vorgabemechanismus konfiguriert ist, das optische WDM-Signal, wenn es von dem Raman-Verstärker (100; 30, 32, 34) ausgegeben wird, zu überwachen, um so eine Ist-Verstärkungsleistung zu bestimmen.

8. Steuereinheit nach Anspruch 7, wobei der Prozessor (1203) konfiguriert ist, eine Anzeige eines Pegels eines eingegebenen WDM-Signals zu empfangen und einen Verstärkungsfaktor des Raman-Verstärkers (100; 30, 32, 34) zu berechnen, indem ein Verhältnis des optischen WDM-Signals, wenn es ausgegeben wird, zu dem eingegebenen Signal berechnet wird, um so zu bestimmen, ob ein Ausmaß an Verstärkung, das von dem Raman-Verstärker (100; 30, 32, 34) bereitgestellt wird, mit der Soll-Leistung konsistent ist.

9. Steuereinheit nach Anspruch 7, wobei der Prozessor (1203) konfiguriert ist, einen Pegel des optischen WDM-Signals, wenn es in den Raman-Verstärker (100; 30, 32, 34) eingegeben wird, aus Ausgangssignalpegeldaten, die von einem benachbarten Raman-Verstärker bereitgestellt werden, zu bestimmen, wobei der benachbarte Raman-Verstärker durch den Lichtwellenleiter (2) mit einem Eingang des Raman-Verstärkers (100; 30, 32, 34) verbunden ist, wobei der Prozessor (1203) konfiguriert ist, einen Pegel des optischen WDM-Signals zu berechnen, indem die Signalpegeldaten und Lichtwellenleiterverlustdaten verglichen werden.

**10.** Steuereinheit nach Anspruch 7, wobei der Prozessor (1203) konfiguriert ist, das optische WDM-Signal, wenn es von dem Raman-Verstärker (100; 30, 32, 34) ausgegeben wird, mit mindestens so vielen Abtastpunkten wie WDM-Kanälen im optischen WDM-Signal zu überwachen.

**11.** Steuereinheit nach Anspruch 10, wobei der Prozessor (1203) konfiguriert ist, separate spektrale Abtastwerte des optischen WDM-Signals von einem Demultiplexer (18), der das optische WDM-Signal in mehrere Signale trennt, zu empfangen.

**12.** Steuereinheit nach Anspruch 7, wobei der Prozessor (1203) konfiguriert ist, ein WDM-Ausgangssignal des Raman-Verstärkers (100; 30, 32, 34) zu überwachen, indem mindestens so viele Abtastwerte, die bei unterschiedlichen Wellenlängen genommen werden, wie eine Anzahl der Pumplaser (3) in dem Raman-Verstärker (100; 30, 32, 24) überwacht werden.

**13.** Steuereinheit nach Anspruch 7, wobei der Prozessor (1203) das WDM-Ausgangssignal überwacht, indem eine vorbestimmte Anzahl von Abtastwerten, die bei unterschiedlichen Wellenlängen genommen werden, überwacht werden, wobei sich die vorbestimmte Anzahl von Abtastwerten in einem Bereich befindet, der von einer Anzahl der Pumplaser (3) in dem Raman-Verstärker (100; 30, 32, 34) und einer Anzahl von WDM-Kanälen in den optischen WDM-Signalen begrenzt wird.

**14.** Steuereinheit nach Anspruch 6, wobei der Prozessor (1203) konfiguriert ist, das abgetastete WDM-Ausgangssignal mit der Soll-Leistung zu vergleichen und zu bestimmen, ob eine Abweichung zwischen diesen größer als eine vorbestimmte Toleranz ist.

**15.** Steuereinheit nach Anspruch 14, wobei, wenn die Abweichung größer als die vorbestimmte Toleranz ist, der Prozessor (1203) adaptiert ist, eine Ausgangsleistung mindestens eines der mehreren Pumplaser (3), der ein Gewinnprofil aufweist, das in Bezug auf die Wellenlänge einem Band von Wellenlängen entspricht, in dem die Abweichung auftrat, schrittweise anzugleichen.

**16.** Steuereinheit nach Anspruch 15, wobei, wenn die Abweichung größer als die vorbestimmte Toleranz ist, der Prozessor (1203) adaptiert ist, einen Ausgang einer Gruppe der mehreren Pumplaser (3) anzugleichen, wobei die Gruppe Pumplaser (3) enthält, die benachbarte Arbeitswellenlängen bezüglich eines ganzen Satzes von Arbeitswellenlängen für die mehreren Pumplaser (3) aufweisen.

**17.** Steuereinheit nach Anspruch 14, wobei der Prozessor (1203) adaptiert ist, zu bestimmen, ob jeweilige Abtastwerte des WDM-Ausgangssignals nicht innerhalb der vorbestimmten Toleranz liegen, gemäß einer Gleichung:

$$\text{ABS [Soll – überwacht]} \leq \text{vorbestimmte Toleranz.}$$

**18.** Steuereinheit nach Anspruch 17, wobei, wenn nur ein Abtastwert in einer Reihe von Abtastwerten größer als die vorbestimmte Toleranz ist, der Prozessor (1203) adaptiert ist, zu identifizieren, welcher der mehreren Pumplaser (3) ein Raman-Gewinnprofil mit einer Gewinnspitze, die einer Wellenlänge am nächsten kommt, in der die Abweichung auftrat, erzeugt.

**19.** Steuereinheit nach Anspruch 18, wobei der Parameteranwendungsmechanismus konfiguriert ist, eine Menge des Pumplichts von einer optischen Pumpe (1), die die Pumplaser (3) enthält und die das Raman-Gewinnprofil mit einer Gewinnspitze erzeugt, die der Wellenlänge am nächsten kommt, in der die Abweichung auftrat, anzugleichen.

**20.** Steuereinheit nach Anspruch 17, wobei, wenn mehr als ein benachbarter Abtastwert größer als die vorbestimmte Toleranz ist, der Prozessor (1203) adaptiert ist, ein sekundäres Soll-Verstärkungsprofil zu entwickeln.

21. Steuereinheit nach Anspruch 20, wobei der Parameteranwendungsmechanismus konfiguriert ist, den Ausgang des Steuersignals anzugleichen, um so eine Menge des Pumplichts von den mehreren Pumplasern (3) mit einer Menge, die dem sekundären Soll-Verstärkungsprofil entspricht, anzugleichen.

22. Steuereinheit nach Anspruch 20, wobei der Prozessor (1203) konfiguriert ist, das sekundäre Soll-Verstärkungsprofil von dem Speicher abzurufen.

23. Steuereinheit nach Anspruch 22, wobei der Prozessor (1203) konfiguriert ist, das sekundäre Soll-Verstärkungsprofil mittels eines Mustererkennungsmechanismus aus mehreren Kandidatenprofilen zu identifizieren.

24. Steuereinheit nach Anspruch 23, wobei der Prozessor (1203) konfiguriert ist, das sekundäre Soll-Verstärkungsprofil zu identifizieren, indem eine Anpassung mit Hilfe der Wenige-Quadrate-Einpassung (oder Methode) des sekundären Soll-Verstärkungsprofils bezüglich der mehreren Kandidatenprofile berechnet wird.

25. Steuereinheit nach Anspruch 1, wobei der Prozessor (1203) weiterhin konfiguriert ist, einen Soll-Angleichungsmechanismus zu implementieren, der konfiguriert ist, die Soll-Leistung anzugleichen, wenn die Schnittstelle (1213) eine Anzeige von einem der externen Geräte empfängt, die anzeigt, dass sich die Betriebsbedingung geändert hat.

26. Steuereinheit nach Anspruch 1, wobei der Soll-Angleichungsmechanismus konfiguriert ist, eine Form der Soll-Leistung anzugleichen.

27. Steuereinheit nach Anspruch 26, wobei der Soll-Angleichungsmechanismus konfiguriert ist, mittels Simulation Betriebsparameter für die Pumplaser (3), die einer Form der Soll-Leistung entsprechen, zu identifizieren.

28. Steuereinheit nach Anspruch 26, wobei der Soll-Angleichungsmechanismus konfiguriert ist, mittels einer Tabellensuche Betriebsparameter für die Pumplaser (3), die einer Form der Soll-Leistung entsprechen, zu identifizieren.

29. Steuereinheit nach Anspruch 25, wobei der Soll-Angleichungsmechanismus konfiguriert ist, eine Bandbreite der Verstärkungsbandbreite anzugleichen.

30. Steuereinheit nach Anspruch 29, wobei der Soll-Angleichungsmechanismus konfiguriert ist, die Betriebsparameter, die der Verstärkungsbandbreite entsprechen, mittels Simulation und eines Tabellensuchvorgangs zu identifizieren.

31. Steuereinheit nach Anspruch 29, wobei der Soll-Angleichungsmechanismus konfiguriert ist, zur betrieblichen Verwendung einen anderen Teilsatz von zuvor nicht arbeitenden Pumplasern (3) aus den mehreren Pumplasern (3) zu aktivieren.

32. Steuereinheit nach Anspruch 25, wobei der Soll-Angleichungsmechanismus konfiguriert ist, die Soll-Leistung nach dem Identifizieren einer Änderung der Betriebsbedingung anzugleichen, wobei die Betriebsbedingung ein Ausmaß der Pumpeninteraktion, des Lichtwellenleiterdämpfung und eine Änderung der Verstärkungsleistung von einem benachbarten kaskadierten Raman-Verstärker ist.

33. Steuereinheit nach Anspruch 1, wobei der Soll-Vorgabemechanismus konfiguriert ist, einen gemeinsamen Satz von Betriebsparametern für eine erste Gruppe der Pumplaser (3) zu identifizieren und die Betriebsparameter für die erste Gruppe der Pumplaser (3) einheitlich zu ändern, wenn der Prozessor (1203) bestimmt, dass eine Ist-Leistung des Raman-Verstärkers (100; 30, 32, 34) nicht innerhalb einer vorbestimmten Toleranz der Soll-Leistung liegt.

34. Steuereinheit nach Anspruch 33, wobei der Prozessor (1203) konfiguriert ist, jeweilige Ausgangsleistungen jedes Pumplasers (3) in der ersten Gruppe und verbleibender Pumplaser (3) in einer zweiten Gruppe der mehreren Pumplaser (3) zu berechnen.

35. Steuereinheit nach Anspruch 34, wobei der Prozessor (1203) konfiguriert ist, die jeweiligen Ausgangsleistungen jedes Pumplasers (3) in der ersten Gruppe und der zweiten Gruppe aus einer Simulationsroutine, einer Nachschlagetabelle und einem Überlagerungsprozess zu berechnen.

36. Steuereinheit nach Anspruch 33, wobei eine Gesamtzahl von Pumplasern (3) in der ersten Gruppe größer als eine Gesamtzahl von Pumplasern (3) in der zweiten Gruppe ist.

**37.** Steuereinheit nach Anspruch 1, wobei der Prozessor (1203) konfiguriert ist, die Ausgangsleistung jedes der mehreren Pumplaser (3) dahingehend zu steuern, zuzunehmen, wenn eine Arbeitswellenlänge der jeweiligen Pumplaser (3) abnimmt.

**38.** Steuereinheit nach Anspruch 1, wobei die mehreren Pumplaser (3) konfiguriert sind, Licht mit unterschiedlichen zentralen Wellenlängen zu erzeugen und innerhalb eines Wellenlängenbands mit einer Seite mit kürzeren Wellenlängen und einer Seite mit längeren Wellenlängen zu arbeiten, wobei die Seite mit kürzeren Wellenlängen eine erste Gruppe von Pumplasern (3) mit zentralen Arbeitswellenlängen, die kleiner als eine mittlere Wellenlänge zwischen einer kürzesten und einer längsten zentralen Wellenlänge der Pumplaser (3) sind, enthält und die Seite mit längeren Wellenlängen eine zweite Gruppe von Pumplasern (3) mit zentralen Arbeitswellenlängen, die größer als die mittlere Wellenlänge sind, enthält.

**39.** Steuereinheit nach Anspruch 38, wobei die erste Gruppe von Pumplasern (3) mehr Pumplaser (3) als die zweite Gruppe von Pumplasern (3) enthält.

**40.** Steuereinheit nach Anspruch 38, wobei der Prozessor (1203) konfiguriert ist, die mehreren Pumplaser (3) derart zu steuern, dass eine optische Pumpleistung, die infolge der ersten Gruppe in den Lichtwellenleiter eingespeist wird, größer als eine optische Pumpleistung, die infolge der zweiten Gruppe in den Lichtwellenleiter eingespeist wird, ist.

**41.** Steuereinheit nach Anspruch 38, wobei der Parameteranwendungsmechanismus konfiguriert ist, ein Steuersignal nur an den Teilsatz von Pumplasern (3) in der Seite mit längeren Wellenlängen auszugeben, um so einem zusammengefassten Gewinnprofil des Raman-Verstärkers (100; 30, 32, 34) durch die Verstärkungsbandbreite hindurch eine Neigung zu verleihen.

**42.** Steuereinheit nach Anspruch 41, wobei der Parameteranwendungsmechanismus konfiguriert ist, dem Gewinnprofil eine negative Neigung zu verleihen, indem ein optischer Ausgang des Teilsatzes von Pumplasem (3) in der zweiten Gruppe erhöht wird.

**43.** Steuereinheit nach Anspruch 41, wobei der Parameteranwendungsmechanismus konfiguriert ist, dem Gewinnprofil eine positive Neigung zu verleihen, indem ein optischer Ausgang des Teilsatzes von Pumplasern (3) in der ersten Gruppe herabgesetzt wird.

**44.** Steuereinheit nach Anspruch 1, wobei der Prozessor (1203) adaptiert ist, über die Schnittstelle (1213) von einem entfernten Computer die Daten und mindestens einen Teil der Betriebsbedingungen zu empfangen.

**45.** Steuereinheit nach Anspruch 44, wobei die Schnittstelle (1213) konfiguriert ist, sich zum Empfangen von Informationen von dem entfernten Computer und einem benachbarten Raman-Verstärker, der durch den Lichtwellenleiter (2) mit dem Raman-Verstärker (100; 30, 32, 34) verbunden ist, mit einem Internet zu verbinden.

**46.** Steuereinheit nach Anspruch 44, wobei die Steuereinheit (4) derart konfiguriert ist, dass die computerlesbaren Anweisungen von dem entfernten Computer auf den Speicher (1214) heruntergeladen werden können.

**47.** Steuereinheit nach Anspruch 46, wobei die computerlesbaren Anweisungen Java-und ActiveX-Anweisungen enthalten.

**48.** Steuereinheit nach Anspruch 47, wobei der Prozessor (1203) konfiguriert ist, die computerlesbaren Anweisungen, die Daten und die Betriebsbedingungen von dem entfernten Computer mittels einer World-Wide-Web-Seite, die von dem entfernten Computer gehostet wird, zu empfangen.

**49.** Steuereinheit nach Anspruch 44, wobei der Prozessor (1203) konfiguriert ist, über die Schnittstelle (1213) von dem entfernten Computer andere Betriebsbedingungen, die eine optimale Soll-Leistung beeinflussen, zu empfangen.

**50.** Steuereinheit nach Anspruch 1, wobei der Prozessor (1203) konfiguriert ist, über die Schnittstelle Betriebsbedingungen hinsichtlich eines Betriebszustands eines benachbarten kaskadierten Raman-Verstärkers zu empfangen, um so zu bewirken, dass der Soll-Vorgabemechanismus Betriebsparameter für die Pumplaser (3) identifiziert, die eine Änderung der Verstärkungsleistung des benachbarten kaskadierten Raman-Verstärkers ausgleichen werden.

**51.** Raman-Verstärker zum Verstärken eines optischen WDM-Signals in einem Lichtwellenleiter (2), das sich durch diesen ausbreitet, der Folgendes umfasst:

> eine Pumpvorrichtung (1), die mehrere Pumplaser (3) enthält, die konfiguriert sind, Licht zu erzeugen, das auf den Lichtwellenleiter (2) angewendet wird;
> einen Optokoppler (13), der konfiguriert ist, die Pumpvorrichtung (1) und den Lichtwellenleiter (2) optisch miteinander zu verbinden; und
> eine Steuereinheit (4) nach einem der Ansprüche 1 bis 50.

52. Raman-Verstärker nach Anspruch 51, der weiterhin einen Tap-Koppler (14) umfasst, der konfiguriert ist, dem Prozessor (1203) ein abgetastetes WDM-Ausgangssignal von dem Raman-Verstärker (100; 30, 32, 34) bereitzustellen.

53. Raman-Verstärker nach Anspruch 52, der weiterhin einen Demultiplexer (18) umfasst, der adaptiert ist, das optische WDM-Ausgangssignal in eine vorbestimmte Anzahl von separaten Signalen aufzuteilen, wobei jedes bei einer unterschiedlichen Wellenlänge in der Verstärkungsbandbreite zentriert ist, wobei die vorbestimmte Anzahl von separaten Signalen in Bezug auf die Anzahl mindestens so groß wie die Anzahl von WDM-Kanälen in dem optischen WDM-Signal ist.

54. Raman-Verstärker nach Anspruch 52, der weiterhin einen Demultiplexer (18) umfasst, der adaptiert ist, das optische WDM-Ausgangssignal in eine vorbestimmte Anzahl von separaten Signalen aufzuteilen, wobei jedes bei einer unterschiedlichen Wellenlänge in der Verstärkungsbandbreite zentriert ist, wobei die vorbestimmte Anzahl von separaten Signalen in Bezug auf die Anzahl der Anzahl von Pumplasem (3) entspricht.

55. Raman-Verstärker nach Anspruch 52, wobei der Prozessor (1203) konfiguriert ist, das WDM-Ausgangssignal mit der Soll-Leistung zu vergleichen und zu bestimmen, ob eine Abweichung zwischen diesen größer als eine vorbestimmte Toleranz ist.

56. Raman-Verstärker nach Anspruch 55, wobei, wenn die Abweichung größer als die vorbestimmte Toleranz ist, der Prozessor (1203) adaptiert ist, eine Ausgangsleistung mindestens eines der mehreren Pumplaser (3), der ein Gewinnprofil aufweist, das in Bezug auf die Wellenlänge einem Bereich von Wellenlängen entspricht, in dem die Abweichung auftrat, schrittweise zu erhöhen oder herabzusetzen.

57. Raman-Verstärker nach Anspruch 55, wobei, wenn die Abweichung größer als die vorbestimmte Toleranz ist, die Steuereinheit (4) adaptiert ist, einen Ausgang einer Gruppe der mehreren Pumplaser (3) anzugleichen, wobei die Gruppe Pumplaser (3) enthält, die benachbarte Arbeitswellenlängen bezüglich des Satzes von Arbeitswellenlängen der mehreren Pumplaser (3) aufweisen.

58. Raman-Verstärker nach Anspruch 55, wobei der Prozessor (1203) adaptiert ist, zu bestimmen, ob jeweilige spektrale Abtastwerte des WDM-Ausgangssignals nicht innerhalb der vorbestimmten Toleranz liegen, gemäß einer Gleichung:

$$\text{ABS [Soll} - \text{überwacht]} \le \text{vorbestimmte Toleranz.}$$

59. Raman-Verstärker nach Anspruch 55, wobei, wenn nur ein spektraler Abtastwert in dem WDM-Ausgangssignal größer als die vorbestimmte Toleranz ist, die Steuereinheit (4) konfiguriert ist, zu identifizieren, welcher der mehreren Pumplaser (3) ein Raman-Gewinnprofil mit einer Gewinnspitze, die einer Wellenlänge eines spektralen Abtastwerts in dem WDM-Ausgangssignal am nächsten kommt, der größer als die vorbestimmte Toleranz ist, erzeugt.

60. Raman-Verstärker nach Anspruch 59, wobei der Parameteranwendungsmechanismus konfiguriert ist, eine Menge des Pumplichts von der optischen Pumpe (1), die das Raman-Gewinnprofil mit einer Spitze, die der Lage des Abtastwerts, der größer als die vorbestimmte Toleranz ist, am nächsten kommt, erzeugt, anzugleichen.

61. Raman-Verstärker nach Anspruch 55, wobei, wenn mehr als ein benachbarter spektraler Abtastwert des WDM-Ausgangssignals größer als die vorbestimmte Toleranz ist, der Prozessor (1203) adaptiert ist, ein sekundäres Soll-Verstärkungsprofil zu entwickeln.

62. Raman-Verstärker nach Anspruch 61, wobei der Parameteranwendungsmechanismus konfiguriert ist, den Ausgang des mindestens einen Steuersignals anzugleichen, um so eine Menge des Pumplichts von den mehreren Pumplasern (3) mit einer Menge, die dem sekundären Soll-Verstärkungsprofil entspricht, anzugleichen.

63. Raman-Verstärker nach Anspruch 61, wobei der Prozessor (1203) konfiguriert ist, das sekundäre Soll-Verstärkungsprofil von dem Speicher abzurufen.

64. Raman-Verstärker nach Anspruch 63, wobei der Prozessor (1203) konfiguriert ist, das sekundäre Soll-Verstärkungsprofil mittels Mustererkennung aus mehreren Kandidatenprofilen zu identifizieren.

65. Raman-Verstärker nach Anspruch 64, wobei der Prozessor (1203) konfiguriert ist, das sekundäre Soll-Verstärkungsprofil zu identifizieren, indem eine Anpassung mit Hilfe der Wenige-Quadrate-Einpassung (oder Methode) des sekundären Soll-Verstärkungsprofils mit den Kandidatenprofilen berechnet wird.

66. Raman-Verstärker nach Anspruch 51, wobei der Prozessor (1203) weiterhin konfiguriert ist, einen Soll-Angleichungsmechanismus zu implementieren, der konfiguriert ist, die Soll-Leistung anzugleichen, wenn die Schnittstelle eine Anzeige von einem der externen Geräte empfängt, dass sich eine Betriebsbedingung geändert hat.

67. Raman-Verstärker nach Anspruch 66, wobei der Soll-Angleichungsmechanismus konfiguriert ist, eine Form der Soll-Leistung anzugleichen.

68. Raman-Verstärker nach Anspruch 67, wobei der Soll-Angleichungsmechanismus konfiguriert ist, mittels Simulation-Betriebsparameter für die Pumplaser (3), die einer Form der Soll-Leistung entsprechen, zu identifizieren.

69. Raman-Verstärker nach Anspruch 67, wobei der Soll-Angleichungsmechanismus konfiguriert ist, mittels Tabellensuche-Betriebsparameter für die Pumplaser (3), die einer Form der Soll-Leistung entsprechen, zu identifizieren.

70. Raman-Verstärker nach Anspruch 66, wobei der Soll-Angleichungsmechanismus konfiguriert ist, eine Bandbreite der Verstärkungsbandbreite anzugleichen.

71. Raman-Verstärker nach Anspruch 70, wobei der Soll-Angleichungsmechanismus konfiguriert ist, die Betriebsparameter, die der Verstärkungsbandbreite entsprechen, mittels einer Simulation und eines Tabellensuchvorgangs zu identifizieren.

72. Raman-Verstärker nach Anspruch 70, wobei der Soll-Angleichungsmechanismus konfiguriert ist, zur betrieblichen Verwendung einen anderen Teilsatz von zuvor nicht operativen Pumplasern (3) aus den mehreren Pumplasern (3) zu aktivieren.

73. Raman-Verstärker nach Anspruch 68, wobei der Soll-Angleichungsmechanismus konfiguriert ist, die Soll-Leistung nach dem Identifizieren einer Änderung der Betriebsbedingungen anzugleichen, wobei die Betriebsbedingungen die Pumpeninteraktion, der Lichtwellenleiterverlust und eine Änderung der Verstärkungsleistung von einem benachbarten kaskadierten Raman-Verstärker sind.

74. Verfahren zum Steuern einer Verstärkungsleistung eines Raman-Verstärkers (100; 30, 32, 34) mit mehreren Pumplasern (3), die eine Lichtquelle enthalten, die konfiguriert ist, ein Licht mit einer vorbestimmten Wellenlänge zu erzeugen, wobei das Laserlicht konfiguriert ist, ein Verstärkungsprofil in einem Raman-Gewinnmittel zu erzeugen, wenn es darauf angewendet wird, wobei das Verstärkungsprofil ein erstes Verstärkungsband ist, wobei das Verfahren die folgenden Schritte umfasst:

Identifizieren von Betriebsparametern für die mehreren Pumplaser (3), die einer Soll-Leistung für den Raman-Verstärker (100; 30, 32, 34) entsprechen, wobei die Soll-Leistung Folgendes ist:

eine vorbestimmte Verstärkungsleistung, die über eine Verstärkungsbandbreite spezifiziert ist, wobei die Verstärkungsbandbreite mindestens so groß wie eine Signalbandbreite eines optischen WDM-Signals ist, das verstärkt wird, wenn es sich durch einen Lichtwellenleiter (2) ausbreitet, und eine Ausgangssignalpegelleistung, die über die Verstärkungsbandbreite spezifiziert ist;
Bilden eines Steuersignals in einem Prozessor (1203), das von den Betriebsparametern abgeleitet wird;
Senden des Steuersignals an einen optischen Ausgangsangleichungsmechanismus (20), der mit den mehreren Pumplasem (3) gekoppelt ist; und
Angleichen einer Menge des Lichts, das von den mehreren Pumplasern (3) in den Lichtwellenleiter (2) eingeführt wurde, um eine Ist-Leistung zu erzielen, die innerhalb einer vorbestimmten Toleranz der Soll-Leistung liegt, wobei das Verfahren die folgenden weiteren Schritte umfasst:

Bereitstellen von mehr als zwei Lichtquellen, die konfiguriert sind, Laserlichter mit unterschiedlichen zentralen Wellenlängen zu erzeugen, um so ein optisches Signal in einem Raman-Gewinnmittel mit dem ersten Verstärkungsband zu verstärken; und

steuerbares Ändern eines Betriebszustands von mindestens einer der Lichtquellen, um so ein zweites Verstärkungsband in dem Raman-Gewinnmittel zu ändern, wobei ein Wellenlängenbereich des zweiten Verstärkungsbands für das erste Verstärkungsband anders ist, wobei der Schritt des steuerbaren Änderns Folgendes beinhaltet:

a) Abschalten einer Lichtquelle oder Einschalten einer Lichtquelle; und
b) Erhöhen oder Herabsetzen der Pumpleistung, die in einem Raman-Verstärker (100; 30, 32, 34) wirkt.

75. Verfahren nach Anspruch 74, wobei der Ausgangsangleichungsmechanismus (20) eine Treiberschaltung ist und der Angleichungsschritt das Angleichen von Treiberströmen, die auf mindestens einen Teil der Pumplaser (3) angewendet werden, beinhaltet.

76. Verfahren nach Anspruch 74, das weiterhin einen Schritt des Bildens eines abgetasteten WDM-Ausgangssignals von dem Raman-Verstärker (100; 30, 32, 34) und Bereitstellens des abgetasteten WDM-Ausgangssignals an den Prozessor (1203), um so eine Rückkopplungsschleife zu erzeugen, umfasst.

77. Verfahren nach Anspruch 75, wobei der Identifizierungsschritt das Ausführen einer Simulationsroutine zum Identifizieren der Betriebsparameter, um eine Ist-Leistung zu erzielen, die innerhalb einer vorbestimmten Toleranz der Soll-Leistung liegt, beinhaltet.

78. Verfahren nach Anspruch 75, wobei der Identifizierungsschritt das Abrufen der Betriebsparameter für den Pumplaser (3) von einem Speicher (1204), um eine Ist-Leistung zu erzielen, die innerhalb einer vorbestimmten Toleranz der Soll-Leistung liegt, beinhaltet.

79. Verfahren nach Anspruch 75, das weiterhin einen Schritt des Speichems von Satzen von Betriebsbedingungen im Speicher (1204) in Verbindung mit unterschiedlichen Soll-Leistungen umfasst.

80. Verfahren nach Anspruch 76, wobei die Soll-Leistung die vorbestimmte Verstärkungsleistung ist, und das weiterhin einen Schritt des Berechnens der vorbestimmten Verstärkungsleistung aus dem abgetasteten WDM-Ausgangssignal und einem abgetasteten optischen WDM-Signal, das in den Raman-Verstärker (100; 30, 32, 34) eingegeben wird, umfasst.

81. Verfahren nach Anspruch 80, das weiterhin einen Schritt des Überwachens einer Ausgangsleistung des Raman-Verstärkers (100; 30, 32, 34) umfasst.

82. Verfahren nach Anspruch 81, das weiterhin einen Schritt des Angleichens der Betriebsparameter, um so die Ausgangsleistung innerhalb einer vorbestimmten Toleranz der Soll-Leistung zu halten, umfasst.

83. Verfahren nach Anspruch 82, wobei der Überwachungsschritt das Empfangen einer Anzeige eines Pegels eines eingegebenen WDM-Signals und das Berechnen eines Verstärkungsfaktors, indem ein Verhältnis des abgetasteten WDM-Ausgangssignals zu dem eingegebenen WDM-Signal gefunden wird, um so zu bestimmen, ob ein Ausmaß an Verstärkung, das von dem Raman-Verstärker (100; 30, 32, 34) bereitgestellt wird, mit der Soll-Leistung konsistent ist, beinhaltet.

84. Verfahren nach Anspruch 81, das weiterhin Schritte des Empfangens von Signalpegeldaten des optischen WDM-Signals, wenn es von einem benachbarten kaskadierten Raman-Verstärker ausgegeben wird, wobei der benachbarte kaskadierte Raman-Verstärker durch den Lichtwellenleiter (2) mit dem Raman-Verstärker (100; 30, 32, 34) verbunden ist; und des Bestimmens eines Signalpegels des optischen WDM-Signals, wenn es in den Raman-Verstärker (100; 30, 32, 34) eingegeben wird, indem die Signalpegeldaten mit Lichtwellenleiterverlustdaten verglichen werden, umfasst.

85. Verfahren nach Anspruch 81, das weiterhin das Aufteilen des optischen WDM-Ausgangssignals in eine vorbestimmte Anzahl von separaten Signalen, wobei jedes bei einer unterschiedlichen Wellenlänge in der Verstärkungsbandbreite zentriert ist, wobei die vorbestimmte Anzahl von separaten Signalen in Bezug auf die Anzahl mindestens so groß wie die Anzahl von WDM-Kanälen in dem optischen WDM-Signal ist, umfasst.

86. Verfahren nach Anspruch 81, das weiterhin das Aufteilen des optischen WDM-Ausgangssignals in eine vorbestimmte Anzahl von separaten Signalen, wobei jedes bei einer unterschiedlichen Wellenlänge in der Verstärkungsbandbreite zentriert ist, wobei die vorbestimmte Anzahl von separaten Signalen in Bezug auf die Anzahl der Anzahl von Pumplasern (3) entspricht, umfasst.

87. Verfahren nach Anspruch 76, das weiterhin das Vergleichen des abgetasteten WDM-Ausgangssignals mit der Soll-Leistung und das Bestimmen, ob eine Abweichung zwischen diesen größer als eine vorbestimmte Toleranz ist, umfasst.

88. Verfahren nach Anspruch 87, wobei, wenn die Abweichung größer als die vorbestimmte Toleranz ist, eine Ausgangsleistung mindestens eines der mehreren Pumplaser (3), der ein Gewinnprofil aufweist, das in Bezug auf die Wellenlänge einem Bereich von Wellenlängen entspricht, in dem die Abweichung auftrat, schrittweise angeglichen wird.

89. Verfahren nach Anspruch 87, wobei, wenn die Abweichung größer als die vorbestimmte Toleranz ist, eine Ausgangsleistung einer Gruppe der mehreren Pumplaser (3) angeglichen wird, wobei die Gruppe Pumplaser (3) enthält, die benachbarte Arbeitswellenlängen bezüglich des Satzes von Arbeitswellenlängen aller der mehreren Pumplaser (3) aufweisen.

90. Verfahren nach Anspruch 87, wobei der Vergleichsschritt das Bestimmen umfasst, ob jeweilige Abtastwerte des abgetasteten WDM-Ausgangssignals nicht innerhalb der vorbestimmten Toleranz liegen, gemäß einer Gleichung:

$$\text{ABS [Soll} - \text{überwacht]} \leq \text{vorbestimmte Toleranz.}$$

91. Verfahren nach Anspruch 90, wobei, wenn nur ein Abtastwert in dem abgetasteten WDM-Ausgangssignal größer als die vorbestimmte Toleranz ist, identifiziert wird, welcher der mehreren Pumplaser (3) ein Raman-Gewinnprofil mit einer Gewinnspitze, die einer Wellenlänge eines Abtastwerts in dem abgetasteten WDM-Ausgangssignal am nächsten kommt, der größer als die vorbestimmte Toleranz ist, erzeugt.

92. Verfahren nach Anspruch 91, wobei der Angleichungsschritt eine Menge des Pumplichts von der optischen Pumpe (1), die das Raman-Gewinnprofil mit einer Gewinnspitze erzeugt, die der Wellenlänge des Abtastwerts am nächsten kommt, der größer als die vorbestimmte Toleranz ist, angleicht.

93. Verfahren nach Anspruch 90, wobei, wenn mehr als ein benachbarter Abtastwert des Abtastsignals größer als die vorbestimmte Toleranz ist, ein sekundäres Soll-Verstärkungsprofil entwickelt wird.

94. Verfahren nach Anspruch 93, wobei der Angleichungsschritt das Angleichen des Ausgangs des mindestens einen Steuersignals, um so eine Menge des Pumplichts von den mehreren Pumplasern (3) mit einer Menge, die dem sekundären Soll-Verstärkungsprofil entspricht, anzugleichen, beinhaltet.

95. Verfahren nach Anspruch 93, wobei der Schritt des Entwickelns eines sekundären Soll-Verstärkungsprofils das Abrufen des sekundären Soll-Verstärkungsprofils vom Speicher (1204) beinhaltet.

96. Verfahren nach Anspruch 95, wobei der Schritt des Abrufens des sekundären Soll-Verstärkungsprofils vom Speicher das Verwenden von Mustererkennung zum Identifizieren eines adäquaten sekundären Soll-Verstärkungsprofils aus mehreren Kandidatenprofilen beinhaltet.

97. Verfahren nach Anspruch 96, wobei der Schritt des Verwendens von Mustererkennung das Berechnen einer Anpassung mit Hilfe der Wenige-Quadrate-Einpassung (oder Methode) des sekundären Soll-Verstärkungsprofils mit den mehreren Kandidatenprofilen beinhaltet.

98. Verfahren nach Anspruch 74, das weiterhin Schritte des Empfangens einer Anzeige, dass sich eine Betriebsbedingung für den Raman-Verstärker (100; 30, 32, 34) in Bezug auf eine Anfangseinstellung von Betriebsparametern geändert hat; und des Abändems der Soll-Leistung, um die Änderung der Betriebsbedingung zu berücksichtigen, umfasst.

99. Verfahren nach Anspruch 98, wobei der Abänderungsschritt das Angleichen einer Form der Soll-Leistung beinhaltet.

100. Verfahren nach Anspruch 98, wobei der Abänderungsschritt das Angleichen einer Bandbreite der Verstärkungsbandbreite beinhaltet.

101. Verfahren nach Anspruch 100, wobei der Abänderungsschritt das Aktivieren eines zuvor inaktiven Teilsatzes von Pumplasern (3) aus den mehreren Pumplasern (3) beinhaltet.

102. Verfahren nach Anspruch 98, wobei die Betriebsbedingung die Pumpeninteraktion, die Lichtwellenleiterdämpfung und eine Änderung der Verstärkungsleistung in einem benachbarten kaskadierten Raman-Verstärker (100; 30, 32, 34) ist.

103. Verfahren nach Anspruch 74, wobei der Identifizierungsschritt das Identifizieren eines gemeinsamen Satzes von Betriebsparametern für eine erste Gruppe der Pumplaser (3) und das einheitliche Ändern der Betriebsparameter für die erste Gruppe der Pumplaser (3), wenn die Ist-Leistung des Raman-Verstärkers (100; 30, 32, 34) nicht innerhalb der vorbestimmten Toleranz der Soll-Leistung liegt, wobei Pumplaser (3) in der ersten Gruppe Arbeitswellenlängen aufweisen, die entweder in Bezug auf die Wellenlänge alle länger oder in Bezug auf die Wellenlänger alle kürzer als die einer zweiten Gruppe der mehreren Pumplaser (3) sind, beinhaltet.

104. Verfahren nach Anspruch 103, wobei der Schritt des Identifizierens eines gemeinsamen Satzes von Betriebsparametern das Verwenden einer Simulationsroutine, die konfiguriert ist, Ausgangsleistungen zu berechnen, um die Soll-Leistung zu erzeugen, einer Nachschlagetabelle, die die Ausgangsleistungen enthält, um die Soll-Leistung zu erzeugen, und eines Überlagerungsprozesses beinhaltet.

105. Verfahren nach Anspruch 103, wobei eine Gesamtzahl von Pumplasern (3) in der ersten Gruppe größer als eine Gesamtzahl von Pumplasern (3) in der zweiten Gruppe ist.

106. Verfahren nach Anspruch 103, wobei die Arbeitswellenlängen der Pumplaser (3) in der ersten Gruppe kürzer als die Arbeitswellenlängen für die Pumplaser (3) in der zweiten Gruppe sind.

107. Verfahren nach Anspruch 106, wobei der Angleichungsschritt bewirkt, dass mehr optische Pumpleistung von den Pumplasern (3) in der ersten Gruppe in den Lichtwellenleiter eingespeist wird als optische Pumpleistung von der zweiten Gruppe.

108. Verfahren nach Anspruch 106, wobei der Angleichungsschritt das Herabsetzen des Ausgangs der ersten Gruppe von Pumplasern (3) bezüglich der zweiten Gruppe, um so einem zusammengefassten Gewinnprofil des Raman-Verstärkers (100; 30, 32, 34) eine positive Neigung zu verleihen, beinhaltet.

109. Verfahren nach Anspruch 106, wobei der Angleichungsschritt das Erhöhen des Ausgangs der ersten Gruppe von Pumplasern (3) bezüglich der zweiten Gruppe, um so einem zusammengefassten Gewinnprofil des Raman-Verstärkers (100; 30, 32, 34) eine negative Neigung zu verleihen, beinhaltet.

110. Verfahren nach Anspruch 98, wobei der Empfangsschritt das Empfangen der Betriebsbedingung von einem entfernten Computer beinhaltet.

111. Verfahren nach Anspruch 110, wobei der entfernte Computer ein Prozessor in einem benachbarten kaskadierten Raman-Verstärker, der durch den Lichtwellenleiter (2) mit dem Raman-Verstärker (100; 30, 32, 34) verbunden ist, ist.

112. Verfahren nach Anspruch 110, wobei der entfernte Computer ein Computer ist, der mehrere kaskadierte Raman-Verstärker mittels einer Nachrichtenverbindung miteinander verbindet.

113. Verfahren nach Anspruch 112, wobei mindestens ein Teil der Nachrichtenverbindung ein Internet ist.

114. Verfahren nach Anspruch 110, wobei der Empfangsschritt das Empfangen der Betriebsbedingung über eine Web-Seite, die von dem entfernten Computer gehostet wird, beinhaltet.

115. Verfahren nach Anspruch 114, wobei der Empfangsschritt das Empfangen von Java- und ActiveX-Anweisungen von dem entfernten Computer beinhaltet, und das auf einem Prozessor (1203) in dem Raman-Verstärker (100; 30, 32, 34) läuft.

116. Verfahren nach Anspruch 110, wobei sich die Betriebsbedingungen auf eine Änderung eines Betriebszustands eines benachbarten Raman-Verstärkers beziehen und der Abänderungsschritt das Abändern einer Form der Soll-Leistung, um die Änderung des Betriebszustands des benachbarten Raman-Verstärkers auszugleichen, beinhaltet.

117. Optisches Kommunikationssystem, das Folgendes umfasst:

eine Steuereinheit (4) nach einem der Ansprüche 1 bis 50, die eine Schnittstelle (1213) zu einem Datenkommunikationsnetz enthält;
einen ersten Raman-Verstärker (100; 30, 32, 34), der konfiguriert ist, ein optisches WDM-Signal optisch zu verstärken, während es sich durch einen Lichtwellenleiter (2) ausbreitet;
den Lichtwellenleiter (2) und
einen zweiten Raman-Verstärker, der konfiguriert ist, das optische WDM-Signal, das vom ersten Raman-Verstärker bereitgestellt wird, zu empfangen und zu Ramanverstärken, wobei der zweite Raman-Verstärker eine Kommunikationsschnittstelle aufweist, die an das Datenkommunikationsnetz ankoppelt, wobei
die Steuereinheit (4) konfiguriert ist, eine Steuernachricht an den zweiten Raman-Verstärker zu senden, die den zweiten Raman-Verstärker anweist, eine Soll-Leistung davon anzugleichen, und
der zweite Raman-Verstärker konfiguriert ist, die Soll-Leistung und eine Ist-Leistung davon anzugleichen, indem ein optischer Ausgang von mindestens einem Teilsatz mehrerer Pumplaser (3) darin angeglichen wird, wobei der zweite Raman-Verstärker eine Lichtquelle enthält, die konfiguriert ist, ein Laserlicht mit einer vorbestimmten zentralen Wellenlänge zu erzeugen, wobei das Laserlicht konfiguriert ist, ein Verstärkungsprofil in einem Raman-Gewinnmittel zu erzeugen, wenn es darauf angewendet wird, wobei das Verstärkungsprofil ein erstes Verstärkungsband ist; und
die Steuereinheit (4) konfiguriert ist, einen Betriebszustand der Lichtquelle zu ändern, wenn die Steuereinheit (4) eine Änderung von dem ersten Verstärkungsband zu einem zweiten Verstärkungsband bewirkt, wobei der Betriebszustand einer der folgenden ist:

a) ein Ein-Zustand oder ein Aus-Zustand;
b) eine Zunahme oder Abnahme der Pumpleistung, die in einem Raman-Verstärker (100; 30, 32, 34) wirkt.

118. System nach Anspruch 117, wobei mindestens ein Teil des Datenkommunikationsnetzes ein Internet ist.

119. System nach Anspruch 117, wobei der erste Raman-Verstärker (100; 30, 32, 34) eine Schnittstelle enthält, die konfiguriert ist, der Steuereinheit (4) einen Betriebszustand davon zu melden, wobei der Betriebszustand beinhaltet, ob eine optische Kapazität eines darin enthaltenen Pumplasers (3) unterhalb eines vorbestimmten Niveaus liegt.

120. System nach Anspruch 119, wobei, als Antwort auf das Empfangen der Steuernachricht, der zweite Raman-Verstärker konfiguriert ist, eine Verstärkungsleistung davon abzuändern, um dem entgegenzuwirken, dass die optische Ausgangskapazität des Pumplasers des ersten Raman-Verstärkers unterhalb eines vorbestimmten Niveaus liegt.

121. Computerprogramm zum Steuern einer Verstärkungsleistung eines Raman-Verstärkers (100; 30, 32, 34), der mehrere Pumplaser (3) enthält, die eine Lichtquelle enthalten, die konfiguriert ist, ein Licht mit einer vorbestimmten Wellenlänge zu erzeugen, wobei das Laserlicht konfiguriert ist, ein Verstärkungsprofil in einem Raman-Gewinnmittel zu erzeugen, wenn es darauf angewendet wird, wobei das Verstärkungsprofil ein erstes Verstärkungsband ist, wobei das Programm, wenn es auf einem Computer ausgeführt wird, bewirkt, dass der Computer die folgenden Schritte durchführt:

Identifizieren von Betriebsparametern für die mehreren Pumplaser (3), die einer Soll-Leistung für den Raman-Verstärker entsprechen, wobei die Soll-Leistung Folgendes ist:

eine vorbestimmte Verstärkungsleistung, die über eine Verstärkungsbandbreite spezifiziert ist, wobei die Verstärkungsbandbreite mindestens so groß wie eine Signalbandbreite eines optischen WDM-Signals ist, das Raman-verstärkt werden soll, während es sich durch einen Lichtwellenleiter ausbreitet, und eine Ausgangssignalpegelleistung, die über die Verstärkungsbandbreite spezifiziert ist;

einen Steuersignalbildungsmechanismus, der ein Steuersignal von den Betriebsparametern ableitet; und Mittel zum Senden des Steuersignals an die mehreren Pumplaser (3) zum Angleichen einer Menge des Lichts, das von den mehreren Pumplasern (3), in den Lichtwellenleiter eingeführt wurde, um eine Ist-Leistung zu erzielen, die innerhalb einer vorbestimmten Toleranz der Soll-Leistung liegt,

und weiterhin Folgendes umfasst:

Bereitstellen von mehr als zwei Lichtquellen, die konfiguriert sind, Laserlichter mit unterschiedlichen zentralen Wellenlängen zu erzeugen, um so ein optisches Signal in einem Raman-Gewinnmittel mit dem ersten Verstärkungsband zu verstärken; und

steuerbares Ändern eines Betriebszustands von mindestens einer der Lichtquellen, um so ein zweites Verstärkungsband in dem Raman-Gewinnmittel zu ändern, wobei ein Wellenlängenbereich des zweiten Verstärkungsbands für ein- erstes Verstärkungsband anders ist, wobei der Schritt des steuerbaren Änderns Folgendes beinhaltet:

a) Abschalten einer Lichtquelle oder Einschalten einer Lichtquelle; und
b) Erhöhen oder Herabsetzen der Pumpleistung, die in einem Raman-Verstärker (100; 30, 32, 34) wirkt.

122. Computerprogrammprodukt nach Anspruch 121, das weiterhin Mittel zum Überwachen einer Ausgangsleistung des Raman-Verstärkers umfasst.

123. Computerprogrammprodukt nach Anspruch 122, das weiterhin Mittel zum Halten der Ausgangsleistung innerhalb einer vorbestimmten Toleranz der Soll-Leistung umfasst.

124. Computerprogrammprodukt nach Anspruch 122, das weiterhin Mittel zum Vergleichen der Ausgangsleistung mit der Soll-Leistung und zum Bestimmen, ob eine Abweichung zwischen diesen größer als eine vorbestimmte Toleranz ist, umfasst.

125. Computerprogrammprodukt nach Anspruch 124, das weiterhin Mittel zum Angleichen einer Menge des Pumplichts von individuellen Pumplasern (3) oder Gruppen von Pumplasern (3) in Abhängigkeit davon, ob die Abweichung vornehmlich einem Pumplaser oder einer Gruppe von Pumplasern (3) zuordenbar ist, umfasst.

126. Computerprogrammprodukt nach Anspruch 124, das weiterhin Mittel zum Entwickeln eines sekundären Soll-Verstärkungsprofils, wenn ein Spektralband der Abweichung vornehmlich mehr als einem Pumplaser zuordenbar ist, umfasst.

127. Computerprogrammprodukt nach Anspruch 121, das weiterhin Mittel zum Empfangen einer Anzeige, dass sich eine Betriebsbedingung für den Raman-Verstärker (100; 30, 32, 34) in Bezug auf eine Anfangseinstellung von Betriebsparametern geändert hat; und Mittel zum Abändern der Soll-Leistung, um die Änderung der Betriebsbedingung zu berücksichtigen, umfasst.

128. Computerprogrammprodukt nach Anspruch 127, wobei das Mittel zum Abändern Mittel zum Angleichen einer Form der Soll-Leistung beinhaltet.

129. Computerprogrammprodukt nach Anspruch 127, wobei das Mittel zum Abändern Mittel zum Angleichen einer Bandbreite der Soll-Leistung und einer Verstärkungsbandbreite des Raman-Verstärkers (100; 30, 32, 34) beinhaltet.

130. Computerprogrammprodukt nach Anspruch 127, wobei das Mittel zum Abändern Mittel zum Angleichen von optischen Ausgängen von Gruppen von Pumplasern (3) von den mehreren Pumplasern (3) beinhaltet.

131. Computerprogrammprodukt nach Anspruch 130, wobei das Mittel zum Abändern Mittel zum Angleichen eines optischen Ausgangs einer ersten Gruppe von Pumplasern (3) durch mehr als eine zweite Gruppe von Pumplasern, um so einem zusammengefassten Gewinnprofil des Raman-Verstärkers eine Neigung zu verleihen.

132. Computerprogrammprodukt nach Anspruch 127, das weiterhin Mittel zum Empfangen einer Betriebsbedingung von einem entfernten Computer und zum Verwenden der Betriebsbedingung in dem Mittel zum Identifizieren, um eine Soll-Leistung zu identifizieren, die der Betriebsbedingung entspricht, umfasst.

133. Computerprogrammprodukt nach Anspruch 132, wobei die Betriebsbedingung sich auf eine Änderung eines Betriebszustands eines benachbarten Raman-Verstärkers bezieht und das Mittel zum Angleichen Mittel zum Angleichen einer Form der Soll-Leistung, um die Änderung des Betriebszustands des benachbarten Raman-Verstärkers auszugleichen, beinhaltet.

**Revendications**

1. Contrôleur pour un amplificateur de Raman qui comporte une pluralité de lasers de pompage incluant une source de lumière qui est configurée pour produire une lumière qui présente une longueur d'onde prédéterminée, ladite lumière laser étant configurée pour produire un profil d'amplification dans un milieu de gain de Raman lorsqu'elle est appliquée dessus, ledit profil d'amplification est une première bande d'amplification, le contrôleur (4) comprenant:

   une mémoire (1204) qui est configurée pour contenir des instructions et des données lisibles par ordinateur; et un processeur (1203) qui comporte une interface (1213) qui est configurée pour communiquer avec des dispositifs externes, ledit processeur (1203) étant configuré pour exécuter lesdites instructions lisibles par ordinateur et pour mettre en oeuvre un mécanisme d'établissement cible ainsi qu'un mécanisme d'application de paramètre, dans lequel ledit mécanisme d'établissement cible est configuré pour identifier une performance cible et des paramètres de fonctionnement correspondants pour la pluralité de lasers de pompage (3) afin de réaliser la performance cible, ladite performance cible concernant une condition de fonctionnement assurée sur ledit processeur depuis au moins l'un desdits dispositifs externes, ladite performance cible étant au moins l'une d'une performance d'amplification prédéterminée qui est spécifiée sur une bande passante d'amplification, ladite bande passante d'amplification étant au moins aussi grande qu'une bande passante de signal d'un signal optique WDM qui est amplifié par un amplificateur de Raman (100; 30, 32, 34) tandis qu'il se propage au travers d'une fibre optique (2) et d'une performance de niveau de signal de sortie qui est spécifiée sur ladite bande passante d'amplification, et ledit mécanisme d'application de paramètre est configuré pour émettre en sortie au moins un signal de commande qui définit lesdits paramètres de fonctionnement de manière à régler une quantité de lumière qui est introduite à l'intérieur de ladite fibre optique (2) depuis ladite pluralité de lasers de pompage (3) afin de réaliser une performance réelle qui est à l'intérieur d'une tolérance prédéterminée de ladite performance cible,
   dans lequel le contrôleur (4) est configuré pour modifier un état de fonctionnement de la source de lumière lorsque ledit contrôleur (4) provoque un changement depuis ladite première bande d'amplification jusqu'à une seconde bande d'amplification, dans lequel ledit état de fonctionnement est un état pris parmi:

      a) un état d'activation ou un état de désactivation;
      b) une augmentation ou une diminution de la puissance de pompage opérant dans un amplificateur de Raman (100; 30, 32, 34).

2. Contrôleur selon la revendication 1, dans lequel ledit mécanisme d'établissement cible est adapté pour identifier lesdits paramètres de fonctionnement par simulation afin de réaliser une performance réelle qui est à l'intérieur de la tolérance prédéterminée de ladite performance cible.

3. Contrôleur selon la revendication 1, dans lequel ledit mécanisme d'établissement cible est configuré pour retrouver à partir d'une mémoire (1204) des paramètres de fonctionnement pour le laser de pompage (3) afin de réaliser une performance réelle qui est à l'intérieur de la tolérance prédéterminée de la performance cible.

4. Contrôleur selon la revendication 3, dans lequel ladite mémoire (1204) est adaptée pour stocker lesdites conditions de fonctionnement en association avec ladite performance cible.

5. Contrôleur selon la revendication 1, dans lequel ladite performance cible est la performance d'amplification prédéterminée; et ledit mécanisme d'établissement cible est configuré pour calculer ladite performance d'amplification prédéterminée à partir d'un signal de sortie WDM échantillonné et d'un signal d'entrée échantillonné.

6. Contrôleur selon la revendication 5, dans lequel ledit processeur (1203) est configuré pour régler lesdits paramètres de fonctionnement de manière à maintenir une performance de sortie réelle à l'intérieur de la tolérance prédéterminée de ladite performance d'amplification cible.

**7.** Contrôleur selon la revendication 1, dans lequel ladite performance cible est ladite performance de niveau de signal de sortie; et ledit mécanisme d'établissement cible est configuré pour surveiller le signal optique WDM lors d'une (émission en) sortie depuis ledit amplificateur de Raman (100; 30, 32, 34) de manière à déterminer une performance d'amplification réelle.

**8.** Contrôleur selon la revendication 7, dans lequel ledit processeur (1203) est configuré pour recevoir une indication d'un niveau d'un signal WDM d'entrée; et pour calculer un gain d'amplification dudit amplificateur de Raman (100; 30, 32, 34) en calculant un rapport dudit signal optique WDM lors d'une (émission en) sortie sur ledit signal d'entrée de manière à déterminer si une quantité d'amplification assurée par ledit amplificateur de Raman (100; 30, 32, 34) est cohérente avec ladite performance cible.

**9.** Contrôleur selon la revendication 7, dans lequel ledit processeur (1203) est configuré pour déterminer un niveau du signal optique WDM lors d'une entrée sur ledit amplificateur de Raman (100; 30, 32, 34) à partir de données de niveau de signal de sortie qui sont fournies par un amplificateur de Raman adjacent, dans lequel ledit amplificateur de Raman adjacent est connecté à une entrée dudit amplificateur de Raman (100; 30, 32, 34) au moyen de ladite fibre optique (2), ledit processeur (1203) étant configuré pour calculer un niveau dudit signal optique WDM en comparant les données de niveau de signal et des données de perte de fibre.

**10.** Contrôleur selon la revendication 7, dans lequel ledit processeur (1203) est configuré pour surveiller ledit signal optique WDM lors d'une émission en sortie depuis ledit amplificateur de Raman (100; 30, 32, 34) avec au moins autant de points d'échantillonnage que de canaux WDM dans le signal optique WDM.

**11.** Contrôleur selon la revendication 10, dans lequel ledit processeur (1203) est configuré pour recevoir des échantillons spectraux séparés du signal optique WDM en provenance d'un démultiplexeur (18) qui sépare le signal optique WDM selon une pluralité de signaux.

**12.** Contrôleur selon la revendication 7, dans lequel ledit processeur (1203) est configuré pour surveiller un signal de sortie WDM dudit amplificateur de Raman (100; 30, 32, 34) en surveillant au moins autant d'échantillons pris à différentes longueurs d'onde qu'un nombre desdits lasers de pompage (3) dans ledit amplificateur de Raman (100; 30, 32, 34).

**13.** Contrôleur selon la revendication 7, dans lequel ledit processeur (1203) surveille le signal de sortie WDM en surveillant un nombre prédéterminé d'échantillons pris à différentes longueurs d'onde, ledit nombre prédéterminé d'échantillons étant dans une plage qui est délimitée par un nombre des lasers de pompage (3) dans l'amplificateur de Raman (100; 30, 32, 34) et par un nombre de canaux WDM dans lesdits signaux optiques WDM.

**14.** Contrôleur selon la revendication 6, dans lequel ledit processeur (1203) est configuré pour comparer ledit signal de sortie WDM échantillonné avec ladite performance cible et pour déterminer si une déviation entre est supérieure à une tolérance prédéterminée.

**15.** Contrôleur selon la revendication 14, dans lequel, si la déviation est supérieure à la tolérance prédéterminée, le processeur (1203) est adapté pour régler de façon incrémentielle une puissance de sortie d'au moins celui de la pluralité de lasers de pompage (3) qui présente un profil de gain qui correspond en termes de longueur d'onde à une bande de longueurs d'onde dans laquelle la déviation s'est produite.

**16.** Contrôleur selon la revendication 15, dans lequel, si la déviation est supérieure à la tolérance prédéterminée, le processeur (1203) est adapté pour régler une sortie d'un groupe de la pluralité de lasers de pompage (3), ledit groupe contenant des lasers de pompage (3) qui présentent des longueurs d'onde de fonctionnement adjacentes par rapport à un jeu complet de longueurs d'onde de fonctionnement pour la pluralité de lasers de pompage (3).

**17.** Contrôleur selon la revendication 14, dans lequel ledit processeur (1203) est adapté pour déterminer si des échantillons respectifs du signal de sortie WDM ne sont pas à l'intérieur de ladite tolérance prédéterminée conformément à une équation:

$$\text{ABS [cible - surveillé]} \leq \text{tolérance prédéterminée.}$$

**18.** Contrôleur selon la revendication 17, dans lequel, si seulement un échantillon d'une série d'échantillons est supérieur à la tolérance prédéterminée, le processeur (1203) est adapté pour identifier lequel de ladite pluralité de lasers de pompage (3) produit un profil de gain de Raman qui présente une crête de gain la plus proche d'une longueur d'onde au niveau de laquelle la déviation s'est produite.

**19.** Contrôleur selon la revendication 18, dans lequel ledit mécanisme d'amplification de paramètre est configuré pour régler une quantité de lumière de pompage en provenance d'une pompe optique (1) incluant lesdits lasers de pompage (3) qui produit le profil de gain de Raman présentant une crête de gain la plus proche de la longueur d'onde au niveau de laquelle la déviation s'est produite.

**20.** Contrôleur selon la revendication 17, dans lequel, si plus d'un échantillon adjacent d'une série d'échantillons est supérieur à ladite tolérance prédéterminée, ledit processeur (1203) est adapté pour développer un profil d'amplification cible secondaire.

**21.** Contrôleur selon la revendication 20, dans lequel ledit mécanisme d'amplification de paramètre est configuré pour régler la sortie du signal de commande de manière à régler une quantité de lumière de pompage en provenance de la pluralité de lasers de pompage (3) selon une quantité qui correspond au profil d'amplification cible secondaire.

**22.** Contrôleur selon la revendication 20, dans lequel ledit processeur (1203) est configuré pour retrouver ledit profil d'amplification cible secondaire à partir de ladite mémoire.

**23.** Contrôleur selon la revendication 22, dans lequel ledit processeur (1203) est configuré pour identifier ledit profil d'amplification cible secondaire à partir d'une pluralité de profils de candidat au moyen d'un mécanisme de reconnaissance de motif.

**24.** Contrôleur selon la revendication 23, dans lequel ledit processeur (1203) est configuré pour identifier ledit profil d'amplification cible secondaire en calculant un ajustement par les moindres carrés dudit profil d'amplification cible secondaire en relation avec ladite pluralité de profils de candidat.

**25.** Contrôleur selon la revendication 1, dans lequel ledit processeur (1203) est en outre configuré pour mettre en oeuvre un mécanisme de réglage cible qui est configuré pour régler ladite performance cible lorsque ladite interface (1213) reçoit une indication en provenance de l'un desdits dispositifs externes qui indique que ladite condition de fonctionnement a changé.

**26.** Contrôleur selon la revendication 1, dans lequel ledit mécanisme de réglage cible est configuré pour régler une forme de ladite performance cible.

**27.** Contrôleur selon la revendication 26, dans lequel ledit mécanisme de réglage cible est configuré pour identifier au moyen d'une simulation des paramètres de fonctionnement pour les lasers de pompage (3) qui correspondent à une forme de ladite performance cible.

**28.** Contrôleur selon la revendication 26, dans lequel ledit mécanisme de réglage cible est configuré pour identifier au moyen d'une consultation en table des paramètres de fonctionnement pour les lasers de pompage (3) qui correspondent à une forme de ladite performance cible.

**29.** Contrôleur selon la revendication 25, dans lequel ledit mécanisme de réglage cible est configuré pour régler une bande passante de ladite bande passante d'amplification.

**30.** Contrôleur selon la revendication 29, dans lequel ledit mécanisme de réglage cible est configuré pour identifier lesdits paramètres de fonctionnement correspondant à ladite bande passante d'amplification au moyen de ladite au moins une procédure prise parmi une simulation et une consultation en table.

**31.** Contrôleur selon la revendication 29, dans lequel ledit mécanisme de réglage cible est configuré pour permettre une utilisation en fonctionnement d'un sous-jeu différent de lasers de pompage non opérants au préalable (3) pris parmi ladite pluralité de lasers de pompage (3).

**32.** Contrôleur selon la revendication 25, dans lequel ledit mécanisme de réglage cible est configuré pour régler ladite performance cible après identification d'une modification au niveau d'une condition de fonctionnement, ladite condition de fonctionnement étant au moins une condition prise parmi une valeur de l'interaction de pompage, une perte de fibre et une modification de performance d'amplification par rapport à un amplificateur de Raman en cascade adjacent.

33. Contrôleur selon la revendication 1, dans lequel ledit mécanisme d'établissement cible est configuré pour identifier un jeu commun de paramètres de fonctionnement pour un premier groupe des lasers de pompage (3) et pour modifier de manière uniforme les paramètres de fonctionnement pour le premier groupe de lasers de pompage (3) lorsque ledit processeur (1203) détermine qu'une performance réelle dudit amplificateur de Raman (100; 30, 32, 34) n'est pas à l'intérieur d'une tolérance prédéterminée de ladite performance cible.

34. Contrôleur selon la revendication 33, dans lequel le processeur (1203) est configuré pour calculer des puissances de sortie respectives de chaque laser de pompage (3) dans le premier groupe et des lasers de pompage restants (3) dans un second groupe de ladite pluralité de lasers de pompage (3).

35. Contrôleur selon la revendication 34, dans lequel le processeur (1203) est configuré pour calculer les puissances de sortie respectives de chaque laser de pompage (3) dans le premier groupe et dans le second groupe à partir d'au moins un processus pris parmi un sous-programme de simulation, une table de consultation et un processus de superposition.

36. Contrôleur selon la revendication 33, dans lequel un nombre total de lasers de pompage (3) dans le premier groupe est supérieur à un nombre total de lasers de pompage (3) dans le second groupe.

37. Contrôleur selon la revendication 1, dans lequel le processeur (1203) est configuré pour commander la puissance de sortie de chacun de la pluralité de lasers de pompage (3) afin qu'elle augmente lorsqu'une longueur d'onde de fonctionnement des lasers de pompage respectifs (3) diminue.

38. Contrôleur selon la revendication 1, dans lequel la pluralité de lasers de pompage (3) est configurée pour produire une lumière à des longueurs d'onde centrales différentes et pour fonctionner à l'intérieur d'une bande de longueurs d'onde présentant un côté de longueurs d'onde plus courtes et un côté de longueurs d'onde plus longues, ledit côté de longueurs d'onde plus courtes contenant un premier groupe de lasers de pompage (3) présentant des longueurs d'onde centrales de fonctionnement qui sont inférieures à une longueur d'onde intermédiaire entre une longueur d'onde centrale la plus courte et une longueur d'onde centrale la plus longue des lasers de pompage (3), et le côté de longueurs d'onde plus longues contenant un second groupe de lasers de pompage (3) présentant des longueurs d'onde centrales de fonctionnement qui sont supérieures à la longueur d'onde intermédiaire.

39. Contrôleur selon la revendication 38, dans lequel le premier groupe de lasers de pompage (3) inclut davantage de lasers de pompage (3) que le second groupe de lasers de pompage (3).

40. Contrôleur selon la revendication 38, dans lequel le processeur (1203) est configuré pour commander la pluralité de lasers de pompage (3) de telle sorte qu'une puissance de pompage optique qui est lancée à l'intérieur de la fibre optique du fait du premier groupe soit supérieure à une puissance de pompage optique qui est lancée à l'intérieur de la fibre optique du fait du second groupe.

41. Contrôleur selon la revendication 38, dans lequel ledit mécanisme d'application de paramètre est configuré pour émettre en sortie un signal de commande seulement sur le sous-jeu de lasers de pompage (3) sur le côté de longueurs d'onde plus longues de manière à imprimer une inclinaison à un profil de gain composite dudit amplificateur de Raman (100; 30, 32, 34) sur toute la bande passante d'amplification.

42. Contrôleur selon la revendication 41, dans lequel ledit mécanisme d'application de paramètre est configuré pour imprimer une inclinaison en pente négative au profil de gain en augmentant une sortie optique du sous-jeu de lasers de pompage (3) dans le second groupe.

43. Contrôleur selon la revendication 41, dans lequel ledit mécanisme d'application de paramètre est configuré pour imprimer une inclinaison en pente positive au profil de gain en diminuant une sortie optique du sous-jeu de lasers de pompage (3) dans le premier groupe.

44. Contrôleur selon la revendication 1, dans lequel ledit processeur (1203) est adapté pour recevoir, via ladite interface (1213), lesdites données et au moins une partie desdites conditions de fonctionnement en provenance d'un ordinateur à distance.

**45.** Contrôleur selon la revendication 44, dans lequel ladite interface (1213) est configurée pour une connexion sur un Internet pour recevoir une information en provenance d'au moins un élément pris parmi l'ordinateur à distance et un amplificateur de Raman adjacent qui est connecté audit amplificateur de Raman (100; 30, 32, 34) au moyen de la fibre optique (2).

**46.** Contrôleur selon la revendication 44, dans lequel le contrôleur (4) est configuré de telle sorte que lesdites instructions lisibles par ordinateur puissent être déchargées sur ladite mémoire (1214) depuis ledit ordinateur à distance.

**47.** Contrôleur selon la revendication 46, dans lequel lesdites instructions lisibles par ordinateur incluent au moins soit des instructions Java, soit des instructions ActiveX.

**48.** Contrôleur selon la revendication 47, dans lequel ledit processeur (1203) est configuré pour recevoir au moins soit lesdites instructions lisibles par ordinateur, soit lesdites données, soit lesdites conditions de fonctionnement en provenance dudit ordinateur à distance au moyen d'une page de la toile mondiale qui est hébergée dans ledit ordinateur à distance.

**49.** Contrôleur selon la revendication 44, dans lequel ledit processeur (1203) est configuré pour recevoir depuis ledit ordinateur à distance via ladite interface (1213) d'autres conditions de fonctionnement qui influencent une performance cible optimale.

**50.** Contrôleur selon la revendication 1, dans lequel ledit processeur (1203) est configuré pour recevoir via ladite interface des conditions de fonctionnement qui concernent un état de fonctionnement d'un amplificateur de Raman en cascade adjacent de manière à faire en sorte que ledit mécanisme d'établissement cible identifie des paramètres de fonctionnement pour les lasers de pompage (3) qui décaleront une modification au niveau de ladite performance d'amplification dudit amplificateur de Raman en cascade adjacent.

**51.** Amplificateur de Raman pour amplifier un signal optique WDM dans une fibre optique (2), lequel signal se propage au travers, comprenant:

un dispositif de pompage (1) qui inclut une pluralité de lasers de pompage (3) qui sont configurés pour produire une lumière qui est appliquée sur la fibre optique (2);
un coupleur optique (13) qui est configuré pour interconnecter optiquement le dispositif de pompage (1) avec la fibre optique (2); et
un contrôleur (4) selon l'une quelconque des revendications 1 à 50.

**52.** Amplificateur de Raman selon la revendication 51, comprenant en outre un coupleur de connexion intermédiaire (14) qui est configuré pour appliquer sur le processeur (1203) un signal de sortie WDM échantillonné en provenance de l'amplificateur de Raman (100; 30, 32, 34).

**53.** Amplificateur de Raman selon la revendication 52, comprenant en outre un démultiplexeur (18) qui est adapté pour diviser le signal optique de sortie WDM selon un nombre prédéterminé de signaux séparés dont chacun est centré à une longueur d'onde différente dans la bande passante d'amplification, dans lequel ledit nombre prédéterminé de signaux séparés est au moins aussi grand que le nombre de canaux WDM dans le signal optique WDM.

**54.** Amplificateur de Raman selon la revendication 52, comprenant en outre un démultiplexeur (18) qui est adapté pour diviser le signal optique de sortie WDM selon un nombre prédéterminé de signaux séparés dont chacun est centré à une longueur d'onde différente dans la bande passante d'amplification, dans lequel ledit nombre prédéterminé de signaux séparés correspond au nombre de lasers de pompage (3).

**55.** Amplificateur de Raman selon la revendication 52, dans lequel ledit processeur (1203) est configuré pour commander ledit signal de sortie WDM avec ladite performance cible et pour déterminer si une déviation entre est supérieure à une tolérance prédéterminée.

**56.** Amplificateur de Raman selon la revendication 55, dans lequel, si la déviation est supérieure à la tolérance prédéterminée, le processeur (1203) est adapté pour augmenter ou diminuer de façon incrémentielle une puissance de sortie d'au moins celui de la pluralité de lasers de pompage (3) qui présente un profil de gain qui correspond en termes de longueurs d'onde à une plage de longueurs d'onde dans laquelle la déviation s'est produite.

57. Amplificateur de Raman selon la revendication 55, dans lequel, si la déviation est supérieure à la tolérance prédéterminée, le contrôleur (4) est adapté pour régler une sortie d'un groupe de la pluralité de lasers de pompage (3), ledit groupe contenant des lasers de pompage (3) qui présentent des longueurs d'onde de fonctionnement adjacentes en relation avec le jeu de longueurs d'onde de fonctionnement de la pluralité de lasers de pompage (3).

58. Amplificateur de Raman selon la revendication 55, dans lequel ledit processeur (1203) est adapté pour déterminer si des échantillons spectraux respectifs dudit signal de sortie WDM ne sont pas à l'intérieur de ladite tolérance prédéterminée conformément à une équation:

$$\text{ABS [cible - surveillé]} \leq \text{tolérance prédéterminée.}$$

59. Amplificateur de Raman selon la revendication 55, dans lequel, si seulement un échantillon spectral dans ledit signal de sortie WDM est supérieur à une tolérance prédéterminée, ledit contrôleur (4) est configuré pour identifier ceux de ladite pluralité de lasers de pompage (3) qui produisent un profil de gain de Raman présentant une crête de gain la plus proche d'une longueur d'onde d'un échantillon spectral dans ledit signal de sortie WDM qui est supérieure à ladite tolérance prédéterminée.

60. Amplificateur de Raman selon la revendication 59, dans lequel ledit mécanisme d'application de paramètre est configuré pour régler une quantité de lumière de pompage en provenance de la bande optique (1) qui produit le profil de gain de Raman présentant une crête la plus proche de la localisation de l'échantillon qui est supérieure à la tolérance prédéterminée.

61. Amplificateur de Raman selon la revendication 55, dans lequel, si plus d'un échantillon spectral adjacent dudit signal de sortie WDM est supérieur à ladite tolérance prédéterminée, ledit processeur (1203) est adapté pour développer un profil d'amplification cible secondaire.

62. Amplificateur de Raman selon la revendication 61, dans lequel ledit mécanisme d'amplification de paramètre est configuré pour régler la sortie de l'au moins un signal de commande de manière à régler une quantité de lumière de pompage en provenance de la pluralité de lasers de pompage (3) selon une quantité qui correspond au profil d'amplification cible secondaire.

63. Amplificateur de Raman selon la revendication 61, dans lequel ledit processeur (1203) est configuré pour retrouver ledit profil d'amplification cible secondaire à partir de ladite mémoire.

64. Amplificateur de Raman selon la revendication 63, dans lequel ledit processeur (1203) est configuré pour identifier ledit profil d'amplification cible secondaire à partir d'une pluralité de profils de candidat au moyen d'une reconnaissance de motif.

65. Amplificateur de Raman selon la revendication 64, dans lequel ledit processeur (1203) est configuré pour identifier ledit profil d'amplification cible secondaire en calculant un ajustement par les moindres carrés dudit profil d'amplification cible secondaire avec lesdits profils de candidat.

66. Amplificateur de Raman selon la revendication 51, dans lequel ledit processeur (1203) est en outre configuré pour mettre en oeuvre un mécanisme de réglage cible qui est configuré pour régler ladite performance cible lorsque ladite interface reçoit une indication en provenance de l'un desdits dispositifs externes selon laquelle une condition de fonctionnement a changé.

67. Amplificateur de Raman selon la revendication 66, dans lequel ledit mécanisme de réglage cible est configuré pour régler une forme de ladite performance cible.

68. Amplificateur de Raman selon la revendication 67, dans lequel ledit mécanisme de réglage cible est configuré pour identifier au moyen d'une simulation des paramètres de fonctionnement pour les lasers de pompage (3) qui correspondent à une forme de ladite performance cible.

**69.** Amplificateur de Raman selon la revendication 67, dans lequel ledit mécanisme de réglage cible est configuré pour identifier au moyen d'une consultation en table des paramètres de fonctionnement pour les lasers de pompage (3) qui correspondent à une forme de ladite performance cible.

**70.** Amplificateur de Raman selon la revendication 66, dans lequel ledit mécanisme de réglage cible est configuré pour régler une bande passante de ladite bande passante d'amplification.

**71.** Amplificateur de Raman selon la revendication 70, dans lequel ledit mécanisme de réglage cible est configuré pour identifier lesdits paramètres de fonctionnement qui correspondent à ladite bande passante d'amplification au moyen de ladite au moins une procédure prise parmi une simulation et une consultation en table.

**72.** Amplificateur de Raman selon la revendication 70, dans lequel ledit mécanisme de réglage cible est configuré pour permettre l'utilisation en fonctionnement d'un sous-jeu différent de lasers de pompage non opérants au préalable (3) pris parmi ladite pluralité de lasers de pompage (3).

**73.** Amplificateur de Raman selon la revendication 68, dans lequel ledit mécanisme de réglage cible est configuré pour régler ladite performance cible après identification d'une modification au niveau des conditions de fonctionnement, lesdites conditions de fonctionnement étant au moins une interaction de pompage, une perte de fibre et une modification de performance d'amplification à partir d'un amplificateur de Raman en cascade adjacent.

**74.** Procédé pour commander une performance d'amplification d'un amplificateur de Raman (100; 30, 32, 34) qui comporte une pluralité de lasers de pompage (3) incluant une source de lumière qui est configurée pour produire une lumière présentant une longueur d'onde prédéterminée, ladite lumière laser étant configurée pour produire un profil d'amplification dans un milieu de gain de Raman lorsqu'elle est appliquée dessus, ledit profil d'amplification est une première bande d'amplification, le procédé comprenant les étapes:

d'identification de paramètres de fonctionnement pour la pluralité de lasers de pompage (3) qui correspondent à une performance cible pour ledit amplificateur de Raman (100; 30, 32, 34), ladite performance cible étant au moins une performance prise parmi:

une performance d'amplification prédéterminée qui est spécifiée sur une bande passante d'amplification, ladite bande passante d'amplification étant au moins aussi grande qu'une bande passante de signal d'un signal optique WDM qui est amplifié lors de sa propagation au travers d'une fibre optique (2); et
une performance de niveau de signal de sortie qui est spécifiée sur ladite bande passante d'amplification;
formation d'un signal de commande dans un processeur (1203), lequel signal de commande est dérivé à partir desdits paramètres de fonctionnement;
envoi dudit signal de commande sur un mécanisme de réglage de sortie optique (20) qui est couplé à ladite pluralité de lasers de pompage (3); et
réglage d'une quantité de lumière qui est introduite à l'intérieur de ladite fibre optique (2) depuis ladite pluralité de lasers de pompage (3) afin de réaliser une performance réelle se trouvant à l'intérieur d'une tolérance prédéterminée de ladite performance cible, où le procédé comprend les étapes supplémentaires de:

fourniture de plus de deux sources de lumière qui sont configurées pour produire des lumières laser présentant des longueurs d'onde centrales différentes de manière à amplifier un signal optique dans un milieu de gain de Raman moyennant ladite première bande d'amplification; et
modification de façon contrôlable d'un état de fonctionnement d'au moins l'une desdites sources de lumière de manière à réaliser un passage sur une seconde bande d'amplification dans ledit milieu de gain de Raman, une étendue en termes de longueur d'onde de ladite seconde bande d'amplification étant différente de celle pour ladite première bande d'amplification, dans lequel ladite étape de modification de façon contrôlable inclut au moins une action prise parmi:

a) la désactivation d'une source de lumière ou l'activation d'une source de lumière; et
b) l'augmentation ou la diminution d'une puissance de pompage opérant dans un amplificateur de Raman (100; 30, 32, 34).

**75.** Procédé selon la revendication 74, dans lequel ledit mécanisme de réglage de sortie (20) est un circuit de pilotage et ladite étape de réglage inclut le réglage de courants de pilotage qui sont appliqués sur au moins une partie desdits lasers de pompage (3).

**76.** Procédé selon la revendication 74, comprenant en outre une étape de formation d'un signal de sortie WDM échantillonné en provenance de l'amplificateur de Raman (100; 30, 32, 34) et d'application dudit signal de sortie WDM échantillonné sur ledit processeur (1203) de manière à créer une boucle de retour.

**77.** Procédé selon là revendication 75, dans lequel ladite étape d'identification inclut l'exécution d'un sous-programme de simulation pour identifier lesdits paramètres de fonctionnement afin de réaliser une performance réelle qui soit à l'intérieur d'une tolérance prédéterminée de ladite performance cible.

**78.** Procédé selon la revendication 75, dans lequel ladite étape d'identification inclut la recherche à partir d'une mémoire (1204) des paramètres de fonctionnement pour le laser de pompage (3) afin de réaliser une performance réelle qui est à l'intérieur d'une tolérance prédéterminée de ladite performance cible.

**79.** Procédé selon la revendication 75, comprenant en outre une étape de stockage de jeux de conditions de fonctionnement dans une mémoire (1204) en association avec des performances cibles différentes.

**80.** Procédé selon la revendication 76, dans lequel ladite performance cible est la performance d'amplification prédéterminée, et comprenant en outre une étape de calcul de ladite performance d'amplification prédéterminée à partir dudit signal de sortie WDM échantillonné et d'un signal optique WDM échantillonné qui est entré sur l'amplificateur de Raman (100; 30, 32, 34).

**81.** Procédé selon la revendication 80, comprenant en outre une étape de surveillance de performance de sortie dudit amplificateur de Raman (100; 30, 32, 34).

**82.** Procédé selon la revendication 81, comprenant en outre une étape de réglage desdits paramètres de fonctionnement de manière à maintenir ladite performance de sortie à l'intérieur d'une tolérance prédéterminée de ladite performance cible.

**83.** Procédé selon la revendication 82, dans lequel ladite étape de surveillance inclut la réception d'une indication d'un niveau d'un signal WDM d'entrée; et le calcul d'un gain d'amplification en trouvant un rapport dudit signal de sortie WDM échantillonné sur ledit signal WDM d'entrée de manière à déterminer si une valeur d'amplification assurée par ledit amplificateur de Raman (100; 30, 32, 34) est cohérente avec ladite performance cible.

**84.** Procédé selon la revendication 81, comprenant en outre les étapes de réception de données de niveau de signal du signal optique WDM lors de son émission en sortie depuis un amplificateur de Raman en cascade adjacent, ledit amplificateur de Raman en cascade adjacent étant connecté audit amplificateur de Raman (100; 30, 32, 34) au moyen de ladite fibre optique (2); et de détermination d'un niveau de signal dudit signal optique WDM lors de son entrée sur ledit amplificateur de Raman (100; 30, 32, 34) en comparant les données de niveau de signal avec des données de perte de fibre.

**85.** Procédé selon la revendication 81, comprenant en outre la division du signal optique de sortie WDM selon un nombre prédéterminé de signaux séparés dont chacun est centré à une longueur d'onde différente dans la bande passante d'amplification, dans lequel ledit nombre prédéterminé de signaux séparés est au moins aussi grand que le nombre de canaux WDM dans le signal optique WDM.

**86.** Procédé selon la revendication 81, comprenant en outre la division du signal optique de sortie WDM selon un nombre prédéterminé de signaux séparés dont chacun est centré au niveau d'une longueur d'onde différente dans la bande passante d'amplification,
dans lequel ledit nombre prédéterminé de signaux séparés correspond au nombre de lasers de pompage (3).

**87.** Procédé selon la revendication 76, comprenant en outre la comparaison dudit signal de sortie WDM échantillonné avec ladite performance cible et la détermination si une déviation entre est supérieure à une tolérance prédéterminée.

**88.** Procédé selon la revendication 87, comprenant, si la déviation est supérieure à la tolérance prédéterminée, le réglage de façon incrémentielle d'une puissance de sortie d'au moins celui de la pluralité de lasers de pompage (3) présentant un profil de gain qui correspond en termes de longueur d'onde à une plage de longueurs d'onde dans laquelle la déviation s'est produite.

89. Procédé selon la revendication 87, comprenant, si la déviation est supérieure à la tolérance prédéterminée, le réglage d'une puissance de sortie d'un groupe de la pluralité de lasers de pompage (3), ledit groupe contenant des lasers de pompage (3) qui présentent des longueurs d'onde de fonctionnement adjacentes par rapport au jeu de longueurs d'onde de fonctionnement de la totalité de la pluralité de lasers de pompage (3).

90. Procédé selon la revendication 87, dans lequel ladite étape de comparaison inclut la détermination si des échantillons respectifs dudit signal de sortie WDM échantillonné ne sont pas à l'intérieur de ladite tolérance prédéterminée conformément à une équation:

$$\text{ABS [cible - surveillé]} \leq \text{tolérance prédéterminée.}$$

91. Procédé selon la revendication 90, comprenant, si seulement un échantillon dans ledit signal de sortie WDM échantillonné est supérieur à une tolérance prédéterminée, l'identification de celui de ladite pluralité de lasers de pompage (3) qui produit un profil de gain de Raman qui présente une crête de gain la plus proche d'une longueur d'onde d'un échantillon dans ledit signal de sortie WDM échantillonné qui est supérieure à ladite tolérance prédéterminée.

92. Procédé selon la revendication 91, dans lequel ladite étape de réglage règle une quantité de lumière de pompage en provenance de la pompe optique (1) qui produit un profil de gain de Raman qui présente une crête qui est la plus proche de la longueur d'onde de l'échantillon qui est supérieure à la tolérance prédéterminée.

93. Procédé selon la revendication 90, comprenant, si plus d'un échantillon adjacent dudit signal échantillon est supérieur à ladite tolérance prédéterminée, le développement d'un profil d'amplification cible secondaire.

94. Procédé selon la revendication 93, dans lequel ladite étape de réglage inclut le réglage de la sortie de l'au moins un signal de commande de manière à régler une quantité de lumière de pompage en provenance de la pluralité de lasers de pompage (3) selon une quantité qui correspond au profil d'amplification cible secondaire.

95. Procédé selon la revendication 93, dans lequel ledit développement d'une étape de profil d'amplification cible secondaire inclut la recherche dudit profil d'amplification cible secondaire à partir d'une mémoire (1204).

96. Procédé selon la revendication 95, dans lequel ladite recherche dudit profil d'amplification cible secondaire à partir d'une étape de mémoire inclut l'utilisation d'une reconnaissance de motif afin d'identifier un profil d'amplification cible secondaire approprié à partir d'une pluralité de profils de candidat.

97. Procédé selon la revendication 96, dans lequel, ladite étape d'utilisation d'une reconnaissance de motif inclut le calcul d'un ajustement par les moindres carrés dudit profil d'amplification cible secondaire en relation avec ladite pluralité de profils de candidat.

98. Procédé selon la revendication 74, comprenant en outre les étapes de réception d'une indication selon laquelle une condition de fonctionnement pour ledit amplificateur de Raman (100; 30, 32, 34) a changé eu égard à un établissement initial de paramètres de fonctionnement; et d'altération de ladite performance cible pour prendre en compte la modification de la condition de fonctionnement.

99. Procédé selon la revendication 98, dans lequel ladite étape d'altération inclut le réglage d'une forme de ladite performance cible.

100. Procédé selon la revendication 98, dans lequel ladite étape d'altération inclut le réglage d'une bande passante de ladite bande passante d'amplification.

101. Procédé selon la revendication 100, dans lequel ladite étape d'altération inclut la validation d'un sous-jeu inactif au préalable de lasers de pompage (3) pris parmi ladite pluralité de lasers de pompage (3).

102. Procédé selon la revendication 98, dans lequel ladite condition de fonctionnement est au moins une condition prise parmi une interaction de pompage, une perte de fibre et une modification de performance d'amplification dans un amplificateur de Raman en cascade adjacent (100; 30, 32, 34).

103. Procédé selon la revendication 74, dans lequel ladite étape d'identification inclut l'identification d'un jeu commun de paramètres de fonctionnement pour un premier groupe de lasers de pompage (3) et la modification de façon uniforme des paramètres de fonctionnement pour le premier groupe de lasers de pompage (3) lorsque la performance réelle dudit amplificateur de Raman (100; 30, 32, 34) n'est pas à l'intérieur de la tolérance prédéterminée de ladite performance cible, des lasers de pompage (3) dans ledit premier groupe présentant des longueurs d'onde de fonctionnement qui sont soit toutes plus longues en termes de longueur d'onde, soit toutes plus courtes en termes de longueur d'onde que celles d'un second groupe de la pluralité de lasers de pompage (3).

104. Procédé selon la revendication 103, dans lequel ladite étape d'identification d'un jeu commun de paramètres de fonctionnement inclut l'utilisation d'un sous-programme de simulation qui est configuré pour calculer des puissances de sortie afin de produire la performance cible, d'une table de consultation qui inclut les puissances de sortie afin de produire la performance cible et d'un processus de superposition.

105. Procédé selon la revendication 103, dans lequel un nombre total de lasers de pompage (3) dans le premier groupe est supérieur à un nombre total de lasers de pompage (3) dans le second groupe.

106. Procédé selon la revendication 103, dans lequel les longueurs d'onde de fonctionnement des lasers de pompage (3) dans le premier groupe sont plus courtes que les longueurs d'onde de fonctionnement pour les lasers de pompage (3) dans le second groupe.

107. Procédé selon la revendication 106, dans lequel ladite étape de réglage a pour effet que davantage de puissance de pompage optique en provenance des lasers de pompage (3) dans le premier groupe est lancée à l'intérieur de la fibre optique qu'une puissance de pompage optique en provenance du second groupe.

108. Procédé selon la revendication 106, dans lequel ladite étape de réglage inclut la diminution de la sortie du premier groupe de lasers de pompage (3) par rapport au second groupe de manière à imprimer une inclinaison en pente positive à un profil de gain composite dudit amplificateur de Raman (100; 30, 32, 34).

109. Procédé selon la revendication 106, dans lequel ladite étape de réglage inclut l'augmentation de la sortie du premier groupe de lasers de pompage (3) par rapport au second groupe de manière à imprimer une inclinaison en pente négative à un profil de gain composite dudit amplificateur de Raman (100; 30, 32, 34).

110. Procédé selon la revendication 98, dans lequel ladite étape de réception inclut la réception de ladite condition de fonctionnement en provenance d'un ordinateur à distance.

111. Procédé selon la revendication 110, dans lequel ledit ordinateur à distance est un processeur dans un amplificateur de Raman en cascade adjacent qui est connecté audit amplificateur de Raman (100; 30, 32, 34) au moyen de la fibre optique (2).

112. Procédé selon la revendication 110, dans lequel ledit ordinateur à distance est un ordinateur qui interconnecte une pluralité d'amplificateurs de Raman en cascade au moyen d'une liaison de communication.

113. Procédé selon la revendication 112, dans lequel au moins une partie de ladite liaison de communication est un Internet.

114. Procédé selon la revendication 110, dans lequel ladite étape de réception inclut la réception de ladite condition de fonctionnement via une page de la toile mondiale qui est hébergée sur ledit ordinateur à distance.

115. Procédé selon la revendication 114, dans lequel ladite étape de réception inclut la réception d'au moins soit des instructions Java, soit des instructions ActiveX en provenance dudit ordinateur à distance et leur déroulement sur un processeur (1203) dans ledit amplificateur de Raman (100; 30, 32, 34).

116. Procédé selon la revendication 110, dans lequel lesdites conditions de fonctionnement concernent une modification d'un état de fonctionnement d'un amplificateur de Raman adjacent; et ladite étape d'altération inclut l'altération d'une forme de la performance cible pour compenser la modification de l'état de fonctionnement de l'amplificateur de Raman adjacent.

117. Système de communication optique comprenant:

un contrôleur (4) selon l'une quelconque des revendications 1 à 50 et incluant une interface (1213) sur un réseau de communication de données;
un premier amplificateur de Raman (100; 30, 32, 34) qui est configuré pour amplifier optiquement un signal optique WDM pendant sa propagation au travers d'une fibre optique (2);
la fibre optique (2); et
un second amplificateur de Raman qui est configuré pour recevoir et amplifier Raman ledit signal optique WDM qui est appliqué depuis ledit premier amplificateur de Raman, ledit second amplificateur de Raman comportant une interface de communication qui est connectée sur ledit réseau de communication de données, dans lequel:

ledit contrôleur (4) est configuré pour envoyer un message de commande sur ledit second amplificateur de Raman, lequel message de commande demande en instruction audit second amplificateur de Raman de régler sa performance cible; et
ledit second amplificateur de Raman est configuré pour régler la performance cible et sa performance réelle en réglant une sortie optique d'au moins un sous-jeu d'une pluralité de lasers de pompage (3) dedans, dans lequel:

le second amplificateur de Raman inclut une source de lumière qui est configurée pour produire une lumière laser qui présente une longueur d'onde centrale prédéterminée, ladite lumière laser étant configurée pour produire un profil d'amplification dans un milieu de gain de Raman lors de son application dessus, ledit profil d'amplification étant une première bande d'amplification; et
le contrôleur (4) est configuré pour modifier un état de fonctionnement de la source de lumière lorsque ledit contrôleur (4) génère un passage depuis ladite première bande d'amplification sur une seconde bande d'amplification, dans lequel ledit état de fonctionnement est un état pris parmi:

a) un état d'activation ou un état de désactivation;
b) une augmentation ou une diminution de la puissance de pompage opérant dans un amplificateur de Raman (100; 30, 32, 34).

118. Système selon la revendication 117, dans lequel au moins une partie dudit réseau de communication de données est un Internet.

119. Système selon la revendication 117, dans lequel le premier amplificateur de Raman (100; 30, 32, 34) inclut une interface (1213) qui est configurée pour rapporter audit contrôleur (4) son état de fonctionnement, ledit état de fonctionnement incluant si oui ou non une capacité optique d'un laser de pompage (3) contenu dedans est au-dessous d'un niveau prédéterminé.

120. Système selon la revendication 119, dans lequel, en réponse à la réception dudit message de commande, ledit second amplificateur de Raman est configuré pour altérer sa performance d'amplification de manière à contrer le fait que la capacité de sortie optique du laser de pompage du premier amplificateur de Raman est au-dessous d'un niveau prédéterminé.

121. Programme d'ordinateur pour commander une performance d'amplification d'un amplificateur de Raman (100; 30, 32, 34) qui inclut une pluralité de lasers de pompage (3) incluant une source de lumière qui est configurée pour produire une lumière qui présente une longueur d'onde prédéterminée, ladite lumière laser étant configurée pour produire un profil d'amplification dans un milieu de gain de Raman lorsqu'elle est appliquée dessus, ledit profil d'amplification est une première bande d'amplification, le programme, lorsqu'il est exécuté sur un ordinateur, a pour effet que l'ordinateur réalise les étapes:

d'identification de paramètres de fonctionnement pour la pluralité de lasers de pompage (3) qui correspondent à une performance cible pour ledit amplificateur de Raman, ladite performance cible étant au moins une performance prise parmi:

une performance d'amplification prédéterminée qui est spécifiée sur une bande passante d'amplification, ladite bande passante d'amplification étant au moins aussi grande qu'une bande passante de signal d'un signal optique WDM qui doit être amplifié Raman lors de sa propagation au travers d'une fibre optique; et
une performance de niveau de signal de sortie qui est spécifiée sur ladite bande passante d'amplification;
un mécanisme de formation de signal de commande qui dérive un signal de commande à partir desdits paramètres de fonctionnement; et

un moyen pour envoyer ledit signal de commande sur ladite pluralité de lasers de pompage (3) pour régler une quantité de lumière qui est introduite dans ladite fibre optique depuis ladite pluralité de lasers de pompage (3) afin de réaliser une performance réelle qui est à l'intérieur d'une tolérance prédéterminée de ladite performance cible,

et comprenant en outre:

la fourniture de plus de deux sources de lumière qui sont configurées pour produire des lumières laser présentant des longueurs d'onde centrales différentes de manière à amplifier un signal optique dans un milieu de gain de Raman moyennant ladite première bande d'amplification; et

la modification de façon contrôlable d'un état de fonctionnement d'au moins l'une desdites sources de lumière de manière à réaliser un passage sur une seconde bande d'amplification dans ledit milieu de gain de Raman, une étendue en termes de longueur d'onde de ladite seconde bande d'amplification étant différente de celle pour une première bande d'amplification, dans lequel ladite étape de modification de façon contrôlable inclut au moins une action prise parmi:

a) la désactivation d'une source de lumière ou l'activation d'une source de lumière; et

b) l'augmentation ou la diminution d'une puissance de pompage qui opère dans un amplificateur de Raman (100; 30, 32, 34).

**122.** Produit de programme d'ordinateur selon la revendication 121, comprenant en outre un moyen pour surveiller une performance de sortie dudit amplificateur de Raman.

**123.** Produit de programme d'ordinateur selon la revendication 122, comprenant en outre un moyen pour maintenir ladite performance de sortie à l'intérieur d'une tolérance prédéterminée de ladite performance cible.

**124.** Produit de programme d'ordinateur selon la revendication 122, comprenant en outre un moyen pour comparer la performance de sortie avec ladite performance cible et pour déterminer si une déviation entre est supérieure à une tolérance prédéterminée.

**125.** Produit de programme d'ordinateur selon la revendication 124, comprenant en outre un moyen pour régler une quantité de lumière de pompage en provenance de lasers de pompage individuels (3) ou de groupes de lasers de pompage (3) en fonction de l'éventualité où la déviation est essentiellement attribuable à un laser de pompage ou à un groupe de lasers de pompage (3).

**126.** Produit de programme d'ordinateur selon la revendication 124, comprenant en outre un moyen pour développer un profil d'amplification cible secondaire lorsqu'une bande spectrale de ladite déviation est essentiellement attribuable à plus d'un laser de pompage.

**127.** Produit de programme d'ordinateur selon la revendication 121, comprenant en outre un moyen pour recevoir une indication du fait qu'une condition de fonctionnement pour ledit amplificateur de Raman (100; 30, 32, 34) a changé eu égard à un établissement initial de paramètres de fonctionnement; et un moyen pour altérer ladite performance cible pour prendre en compte la modification de condition de fonctionnement.

**128.** Produit de programme d'ordinateur selon la revendication 127, dans lequel ledit moyen d'altération inclut un moyen pour régler une forme de ladite performance cible.

**129.** Produit de programme d'ordinateur selon la revendication 127, dans lequel ledit moyen d'altération inclut un moyen pour régler une bande passante de ladite performance cible et une bande passante d'amplification dudit amplificateur de Raman (100; 30, 32, 34).

**130.** Produit de programme d'ordinateur selon la revendication 127, dans lequel ledit moyen d'altération inclut un moyen pour régler des sorties optiques de groupes de lasers de pompage (3) pris parmi ladite pluralité de lasers de pompage (3).

**131.** Produit de programme d'ordinateur selon la revendication 130, dans lequel ledit moyen d'altération inclut un moyen pour régler une sortie optique d'un premier groupe de lasers de pompage (3) de plus que pour un second groupe de lasers de pompage (3) de manière à imprimer une inclinaison à un profil de gain composite dudit amplificateur de Raman.

**132.** Produit de programme d'ordinateur selon la revendication 127, comprenant en outre un moyen pour recevoir une condition de fonctionnement en provenance d'un ordinateur à distance et pour utiliser ladite condition de fonctionnement dans ledit moyen pour identifier une performance cible qui correspond à ladite condition de fonctionnement.

**133.** Produit de programme d'ordinateur selon la revendication 132, dans lequel ladite condition de fonctionnement concerne une modification d'un état de fonctionnement d'un amplificateur de Raman adjacent et ledit moyen de réglage inclut un moyen pour régler une forme de la performance cible afin de compenser la modification de l'état de fonctionnement de l'amplificateur de Raman adjacent.

FIG. 1

FIG. 2

EP 1 229 616 B1

FIG. 3

EP 1 229 616 B1

FIG. 4

EP 1 229 616 B1

FIG. 5

FIG. 6

AMP SIDE

OUTPUT SIDE

14

2000

Controller

18

15

19

20

31₁   31₂   31₃   31₄   31₅

FIG. 7

AMP SIDE                                                    OUTPUT SIDE

FIG. 8

FIG. 9

FIG. 10

EP 1 229 616 B1

```
        ( Start )
            |
            v
    +----------------+
    | identify target |
    |     output      |        ~ S2
    | amplification   |
    | performance (e.g.,|
    |    profile)     |
    +----------------+
            |
            v
    +----------------+
    | calculate/simulate |
    |    amplifier    |
    | parameters (e.g.,|      ~ S4
    |  pump driving   |
    | currents) to obtain |
    | target performance |
    +----------------+
            |
            v
    +----------------+
    | apply parameters |       ~ S6
    |    to pumps     |
    +----------------+
            |
            v
    +----------------+
    | monitor actual  |
    |     output      |        ~ S8
    | amplification   |
    |  performance    |
    +----------------+
            |
            v           S10
          /   \
         / | target - \   Yes
        < monitored |  >------>
         \   ≤ δ    /
          \   /
            | NO
            v
    +----------------+
    | identify pump(s) |       ~ S12
    | primarily affecting |
    |  the difference |
    +----------------+
            |
            v
    +----------------+
    | change driving  |
    | currents of at least |
    | a subset of pumps |     ~ S14
    |  determined to  |
    | primarily affect the |
    |   difference    |
    +----------------+
```

FIG. 11

FIG. 12

| Wavelengths (nm) | | | | | | |
|------|------|------|------|------|------|------|
| 1100 | 1200 | 1300 | 1400 | 1500 | 1600 | 1700 |
| 560 | 250 | 120 | 560 | 100 | 90 | 560 |

Driving Currents (mA)

FIG. 13

# Superposition Principle

predicted amplification profile

| | |
|---|---|
| C – | Total |
| a – | 1424.2nm |
| b – | 1451.8nm |

Wavelength & Level adjusting

Single pump

Raman gain [dB]

Wavelength [nm]

FIG. 14

# Design of pumping wavelength based on superposition principle

Design parameters:
- wavelength allocation
- effective gain allocation

Specifications:
- fiber type, gain and flatness bandwidth, number of LDs

Effective gain of each pump (dB)

Pump wavelength (nm)

FIG. 15A

Raman gain [dB]

Wavelength (nm)

FIG. 15B

# Accounting for pump-to-pump Raman interactions

FIG. 16

71

90

54

WDM OF MACH-ZEHNDER

COMBINED WAVE FORM →

1427.5

1435

1442.5

1450

1457.5

1465

1472.5

1480

81 82 83 84 85 86 87 88

NON-USED PORTs

FIG. 17

WDM SIGNAL

OPTICAL FIBER

WDM SIGNAL

13

99

WAVELENGTH DIVISION MULTIPLEXING PUMPING LIGHT

6ch: <205 THz — 96

5ch: 207 THz — 95

4ch: 208 THz — 94

3ch: 209 THz — 93

2ch: 210 THz — 92

1ch: 211 THz — 91

82

FIG. 18

FIG. 19

FIG. 20

EP 1 229 616 B1

FIG. 21

EP 1 229 616 B1

FIG. 22

EP 1 229 616 B1

OPTICAL FIBER

WDM SIGNAL

WDM SIGNAL

WAVELENGTH
DIVISION
MULTIPLEXING
PUMPING LIGHT

82

1ch:211 THz.
2ch:210 THz.
3ch:209 THz.
4ch:208 THz.
5ch:207 THz.
6ch:206 THz ——
7ch:205 THz ——
8ch:204 THz ——

NON-USED

101  102  103  104  105  106  107  108

FIG. 23

EP 1 229 616 B1

FIG. 24

FIG. 25

FIG. 26

FIG. 27

FIG. 28

EP 1 229 616 B1

OPTICAL FIBER

WDM SIGNAL

WDM SIGNAL

WAVELENGTH
DIVISION
MULTIPLEXING
PUMPING LIGHT

82

1ch:211 THz
2ch:210 THz
3ch:209 THz
4ch:208 THz
5ch:207 THz
6ch:206 THz
7ch:205 THz
8ch:204 THz
9ch: 203 THz
10ch:202 THz
11ch: 201 THz
12ch:200 THz
13ch:199 THz

NON-USED

121  122  123  124 125  126  127  128  129  130  131  132  133

FIG. 29

EP 1 229 616 B1

FIG. 30

EP 1 229 616 B1

FIG. 31

FIG. 32

EP 1 229 616 B1

FIG. 33

Start

No     change current    S30
       profile?

       Yes

calculate/simulate
parameters
needed for new      S32
target profile

apply necessary     S6
driving currents

·monitor actual
output
amplification       S8
profile

target=    S10
monitored?

determine pump(s)
affecting the       S12
difference

change driving
currents            S14
accordingly

FIG. 34

FIG. 35